Europäisches Patentamt

European Patent Office

Office européen des brevets

(11) Publication number: **0 274 281 B1**

## EUROPEAN PATENT SPECIFICATION

(45) Date of publication of patent specification: **10.06.92**  (51) Int. Cl.⁵: **G06F 15/38**

(21) Application number: **87400004.5**

(22) Date of filing: **05.01.87**

(54) **Method using a programmed digital computer system for translation between natural languages.**

(43) Date of publication of application:
**13.07.88 Bulletin 88/28**

(45) Publication of the grant of the patent:
**10.06.92 Bulletin 92/24**

(84) Designated Contracting States:
**AT BE CH DE ES FR GB GR IT LI LU NL SE**

(56) References cited:
**EP-A- 0 012 777**

(73) Proprietor: **GACHOT S.A.**
**26 bis, Avenue de Paris**
**F-95230 Soisy-sous-Montmorency(FR)**

(72) Inventor: **Toma, Peter Aorangi International**
**University**
**80 Filleul Street P.O. Box 917 Chief Post**
**Office**
**Dunnedin 9031(NZ)**

(74) Representative: **Bouju, André**
**Cabinet Bouju Derambure (Bugnion) S.A.**
**B.P. 6250**
**F-75818 Paris Cédex 17(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

Background of the Invention

This invention relates to a method utilizing a digital computer for translating between natural languages.

Attempts have been made to utilize digital computers for translating from one language to another, i.e., from a source language to a target language. The translation systems involve a programmable digital computer system along with a program for effecting the translation. The approaches used were theoretical. The theoretical language approach for syntactical analysis has not been acceptable because it starts out from linguistic assumptions instead of considering the capabilities of the program digital computer and approaching the translation from the computer's point of view.

One reason for the failures in the past was that linguistics and computer programmers worked in separate groups. The information exchanges between these groups was negligible. Either linguistic approaches were forced into the computer, in which case the computer was not used correctly, or they were modified to such an extent that they could not carry out the tasks.

The idea of machine translation was conceived in 1946 by Warren Weaver and A. D. Booth. Many attempts to achieve a machine translation system and put it into operation have been made inside and outside the United States since that time. Due in part to inadequacy of hardware, the projects outside of the United States did not make significant progress. The projects in the United States were directed toward developing linguistic theories encompassing the whole natural language and then going to the computer. This approach inevitably failed because the human mind cannot encompass the totality of the language. The approaches were also unsuccessful because the work was restricted to experimental work on certain aspects of the problem.

The following is a brief resume in the approaches and the theory behind them:

The General Analysis Technique (GAT) developed at Georgetown University from 1958 to 1963 used a linguistics oriented computer coding scheme. Ad hoc solutions were introduced and the whole system was confined within a hollow restricted so-called Simulated Linguistic Computer (SLC) system written in octal language and not open for any further improvements.

The Fulcrum theory approach developed from 1959 to 1967 by the Bunker-Ramo Corporation, was directed toward solving, with a relatively small dictionary, the problems occurring in a limited Russian text. No attempt was made to introduce resolution of multiple meanings; instead, several meanings were printed in the output, separated by slashes.

An approach taken by International Business Machines in 1957 to 1968, initiated by International Telemeter Corporation, was hardware oriented. An attempt was made to insert all the words, and every compound in declinable form, in a photo disk for a large scale dictionary lookup. Syntactic considerations were very limited. Both the approach and hardware failed because compounds cannot be just translated as they occur, but have to undergo a syntactic analysis. In addition, tiny unavoidable accumulations of dirt or dust on the disk caused serious problems resulting in unusable translations.

A predictive syntax system was developed by the National Bureau of Standards and Massachusetts Institute of Technology in 1960 to 1964. This approach failed because it considered only one limited path to the sentence. This system was never implemented on a larger scale, but was used just within a limited experimental environment.

Transformational grammar was another approach. However, this approach turned out to be absolutely incompatible with computer translation requirements. Only small experimental systems have been developed on the basis of this theory, and they had to be discontinued before any significant translation was produced.

The invention described here proceeded from its very inception toward the goal of setting up a "universal" translation system, defined as one in which most of the programs could be universally applied to different source or target languages. SYSTRAN realizes this goal -- the only changes for different languages are those necessitated by the inherent structures of the languages. Dictionary arrangement, the lookup concept, the utilization of memory switches during syntactic analysis and the resolution of multiple meaning problems use the same basic approaches regardless of source or target languages.

The European Patent Application EP-A-0 012 777 discloses a method for translation between source and target natural languages using a programmable digital computer system. This method comprises :

(a) storing in a main memory of the computer system a source text to be translated ; (b) scanning and comparing such stored source words with dictionaries of source language words stored in a memory and for each source text word for which a match is found, storing in a file in main memory each word, and in association with each such word, coded information derived from such dictionary for use in translation of

2

such word, the coded information including memory offset address linkages to a memory in the computer system where grammar and target language translations for the word are stored ; (c) analyzing the source text words in its file of words, a complete sentence at a time, and converting the same into a sentence in the target language utilizing the coded information and including the steps of (1) utilizing the memory offset address linkages for obtaining the target language translations of words from a memory ; and (2) reordering the target language translation into the proper target language sequence. The step of analyzing additionally comprises the steps of analyzing each source word in multiple passes through each sentence of the source text, assigning codes thereto, considering all the codes which previous passes have attached to a word and assigning target language synthesis codes attached to the meaning with which the code functions in the sentence, placing the word into a form corresponding to the target language dependent upon the analysis and consideration of all relevant codes assigned to the words.

## SUMMARY OF THE INVENTION

The object of the present invention is to improve the method mentioned in the above paragraph so that it may be implemented more efficiently, particularly for translations between natural languages having a great variety of declensional and conjugational modes.

According to the invention, the method is characterized in that said dictionaries of source language words comprise entries containing a source language stem, the coded information associated to such entry comprising an adress linkage (PST) relating to the set of valid endings permitted for said source language stem, and in that, for each source text word, the step of comparing such word with dictionaries of source language words comprises the steps of :
- inspecting said dictionaries to determine whether a particular entry thereof matches said source text word,
- if no match is found, dropping the last letter of said source text word ; and
- repeating the sequence of said steps of inspecting and dropping the last letter until a match is found with a source language stem entry of said dictionaries, the number of letters dropped being less than a predetermined number representing the maximum ending length for said source text word.

The appearance of fourth generation computers made it possible to introduce approaches which would be capable of producing acceptable machine translations. The best utilization of the logical structures of these computers, and maximal coordination of rapid transfer of data between auxiliary and high speed storages, plus the development of a complete system, made it possible to realize the goal of an automatic means to overcome the communication problem between natural languages.

The present invention hereafter called SYSTRAN was possible because of the combination of experiences as systems analyst, linguist and computer programmer. The experience in the three areas enabled the inventor to develop the approaches which resulted in the invention. The unique solution which is elaborated upon herein can be summarized as follows : computerized syntax, a dictionary lookup which is based on the most efficient exploitation of main and auxiliary storages and which uses four different types of dictionaries, the combination of fixed and variable length areas for full utilization of the computer, the introduction of remembering switches, new ways of handling multiple meaning problems, and system translation (SYSTRAN), universality which makes it possible to change only tables in most instances when source and/or target languages are changed.

SYSTRAN takes full advantage of coordinated usage of the various auxiliary devices, which allows easy access to the various dictionaries.

The computer is still handicapped in comparison to the human mind, due first of all to the size of the computer's limited high speed, rapid access, core memory. The SYSTRAN system overcomes such a handicap to a considerable degree by setting up a coordinated system of dictionaries. The dictionaries are updated on magnetic tapes, for actual usage they are available on rapid access discs and in the high speed core memory.

In addition, with SYSTRAN an entirely new approach to syntactic analysis has been introduced. This approach involves automatic parsing. None of the machine translation systems developed prior to SYSTRAN achieved the effectiveness of this automatic syntactic analysis technique. The computer is instructed in every instance what to remember, either by codes attached to the words from the source sentence, or by a temporary plug-in of a sequence of these memory switches during particular passes. During this analysis, the computer simulates the human translation process in that it sets "remembering" switches as it passes through the sentence. On the basis of which switches are set, the decision to start a new routine is made when a new part of speech is encountered.

Program sections, called routines, can call upon individual subroutines to carry out those tasks which must be carried out repeatedly. A subroutine may use nested subroutines to check for certain parameters before making a decision.

The System uses many unique approaches and methods at every level in carrying out translation automatically from a source language into a target language.

A program for translating between source and target natural languages in accordance with the present invention involves a system wherein all the logical capabilities of the digital computer are first considered and a programming system is organized in a form which can be processed by the computer. To this end, new features were introduced in the language theory. A new part of speech concept breaks with the traditional parts of speech and organizes the functional classes in the language according to their most suitable form for processing by the computer. Codes are assigned to language units, to words, to expressions, and even to complete phrases in order to enable a program to correctly recognize the function of the words within the sentence. This is in sharp contrast to previous systems where codes were only assigned to individual words. The method involves a complete system which starts with the reading in of source language text, breaks the text down into individual words and looks up these words in various dictionaries. Codes are attached to the words which are indispensable for further processing and computer understanding of the source text. With the help of codes attached to individual words or expressions, the computer carries out a hierarchial analysis during which more and more codes are attached to each word. These codes express for the computer the syntax of the individual sentences and enable subsequent programs to find the meaning in the sentence as well as all those factors which influence the meaning within or without the particular sentence under analysis. On the basis of this procedure, an unambiguous translation is carried out.

The program in accordance with the present invention is capable of utilizing an unlimited number of routines attached to each source word. The routines are attached irrelevant of the source and target languages under consideration. These routines take into consideration the computer established syntactic interconnections of the words, phrases, etc. and using semantic categories, find the meaning influencing words for every individual word with multiple meaning in the sentence. Unique to an embodiment of the present invention, a program is capable of attaching to the individual source language entries a virtually unlimited number of target language meanings and of organizing them according to subject fields. During the translation, the first selected meaning reflects the subject field in which the translation takes place cutting down considerable on the multiple meaning problems. To the general types of words which occur in every subject field, routines are attached to solve their meaning within every possible environment. Word groups are translated as a unit, either as idiom or so-called limited semantic compound expressions (L.S. expression). The advantage of the L.S. compound is that whenever the source language is inflected, one such entry can translate correctly the compound irrespective of which case or conjunctional form it occurred in the text.

Another feature of the embodiment of the present invention is its open-endedness. In other words, the system is quite modular and this is felt to be a primary feature of an embodiment of the present invention. One feature of the modularity is that there is no limit in adding compounds to the system. The number of idiomatic expressions is limited only by the high speed core memory used.

Also unique to one embodiment of the present invention, is that although an idiom is translated as a unit, the participating words may be undergoing a complete syntactic analysis. As a result, the automatic translation does not suffer by the fact that an idiom has been translated.

Another feature of an embodiment of the present invention is that limited semantic compounds are stored on disks and are rapidly accessed in a way that the most frequent ones are available during the dictionary lookup procedure, and less frequent ones are made available during the actual translation process.

According to a preferred embodiment of the invention a special up-date system is provided with independent routines that carry out changes within the various dictionaries, including the general dictionaries, high frequency dictionaries, idiom dictionaries and limited semantics (L.S.) compound dictionaries. The update system has built in features for automatic controls so that possible errors due to erroneous coding are automatically eliminated. Whenever an entry is rejected as unacceptable, a message indicates the type of error committed so that the dictionary coder can easily find the problem. The computer is used to full advantage by the use of a higher language which is adapted to the special requirements of machine translation. Each instruction of the higher language stands for a large number of machine languages statements and facilitates the programming without undue core storage requirements. This computer language is known as a macro language for language translation and itself is felt to be a unique feature of one embodiment of the present invention.

According to a preferred embodiment of the invention, repeated scans are carried out through the

4

sentence for certain grammar codes which help the computer first to eliminate basic ambiguities and establish through codes attached to the words, basic interconnections between the words. More detailed semantic tests are made in subsequent passes and phrases and clauses are gradually delimited and higher sentence markers such as subjects and/or predicates in the target language are established.

The last of the scans determines the function of every word and resolves indeterminate or ambiguous syntactic relationships between words in a sentence. These passes set up a syntactical profile of the sentence expressed by coded information in a way which a computer can utilize. Resultant source sentences with the generated codes are inserted into a predetermined cleaned up location in the memory reserved for this purpose and codes are generated after each word. Codes reflect all of the existing interconnections between the words of the source sentence. Although only one sentence is generally analyzed at a time, the system has provisions to store information in order to remember from previous sentences information which should be taken into consideration in resolving certain ambiguities in following sentences. This is completely unique to the preferred embodiment of the present invention. The connections between words are expressed in codes which uniquely define the syntactic and semantic connections in each sentence and between sentences.

According to a preferred embodiment of the present invention, the program has the ability to resolve multiple meanings. In order to accomplish such resolution, there is provided a subject field glossary or topical glossary. For the first time in machine translation, the ability is provided to attach to source language entries in the dictionary target meanings which meanings are located in the topical glossaries. Each time a text is translated an indication can be given to the computer which of the topical glossaries should be consulted. If no indication is available during translation as to which topical glossary or topical glossary sequences are to be used, a general meaning is selected from the main dictionary for every word to be translated.

According to a preferred embodiment of the present invention, idiomatic expressions or idioms contain two or more words in the source language which in a definite sequence represent a unique meaning unit and should be translated as such. An algorithm determines during the translation phase the function of the idiom and accordingly selects the correct idiom meaning, from among a number of possible meanings. The meanings are in the target language. The idiom meaning or meanings are attached to the first source text word of an idiom. The rest of the words in the idiom, i.e. the second and subsequent words, receive a tag which marks them as being translated.

All of the words in an idiomatic expression also undergo a dictionary lookup procedure whereby they receive grammar and meaning codes from the main dictionary and are subjected to the syntactical analysis discussed hereinabove. Thus, the idiom words may become one or more syntactic units independent of the fact that they together form an idiomatic semantic unit.

According to a preferred embodiment of the invention, limited semantic compounds are used for resolving multiple meanings and eliminating semantic problems. According to this procedure, thousands of words with which a particular word may be combined to form a limited semantic compound are stored in the storage facilities of the computer and are selected for further use in accordance with the particular results of the syntactic analysis. The programming system has a unique capability to incorporate such limited semantic compounds according to the various subject fields and during translation, if a compound expression has more than one meaning, it retrieves only that meaning which corresponds to the subject field under translation. The compounds carry syntactic and semantic codes which are used during the determination of their function and their correct translation. Limited semantic expressions usually contain a principal word which can undergo declension or conjugation. Codes for such declension or conjugation in the target language are attached to the compound in question. The principal words in essence, which determines the meaning of a particular compound,carries, in a highly condensed form, information concerning the possible other words with which the word may form a unique compound expression. The information is coded as a sequence of numbers. This procedure for generating the L.S. compound numbers assigns to every word in the source language dictionary a unique L.S. number. Not only are individually all the L.S. numbers of the participating word attached to the principal word by there is also an indication of which position in each compound the principal word occupies in relation to its participating words, i.e. is the principal word the first word, the second word, the third word, etc. in a compound. An L.S. dictionary is provided and whenever a principal word is encountered during dictionary lookup, 300 bytes (2400 bits) of information of participating word numbers are attached immediately to the principal word. If the L.S. information (in the form of a sequence of numbers) for one principal word exceeds 2400 bits, the information is not attached during dictionary lookup to the word, but is left in the particular storage area from where it is retrieved during translation procedure. The storage area is on a disk. There is virtually no limit in the number of compounds which can be attached to a principal word. Presently the longest information attached in sequences of numbers to principal words exceeds 14000 bytes (14000 x 8 bits).

Also in accordance with the preferred embodiment of the present invention, the following step in the solution of the multiple meaning problem are the lexical subroutines. The names of the subroutines are arranged in a binary table and whenever a word occurs which carries a bit indicating that the lexical routine should be called, the particular routine is identified and a binary search is carried out in the list to call in the particular routine. The frequently used routines are kept in the high speed core memory whereas others are available for easy access on auxiliary storage devices such as disks. These routines can be called in a parallel operation to the translation process preventing waste of time. Although the routines are prepared primarily to handle multiple meanings, i.e. semantic problems, several of them resolve syntactic ambiguities. Whenever a lexical routine determines the correct meaning, it attaches the meaning to a word with proper synthesis codes. During translation, this newly attached meaning is considered. Due to the new meaning, some of the words in the sentence lose their previous meanings. As the words are translated, they are marked with a tag as having been translated.

According to a further preferred embodiment of the invention, a subsequent step in the translation process involves resolution of the generalized multiple meaning problem. According to the unique concepts of a preferred embodiment of the invention, a generalized approach has been implemented to solve the multiple meaning ambiguites. The words in the source language receive semantic categorization codes. Each word may belong to a series of semantic categories. These categories are arranged in groups and attached in condensed bit format to the words in the dictionary. Each bit represents a category. If a particular bit is on, the word belongs to such a category. If the bit is not on, the category is not applicable to the particular word.

Rules are expressed in decimal numbers which tell the program which routine must be called in order to resolve the ambiguity of a particular word, and the rulles are considered in sequence. Routines are carried out in exactly the same sequence as the rules. The number of the rule indicates for the routine the type of syntactic connection within which search should be carried out for the availability of semantic categories i.e., words which have certain semantic category codes. Each time when within a defined syntactic relationship a word with a certain semantic category bit is encountered, a meaning will be selected which is indicated by the respective meaning number in the rule. The rule may specify that in order to select a particular meaning, more than one category must be available and indicates what type of relationship the word with its particular semantic categories must be in relation to an ambiguous word. Rules are of variable length that are attached to each word in the dictionary. These rules are introduced during dictionary lookup in a fashion resembling the introduction of grammar codes and are use in the generalized semantic program to resolve the ambiguity of the particular word.

## Brief Description of the Drawings

Fig. 1 is a generalized flow diagram illustrating the SYSTRAN translation system embodying the present invention;

Fig. 1A is a more detailed flow diagram of the SYSTRAN IBM 360/65 operation embodying the present invention;

Fig. 2 is a generalized sketch illustrating the high frequency/idiom lookup operation of Fig. 1A

Fig. 3 is a generalized flow diagram illustrating the main dictionary lookup operation of Fig. 1A

Fig. 4 is a more detailed flow diagram illustrating the high frequency/idiom lookup for a specific Russian sentence;

Fig. 5 is a flow diagram illustrating the sequence of operation during stem lookup operation for the Russian sentence shown in Fig. 4;

Fig. 6 is a more detailed flow diagram illustrating an example of limited semantics lookup operation for the Russian sentence shown in Fig. 4;

Fig. 7 is a detailed flow diagram illustrating the sequence of operation of the LOADTXT program;

Fig. 8 is a detailed flow diagram illustrating the sequence of operation for the MDL program;

Fig. 9 is a flow diagram illustrating the sequence of operation during the INITCALL program;

Fig. 10 is a detailed flow diagram illustrating the sequence for the GETSENTN program;

Fig. 11 is a detailed flow diagram illustrating the sequence of operation for the STRPASS0 program;

Fig. 12 is a detailed flow diagram illustrating the sequence of operation for the STRPSS1 program;

Fig. 13 is a detailed flow diagram illustrating the sequence of operation during the STRPASS1 program for a POS NOUN 10 part of speech;

Fig. 14 is a detailed flow diagram illustrating the sequence of operation during the STRPASS1 program for a verb-04 part of speech;

6

EP 0 274 281 B1

Fig. 15 is a flow diagram illustrating the sequence of operation during the STRPASS1 program for an adjective participle-20 and 80 part of speech;

Fig. 16 is a detailed flow diagram illustrating the sequence of operation for the STRPASS2 program;

Fig. 17 is a flow diagram illustrating the sequence of operation for a STRPASS 3 program;

Fig. 18 is a detailed flow diagram illustrating the sequence of operation for the STRPASS4 program;

Fig. 19 is a detailed flow diagram illustrating the sequence of operation for the PREPTR program;

Fig. 20 is a detailed flow diagram illustrating the sequence of operation for the LEXICAL program;

Fig. 21 is a detailed flow diagram illustrating the sequence of operation for the SEMANTIC program;

Fig. 22 is a detailed flow diagram illustrating the sequence of operation for the REARR program;

Fig. 23 is a detailed flow diagram illustrating the sequence of operation for the PRINT program;

Figs. 24 through 33 are detailed flow diagrams illustrating the sequence of operation for the TLSYN (ESYN) program;

Fig. 34 is a detailed flow diagram illustrating the sequence of operation for the program RUMO;

Fig. 35 is a detailed flow diagram illustrating the sequence of operation for the SYSNOUN program; and

Fig. 36 is a detailed flow diagram illustrating the sequence of operation for the SYSVERB program.

Description of the Preferred Embodiment

1. Generally Description of Systran Translation System

The appendices hereto give a symbolic listing of the SYSTRAN programs. The meaning of the symbolic language is explained in the book IBM System/360 Operating System Assembler Language, File Number S360-21, Form Number C28-6514-4, published by IBM. The symbolic listing is converted to actual machine code for the IBM 360/65 through the assembler program which is a normal part of very IBM 360/65 computer.

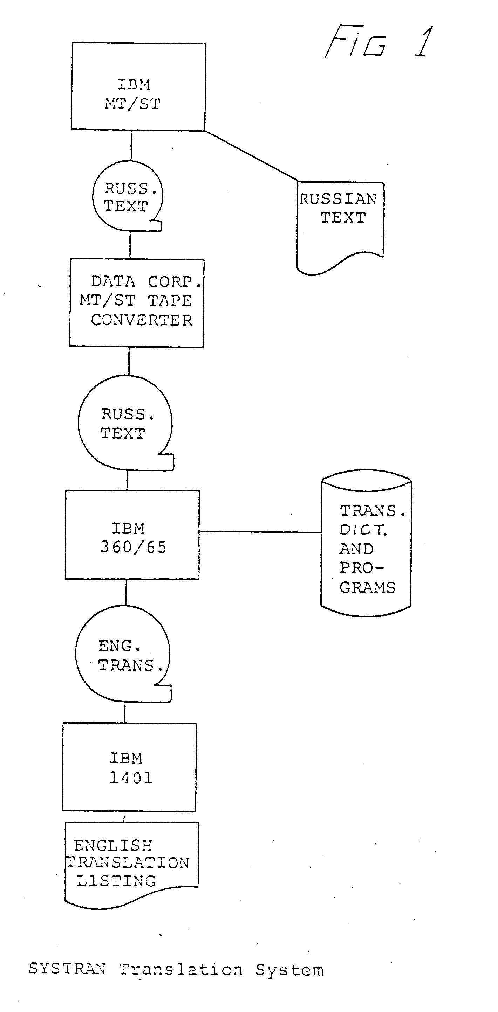

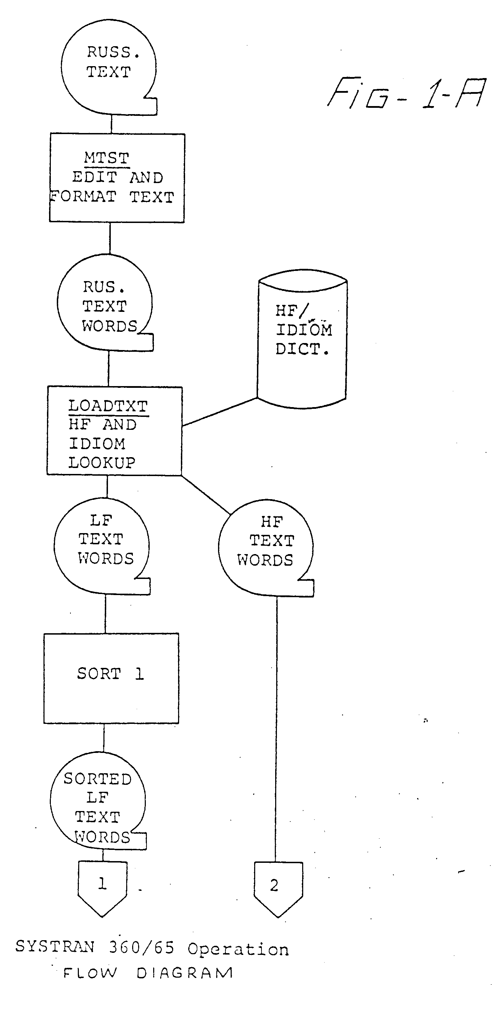

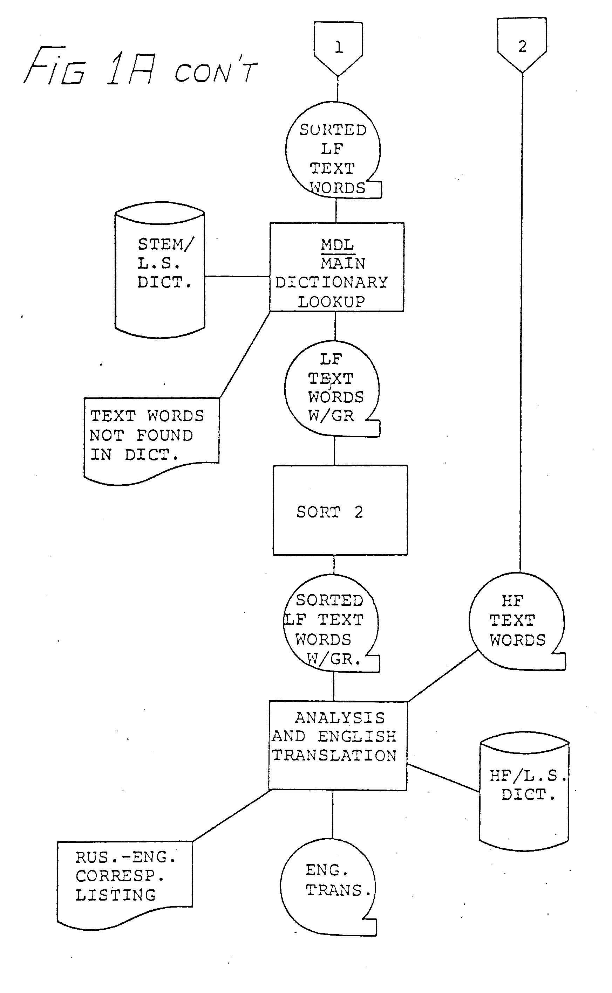

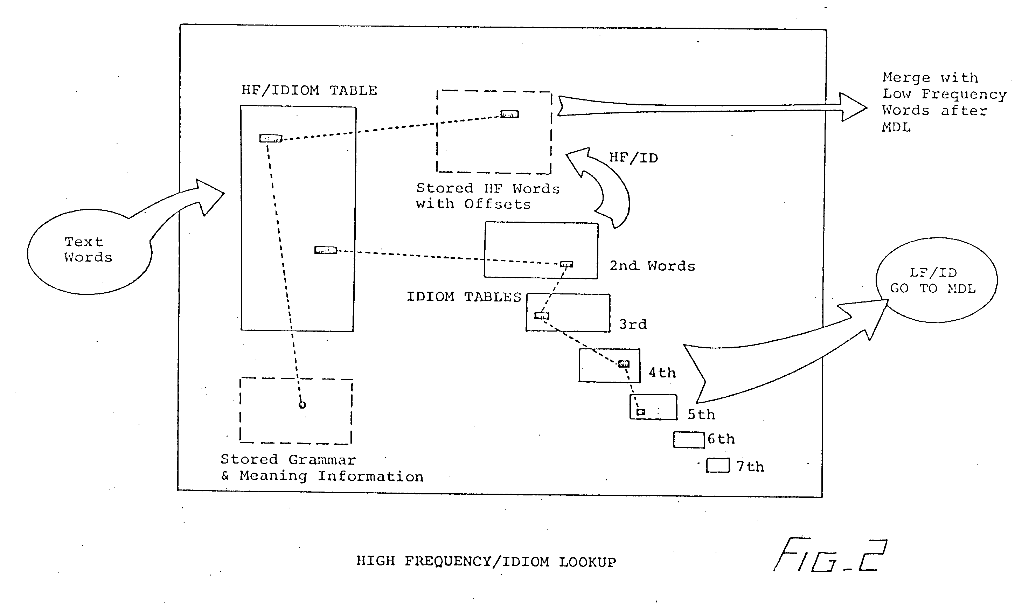

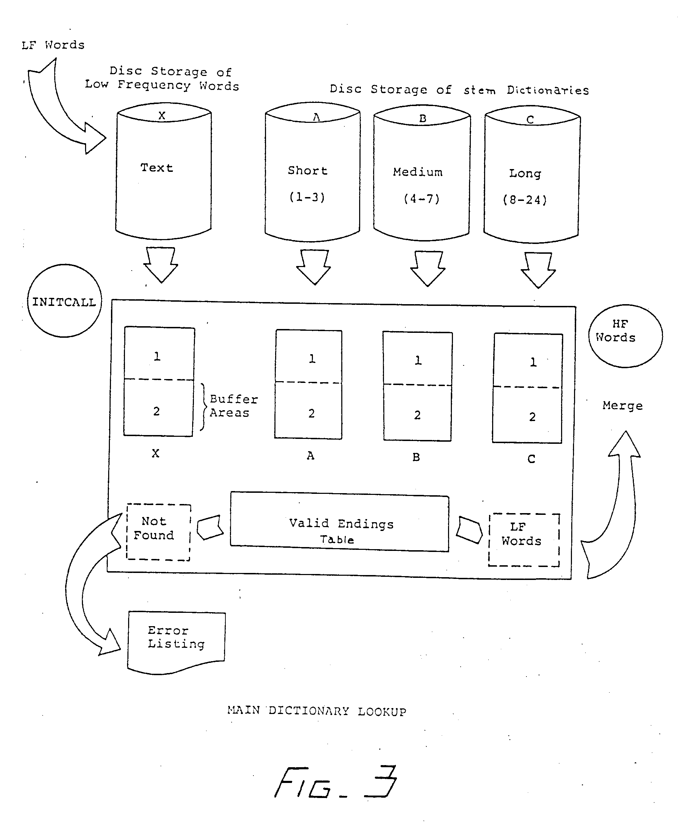

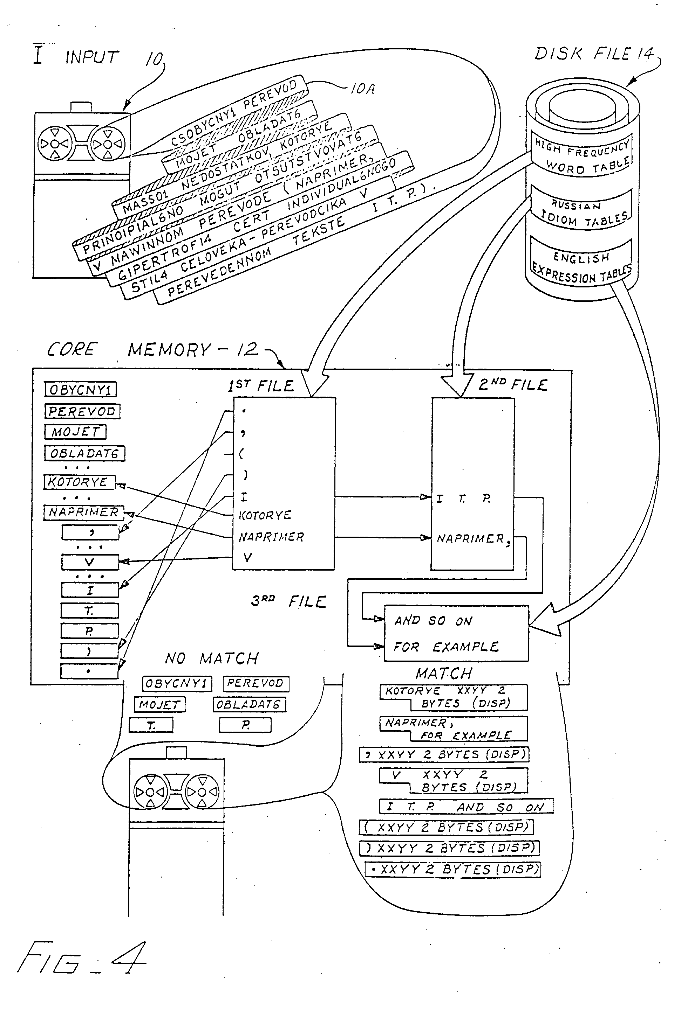

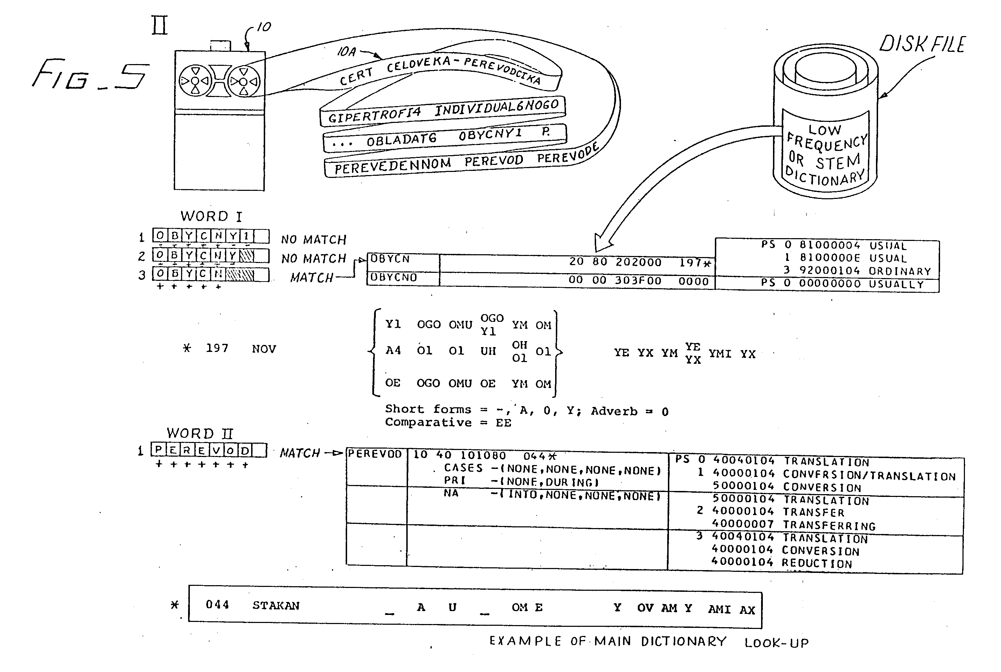

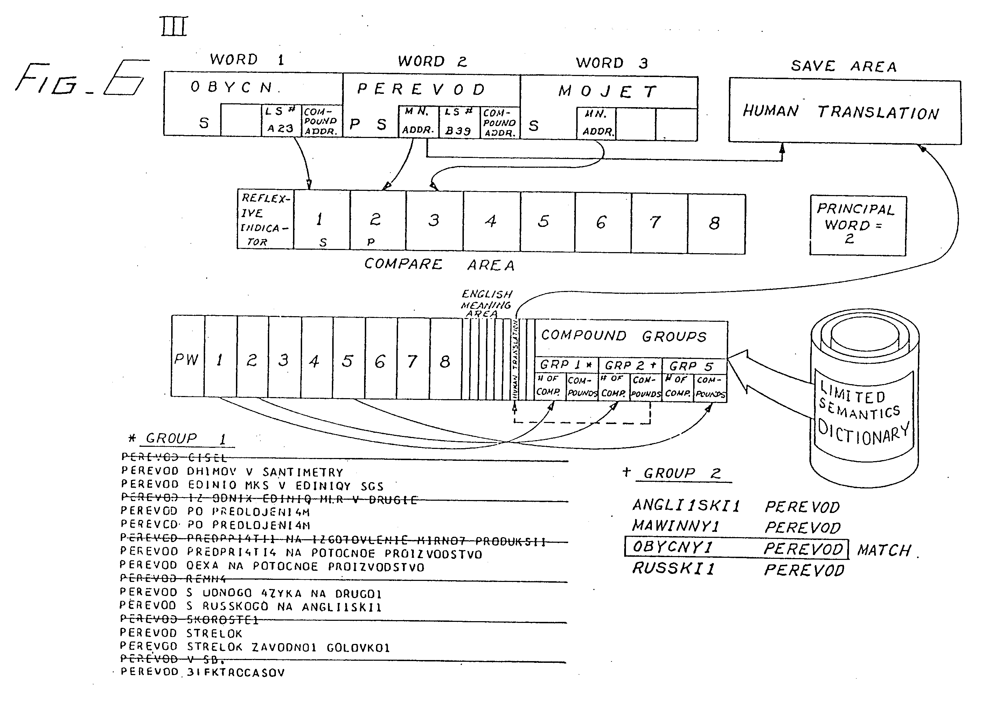

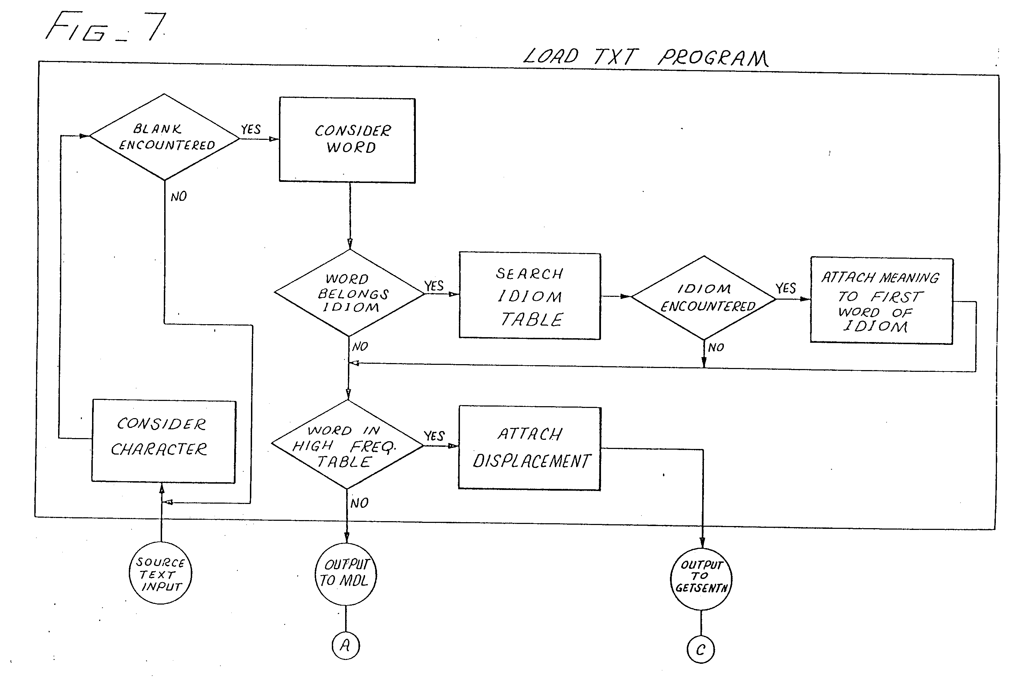

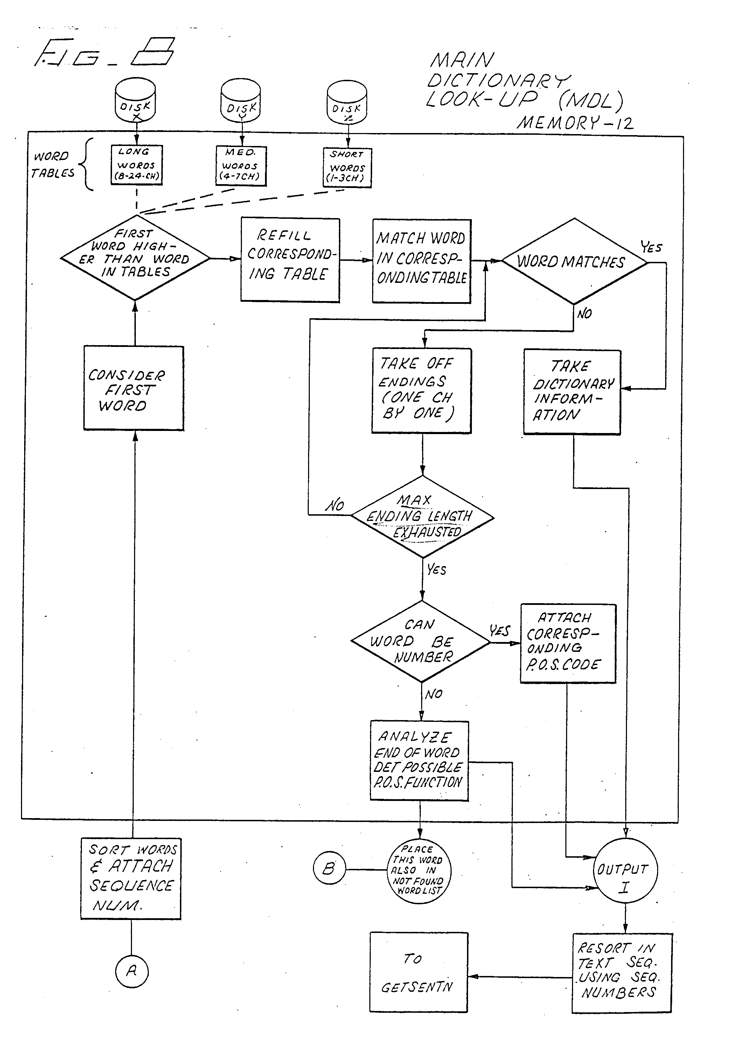

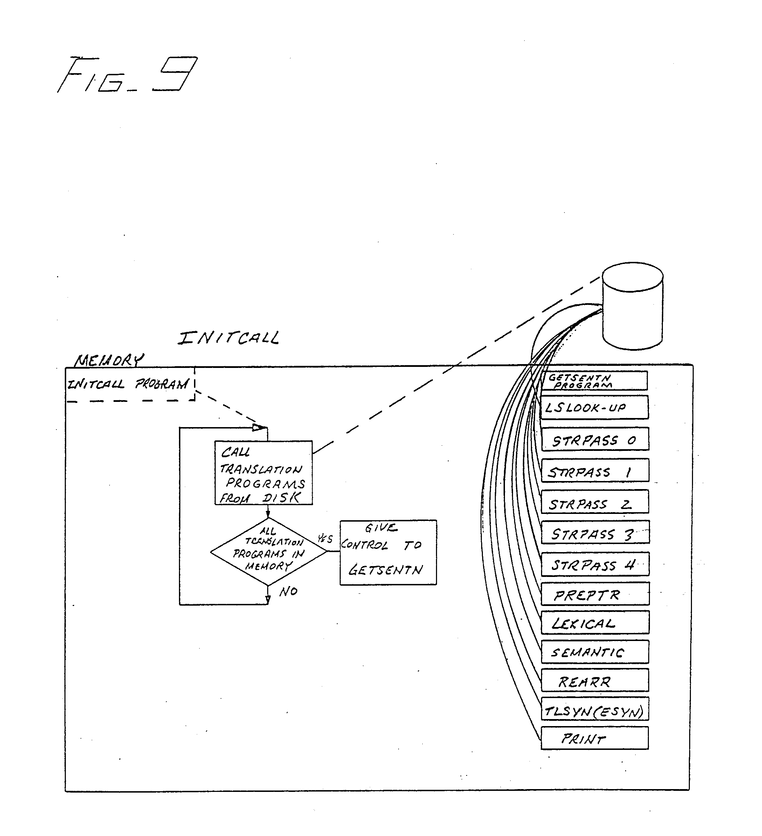

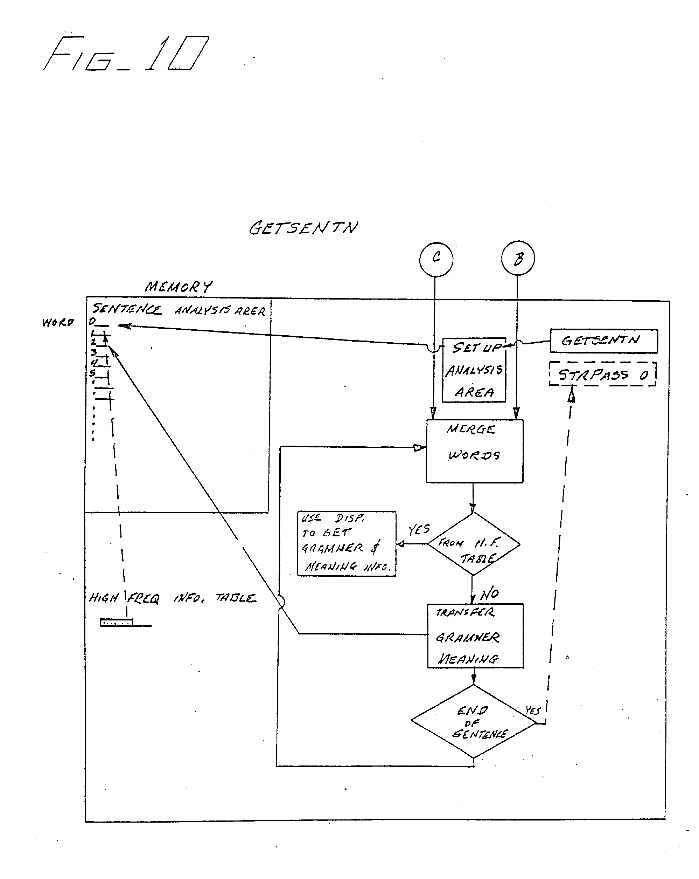

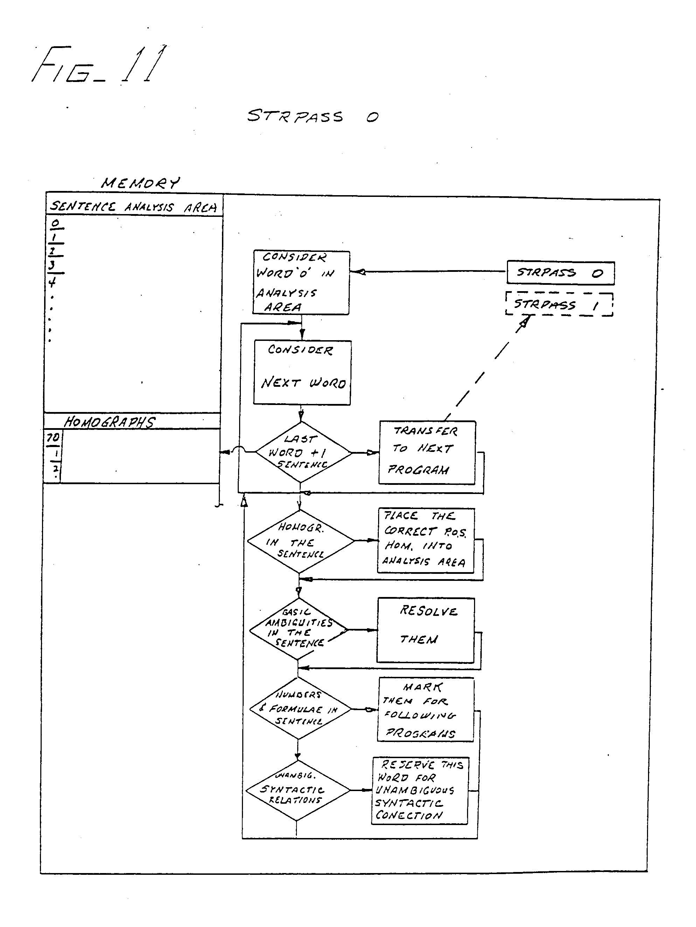

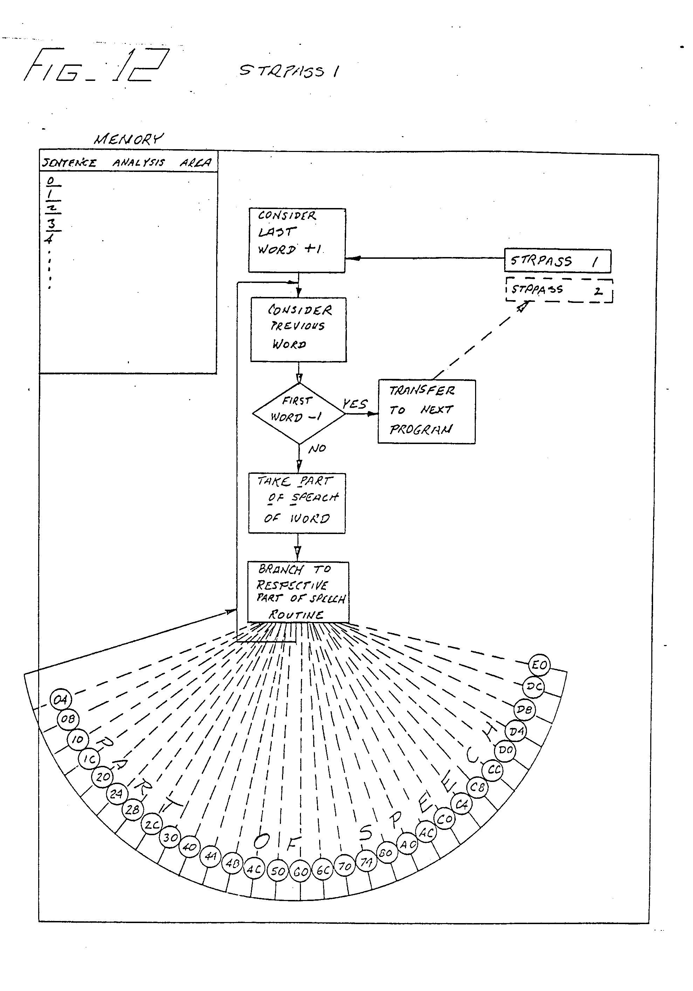

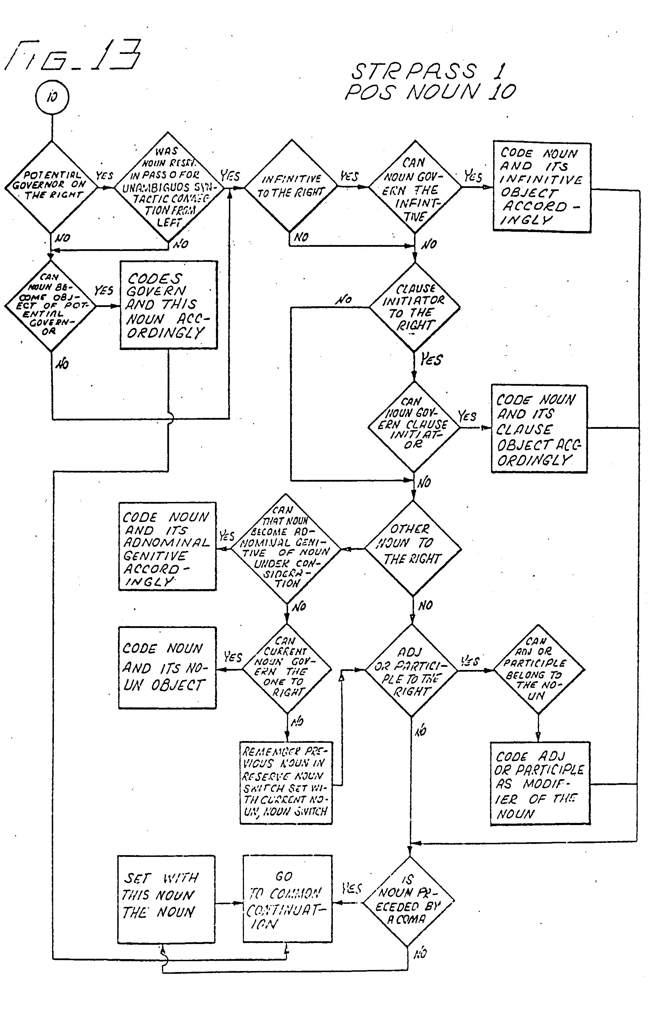

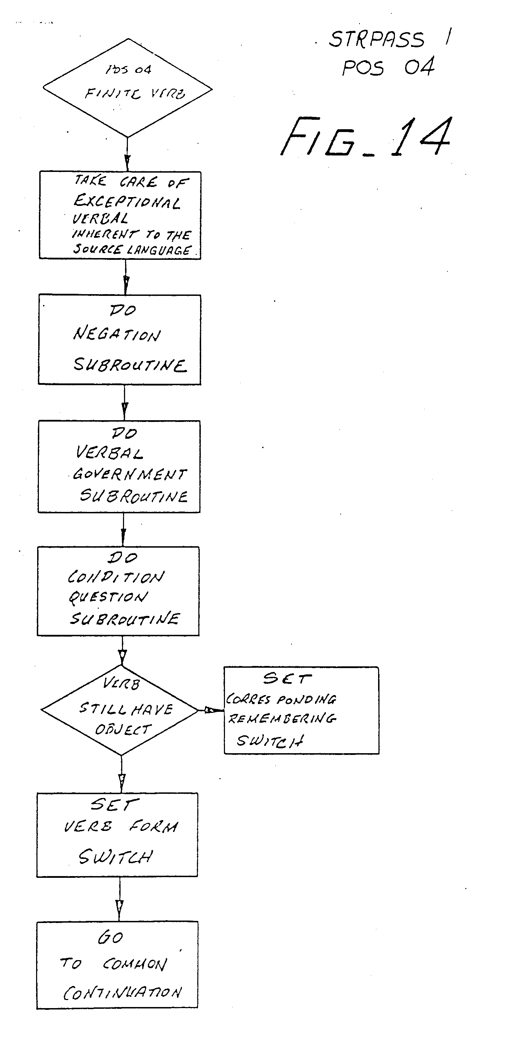

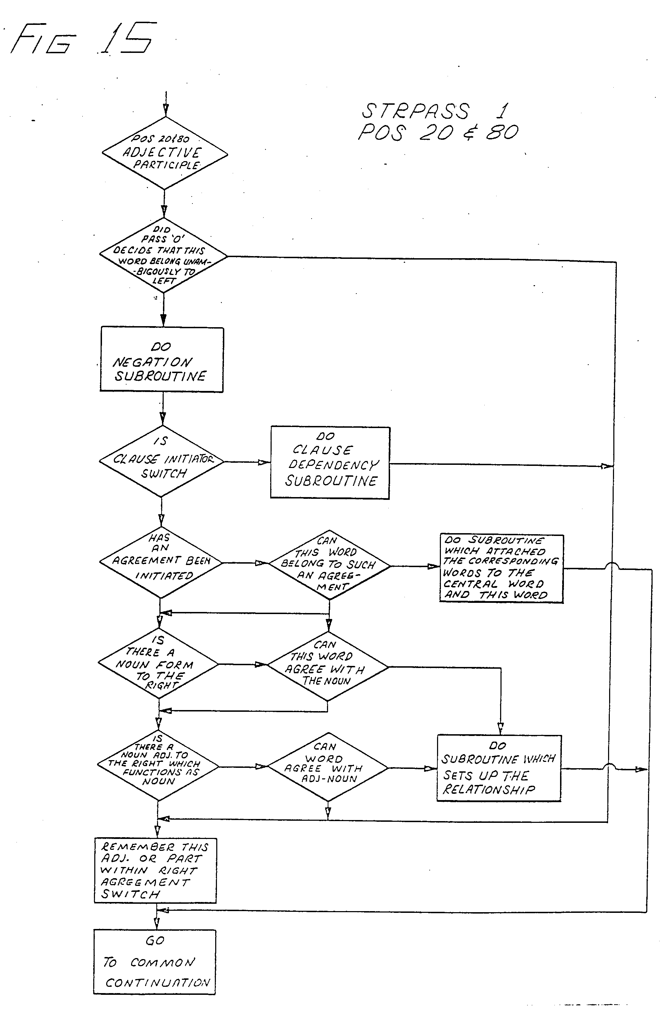

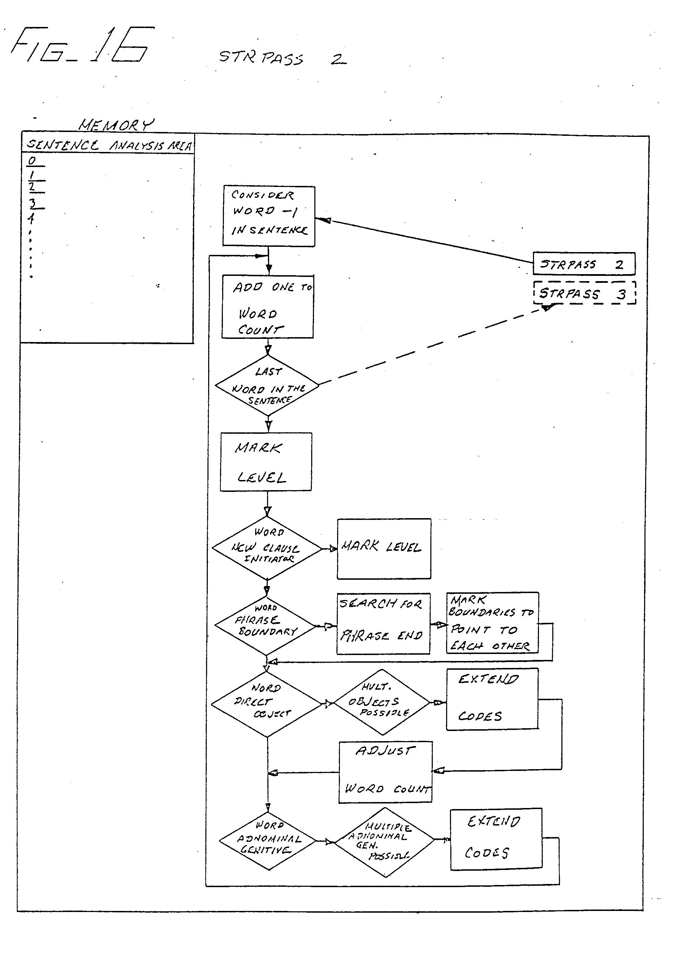

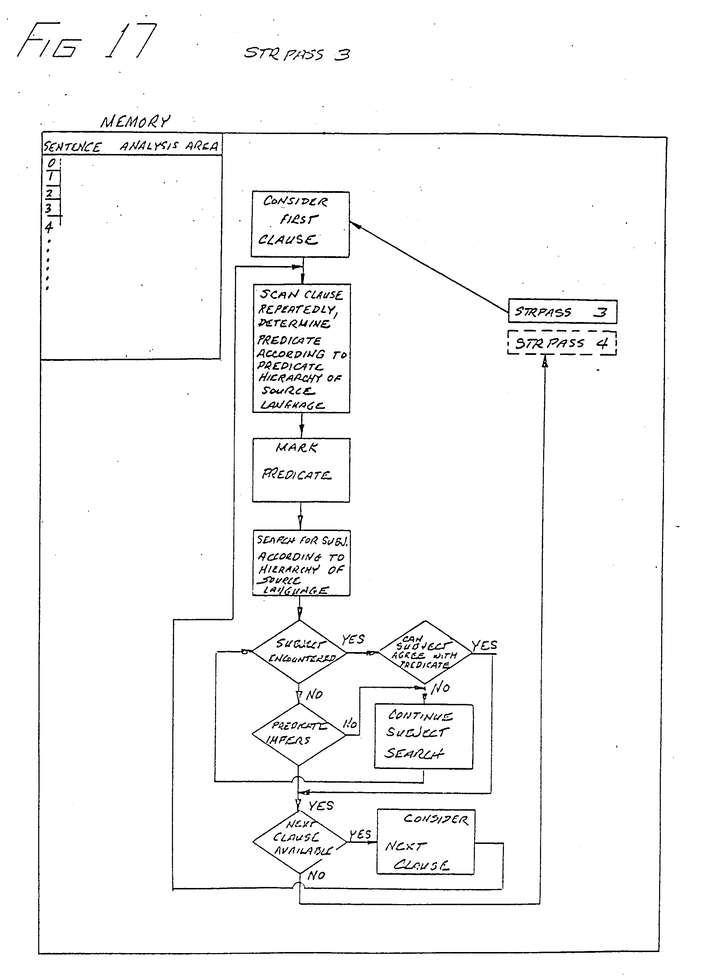

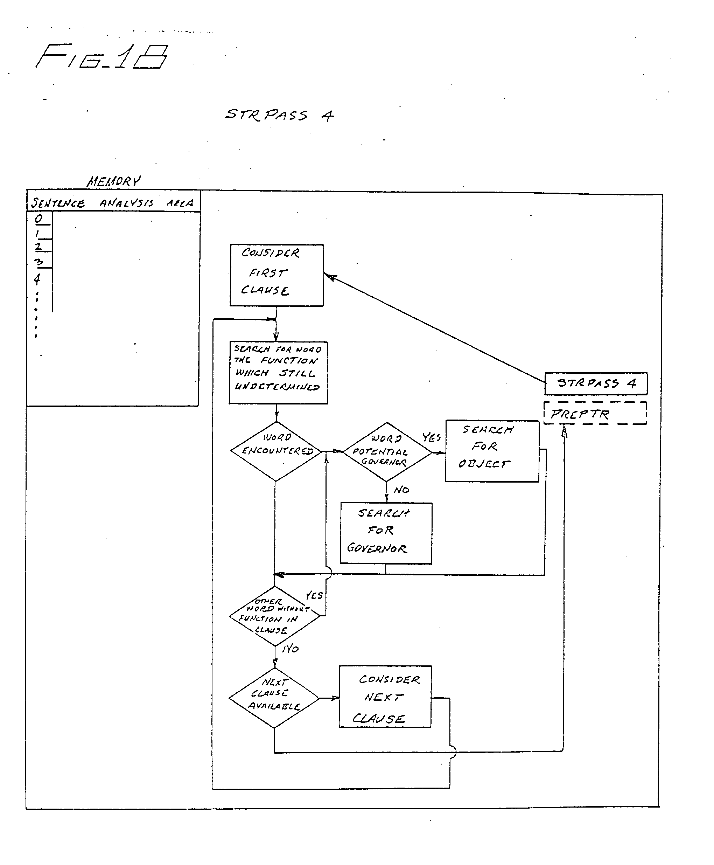

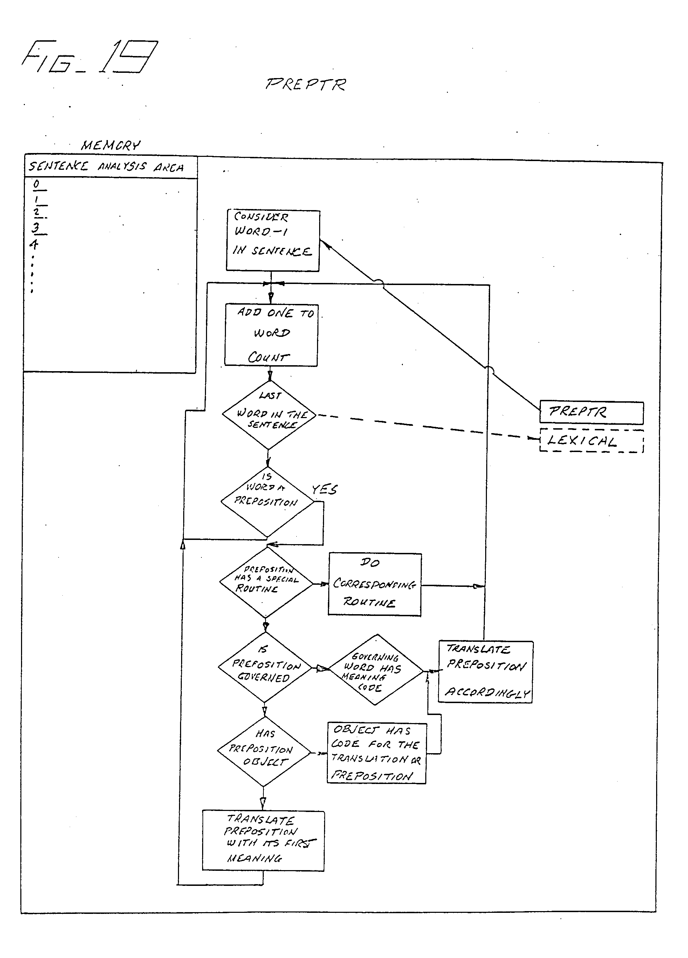

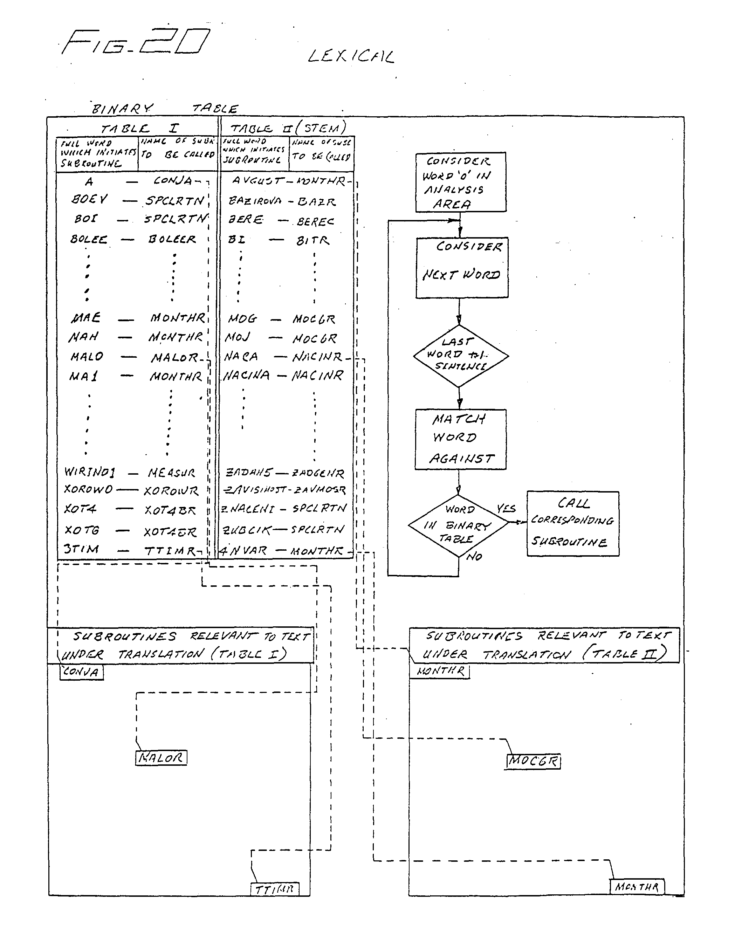

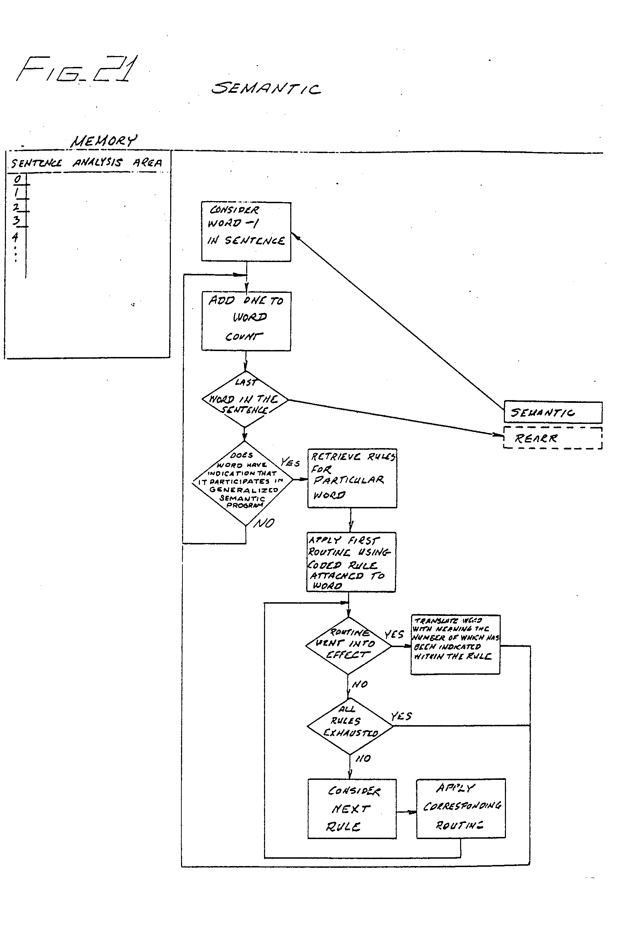

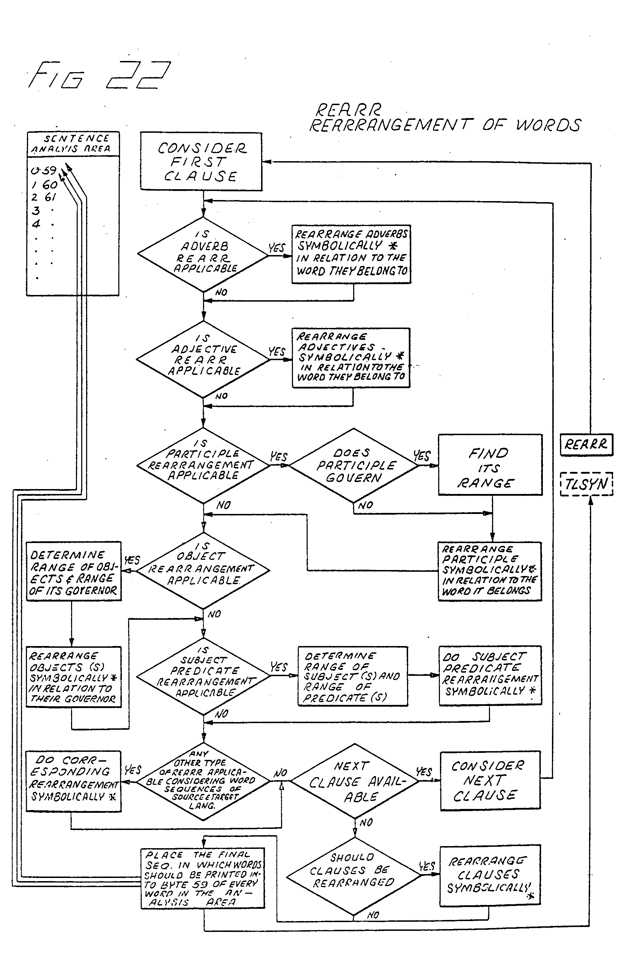

Fig. 1 is a flow diagram which illustrates an overall programming system used on programmable digital data processing systems for translation from one natural language to another. The specific programming system disclosed herein by way of example is for translation from Russian to English and is known as the "Systran System". However, the inventive concepts are applicable to translation between any two natural languages such as English and Chinese, Spanish, etc.

Referring to Fig. 1, the first step consists of the preparation of the Russian text for computer translation. This is accomplished by having the text typed on a magnetic tape Selectric typewriter (MTST) made by the International Business Machines Corporation (IBM). The typewriter is used to replace each Cyrillic letter in the Russian text with a Latin letter or combination of letters. The MTST codes the Latin characters and records the code characters on magnetic tapes in cartridges. To provide print format control of the English translation, special coded control characters are typed interspersed with the text. The text on the MTST tape cartridge is converted to characters suitable for processing by the IBM 360/65 digital computer. The conversion is made to IBM 360/65 characters and recorded on magnetic tape utilizing the Data Corporation MTST converter.

Having passed through this preparatory stage, the Russian text is next translated by processing on the IBM 360/65 digital computer. The present minimum requirements of SYSTRAN on the IBM 360/65 are 512 bytes of core memory, one input and one output tape and four disk storage drives for dictionary program, and data manipulation usage. The disk storage drives are sold by IBM under the number 2314. The steps of processing are described in the subsequent paragraphs.

The output from the IBM 360/65 system is a magnetic tape with the English translation. This tape is processed on a digital computer sold by IBM known as the IBM 1401 computer for the purpose of preparing the English translation listing. The actual listing is on a printer attached to the IBM 1401 computer system. The IBM 1401 computer has a special upper and lower case print chain for capitalization indication, as well as additional special characters to compose 120 character print chain.

A set of tables is located at the end of the specification and is referred to hereinafter. Table I gives a list of the computer programs used in the SYSTRAN SYSTEM together with a brief description of the meaning of each program.

The translation process on the IBM 360/65 system comprises the following 12 programs listed in Table 1 STRPASS0; STRPASS1; STRPASS2; STRPASS3; STRPASS4: LSLOOKUP; LEXICAL; SEMANTIC; PREPTR; REARR; TLSYN(ESYN) and TRPRINT. The program MT/ST edits and converts the MT/ST text. The programs LOADTXT through SYSVERB perform dictionary look-up functions, gather information and attach the information to the source text words. The programs STRPASS-0 through STRPASS-4 prepare the input text together with information from certain translation dictionaries (which will be described in detail) for

7

the programs LEXICAL through TLSYN(ESYN) which perform the actual translation. The functions of the individual programs are presented below.

The rest of the general description is directed to the operations of the SYSTRAN SYSTEM using the IBM 360/65 and the IBM 1401.

There are inherent difficulties associated with substituting a computer for a human translator to perform language translation. The human mind has the capability of "understanding" the text by making almost simultaneous, structural interconnections between words. The computer's limitations in this area are overcome by utilizing its great speed, storage of unlimited source material, and ability to perform repetitious and tedious tasks without succumbing to error. The system presented herein has minimized the machine limitations, while capitalizing on the computer's capabilities.

The logic employed in the translation process can be divided into three primary phases. The first is DICTIONARY LOOKUP in which the computer storage is drawn upon to symbolically classify the source words. The second phase is the SYNTACTICAL analysis of the text, e.g., the establishment of interrelationships between words within a sentence. The third phase is the actual SYNTHESIS into the target language or languages. Each of these steps will be dealt with independently, both in terms of the computer system design and the translation scheme.

## A. DICTIONARY LOOKUP

This phase of the translation process involves programs LOADTXT and MDL and is distinguished by the implementation of various computer tables that carry information necessary for the accurate translation of the source text. Many of these tables are penetrated through the use of address linkages which point to or locate the expanded information on disk. Codes and addresses are affixed to the source text during this phase and are carried from this phase into SYNTACTICAL ANALYSIS and SYNTHESIS.

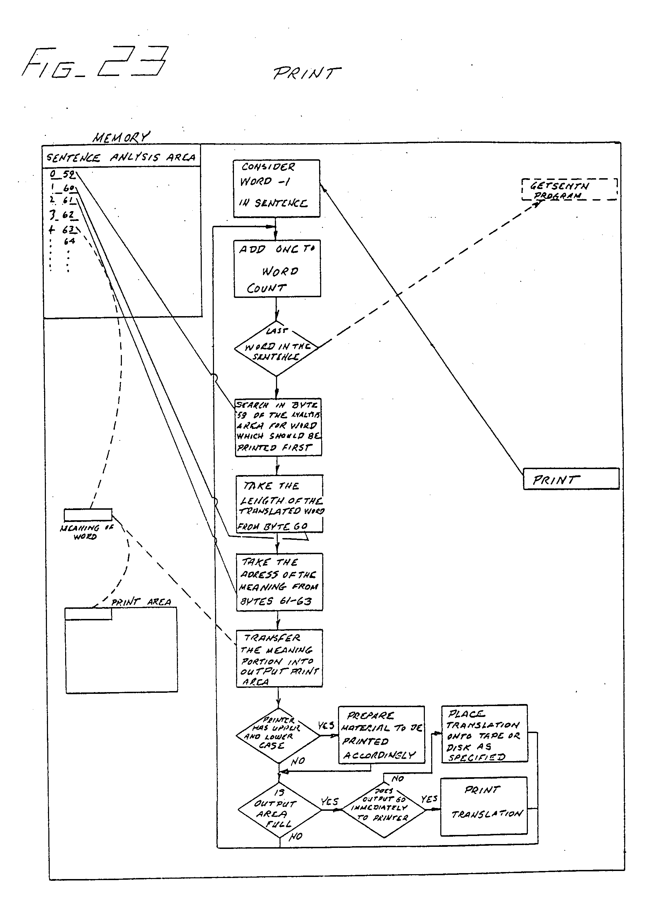

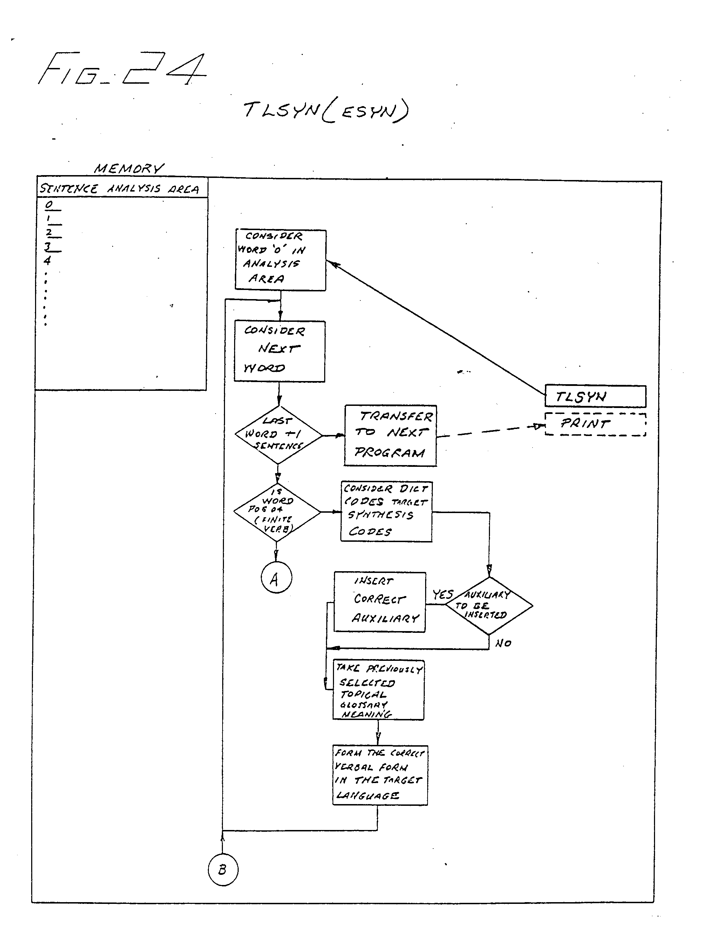

Figs. 2 and 3 illustrate the dictionaries used during DICTIONARY LOOKUP and the way in which they are interconnected by address linkages or offset addresses. LOADTXT (TABLE 1) is the program which executes the instructions for input and work during this phase and separates the words into individual records.

The programs for the actual dictionary lookup are high frequence and idiom lookup and main dictionary lookup. These processes are briefly described below.

### (1) High Frequency and Idiom Lookup

Figure 2 is a generalized sketch illustrating the sequence of operations during High Frequency and Idiom Lookup.

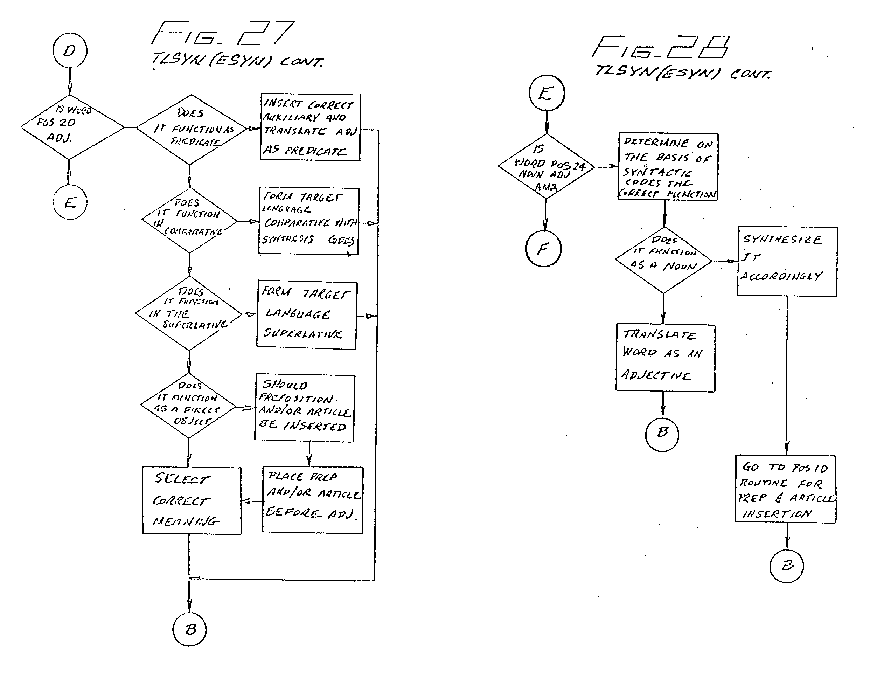

Figure 7 shows a flow diagram of the LOADTXT program. The source text words are read in and stored in main core memory by the LOADTXT program. As each individual word enters the core memory, the program matches the word against a dictionary of high frequency words which also contain the first words of all idioms. This dictionary is called the HF/IDIOM DICTIONARY. The high frequency words are a relatively small number of frequently encountered words in the source language, such as conjunctions, prepositions, and punctuation marks. Looking these up separately from low frequency words saves considerable search time, since the HF/IDIOM DICTIONARY is kept in core memory and does not have to be brought in from auxiliary disk storage. The important advantage of separating the high frequency words is that the high frequency words do not carry the string of grammar and meaning information on disk that the low frequency words carry. Rather, the high frequency words have their grammer and meaning information separately stored in a dictionary which is later referenced by offset or address linkages. The offset or address linkages indicate the location of the corresponding grammer and meaning information in the core memory. The address linkages are stored with each word in the HF/IDIOM DICTIONARY.

A word that is a high frequency word is detected by a match with a word in the HF/IDIOM DICTIONARY. Then the appropriate address linkages from the dictionary are attached to the source word and are held in a working file known as the HIGH FREQUENCY FILE to be later merged with low frequency source text words. If a word (irrelevant whether it is part of an idiom or not) is not a high frequency word, it is sent directly to a LOW FREQUENCY FILE from which a Dictionary Lookup (MDL) operation is performed.

If a word is the first word of an idiom, it is indicated by a field associated with the word in the HF/IDIOM DICTIONARY. Upon encountering such a word, it must be determined whether any of the words following such first word of an idiom could participate in an idiomatic expression. Each idiomatic phrase may have one through seven words to handle the 2nd through 7th possible idiom words. A set of 2nd word through 7th word IDIOM TABLES are provided. The first word idiom words in the HF/IDIOM TABLE have an offset to a word in the 2nd word IDIOM TABLE which has an offset to a word in the 3rd word IDIOM table, etc. Thus, once a first word of an idiom is found, the 2nd word IDIOM TABLE is searched which contains all possible second words that could follow that particular first word in an idiom. The search continues for third, fourth, to a maximum of seven words, until a match is found for a complete idiom phrase. The last idiom word has associated therewith an offset address linkage to a meaning for the particular idiom. The meaning of the entire idiom is then obtained and attached to the first word of the idiom and all words in the idiom are marked as already translated. If the first word is a high frequency word, as well as being the first word of an idiom, it is written in the high frequency file and it receives the same types of codes as the other high frequency words. If the first word of an idiom is a low frequency word, it is written into the HIGH FREQUENCY FILE for the unique purpose of carrying the meaning, otherwise it goes to a low frequency (LF) file for processing by MDL.

The words in the LF are then sorted in ascending alphabetical sequence for lookup in the MASTER STEM DICTIONARY by a standard sort program (not disclosed herein),

(2) Main Dictionary Lookup

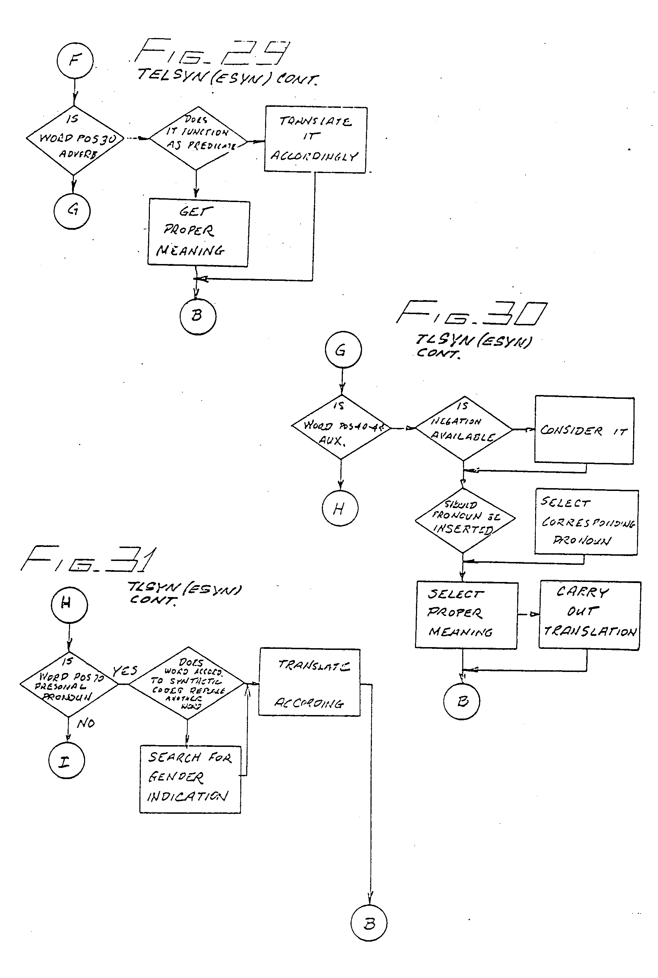

Figure 3 is a generalized sketch illustrating the sequence of operation during main dictionary lookup (MDL). Figure 8 is a flow diagram illustrating the sequence of operation by the program MDL. Main dictionary lookup is handled by the MDL program. The stem words for the source language are kept on disk and are called or brought into core memory by the INITCALL PROGRAM as they are needed. Although not essential to the broader concepts of the invention, a preferred embodiment of the invention has the stems stored on three different disks A, B and C, according to length (1-3 characters, 4-7 characters, 8-24 characters), however, this may be modified to a single disk storage. Each entry contains a source language stem word and attached to each stem in this dictionary are paradigmatic set titles (PST) which signify the endings permitted for that stem. Also, there is an address at the stem in the dictionary which points to a disk location carrying additional grammar and meaning information and to LS information. Information in the dictionary also indicates if each word may function as a principal or supplementary word in an LS expression. Full form entries which need no stem ending comparison for match are also kept in the stem dictionary.

The program MAIN DICTIONARY LOOK-UP (MDL) obtains or calls in the words from the LOW FREQUENCY FILE and accumulates them on disk. Then a portion of the text words, along with portions of each of the STEM DICTIONARIES on disks are read. The stem dictionaries also contain full forms. They are in alphabetic sequence as are the source text words. In each disk of STEM DICTIONARIES, there are two areas in the core. The first area ($A_1$, $B_1$, $B_1$, $X_1$) is filled with a portion of text words and STEM DICTIONARIES for the disks. When this is filled, work begins on it by the IBM 360/65 computer and the second area ($A_2$, $B_2$, $C_2$, $X_2$) is filled with more words or stems. The second area acts as a buffer.

During the dictionary look-up whenever only a portion of the source word matches with the stem, the ending is analyzed to determine whether it is an allowable ending and if so, what additional grammatical information can be derived from the particular stem and ending combination. Each stem belongs to a defined declensional or conjugational pattern. Such patterns are expressed by PST codes. In addition, every word has a code which indicates whether particular declensional or conjugational patterns should be taken into consideration. On the basis of these codes, one of the following three programs may be activated by MDL: RUMO, SYSNOUN or SYSVERB (Figs. 34, 35 and 36). These programs contain VALID ENDINGS TABLES for every declensional or conjugational pattern of the source language and attach on the basis of such tables grammatical information to the words.

If a word is not in the STEM DICTIONARIES, it is analyzed for its component letters, numbers, and/or endings to establish its possible function and subsequently stored until a sufficient number have been accumulated and printed out in an error list.

Words that are located in the STEM DICTIONARIES are matched against a table of valid endings answered with the stem word in the STEM DICTIONARIES. The endings are kept in a valid endings table in the memory and are accessed through an address linkage known as the PST code attached to each stem word. Subsequently, the low frequency words are noted back into their original text sequence, and are merged with the HIGH FREQUENCY FILE words which are kept in their original source text sequence, and put into a file known as MERGED FILE. The original sequence of the source text is determined from serial numbers attached to each source word before dictionary lookup commenced.

B. Syntactical Analysis

The programs GETSENTN through PRINT are initiated and sequentially ordered by the program called INITCALL as generally depicted in Figure 9.

The program GETSENTN, called by INITCALL, initiates the analysis of the words as they function in the sentence. Figure 10 is a flow diagram illustrating the sequence of operation of GETSENTN. At this time, each separate sentence is handled as the basic unit for structural and syntactical analysis. It is this phase of translation which attempts to compensate for the computer's lack of understanding of the words it reads. GETSENTN first clears the analysis area in the core memory. The sentences are then individually called from the MERGED FILE into the analysis area in the core memory. Fig. 10 is a flow diagram illustrating the sequence of operation by the program GETSENTN. A typical example of a listing or print out of one sentence in the source text and associated information is contained in Table 24.

(1) Lookup of Limited Semantic Expressions (LSLOOKUP)

Lookup of limited semantic expressions is done by the program LSLOOKUP. Before the consideration of words or word groups as entities determined by relative position, a match is done to see if they participate in a limited semantic expression (i.e. multiple meaning is resolved within limited environment). A sketch generally illustrating the sequence of operation during LSLOOKUP is shown in Figure 6. The lookup is done by scanning the sentence looking for attached tags indicating the word is a possible principal word (this information is attached during DICTIONARY LOOKUP). If a principal word is encountered, then words on both sides of it are examined for tags indicating supplementary words. Such an arrangement is based on the fact that every word in the dictionary carries a unique L. S. number which identifies the word for the purpose of limited semantics. The principal word carries the L.S. numbers of all supplementary words with which they may function in a compound. If a principal word has adjacent supplementary words, then a small work area is built in core memory at these words and a LS COMPOUND DICTIONARY is searched for all compound expressions having that principal word occupying that particular position. A match is then done with the supplementary words. If the words are determined to be participants in a limited semantic expression, the information for the expression is attached to the principal word.

(2) Structural Passes

The structural pass programs are known as STRPASS and operate on each sentence in an area of memory which has been cleaned for this analysis. There are five passes known as STRPASS-0 through STRPASS-4 and each pass elucidates in some way on the previous one. The information gained during a pass is not static and may be elucidated.

According to the type of sentence under analysis, certain blanks in the analysis area are gradually filled with information by the five passes. The following gives a description of each:

(a) STRPASS-0.

Figure 11 is a flow diagram illustrating the sequence of operation during the STRPASS-0 program. STRPASS-0 is a program which, before the actual structural passes are performed, resolves parts of speech ambiguities when they occur. Homograph ambiguites are indicated by the same numeral codes in each language. Special subroutines are accessed through these codes which analyze the relationship of the ambiguous word to other words in the sentence (i.e. their part of speech, POS, and other codes), and determine its part of speech on this basis. The subroutines are adjusted according to the particular source language being used.

Words that are definite objects are recognized and appropriate bits or tags are set on in association with each source word in the analysis area.

(b) STRPASS 1.

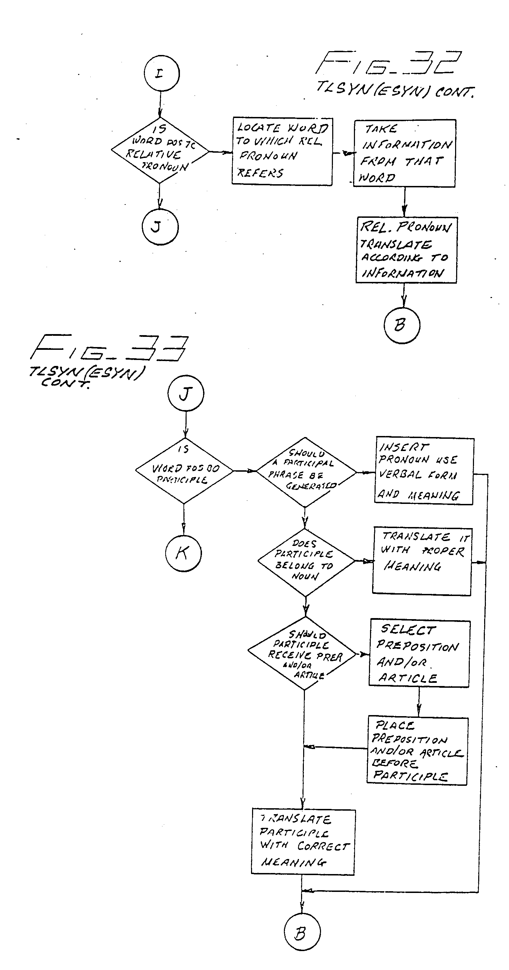

Figure 12 is a flow diagram illustrating the sequence of operation during execution of the STRPASS 1 program. STRPASS 1 is a program which moves from the end of the sentence to the beginning as more relationships are established in this manner. Each part of speech code encountered initiates a routine that sets switches or tags associated with each word which indicates its position and possible function. This is made possible by having a dictionary system in which the part of speech (POS) indication is used to initiate selected routines. Figures 13, 14 and 15 are flow diagrams illustrating the sequence of operation for the POS noun, POS verb and POS adjective/participle respectively. Although the routines vary according to the source language, the software support for all natural languages is the same. The switches "remember" previously encountered situations and generalized subroutines are called which make decisions on the basis of these switches. For instance, the determination of the definite object of a verbal form is identical for English, Russian, German, French, etc. The consideration of transitivity or case requirement in some languages is an example of the reason for minor variances in subroutines.

(c) STRPASS 2.

Figure 16 is a flow diagram illustrating the sequence of operation during execution of the program STRPASS-2. STRPASS-2 is a program which determines the extent to which commas and conjunctions serve as separators between multiple objects, phrases and clauses. It also carries out specialized routines at quotation marks, dashes, and other punctuation marks that have a function in the language of interest. Each punctuation mark has a POS code by which it it recognized. The POS was previously attached during dictionary lookup. Parentheses are classified according to the type of construction they enclose. Also in this pass, the additional information gained from the recognition of punctuation marks is used to mark structures that were not discovered in STRPASS 1.

(d) STRPASS 3.

Figure 17 is a flow diagram illustrating the sequence of operation during execution of STRPASS-3. STRPASS 3 is a program which locates subject(s) and predicate(s). First a search is carried out for primary predicates based on assigned POS tags attached to the source words. If none of these are available in the sentence, other words which may function as predicates are searched for with the priorities for search being based on the probability of certain parts of speech becoming predicates before others. After the predicate is determined, the subject is searched for. This also proceeds on the basis of probabilities. For example, in the case of Russian and German, nominative nouns are searched for first as they are the primary candidates for subjects. The subjects and predicates must agree in number and gender (if applicable).

Any commas with indeterminate function are analyzed in this pass to see if they serve as subsentence unit separators. The location of the subject and predicate enable the discernment of embedded clauses, and multiple predicates and subjects are recognized and noted.

The discovery of a subject by this pass may modify information previously inserted in the analysis area relative to function that word. For example, if a noun is called an object in STRPASS 1 and STRPASS 3 does not locate a subject and the predicate is a personal verb, the object must become the subject. In this way the input of new information caused a reevaluation of the sentence structure.

(e) STRPASS 4.

Figure 18 is a flow diagram illustrating the sequence of operation during execution of the program STRPASS 4.

Both the LEXICAL and SEMANTIC programs have their own supervisory programs which decide at which words in the text these programs should go into effect. The LEXICAL program is composed of many individual subroutines. One of these routines will be activated on the basis of the encountered word during translation.

SEMANTIC is a generalized program which is activated each time a multiple meaning word is encountered which has been supplied with parameters for this program. According to the parameters, the program analyzes in a hierarchical sequence the semantic categories of certain words in the sentence with which the multiple meaning word is in defined syntactic relationship. The semantic categories reflect the semantic properties of the words. Each source language word may belong to one or more semantic categories.

The parameters are expressed in the form of rules and attached to the individual words which may be translated with different meanings.

The lexical routines carry out their task on the basis of checking the environment of the word for which they are called upon. The semantic program analyzes the semantic categories of those words which are in defined syntactic relationships with the word with a meaning ambiguity. The analysis takes place on a hierarchical order indicated by the parameters and rules attached to words with multiple meanings.

C. Synthesis into Target Language

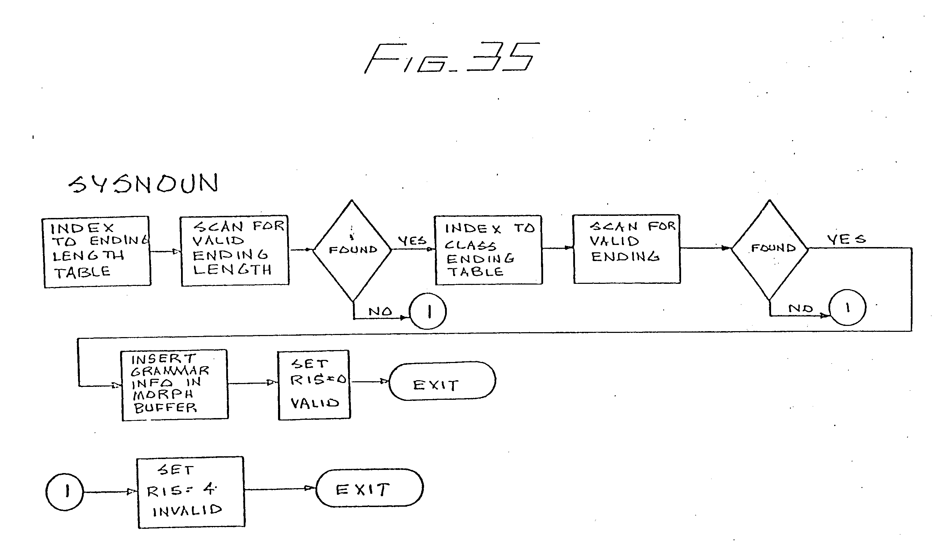

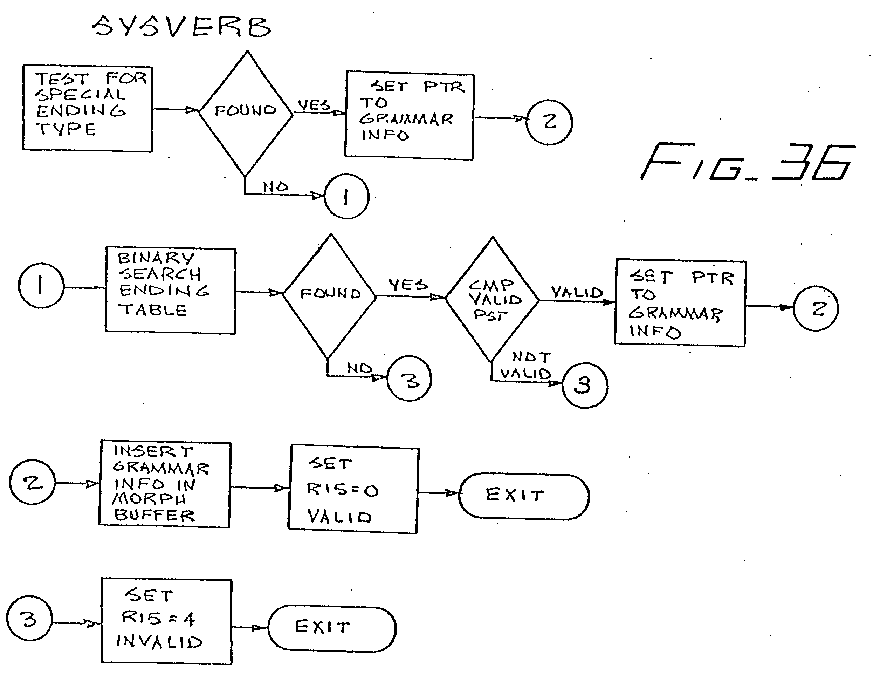

The synthesis phase of the translation process is carried out by the programs REARR, TLSYN (ESYN) (Target language synthesis) and PRINT, flow diagrams of which are shown in Figures 22 and 24 through 33, respectively. These programs vary somewhat when changing languages depending on the inherent characteristics of the source and target languages. Basically, the synthesis is done by branching on each part of speech. In the case of some parts of speech, tables are interrogated to discover the proper translation. For instance, the verb routines which translate into English, use tables in the computer memory. The tables are selected depending on whether a verb is active, reflexive, or whether the auxiliary 'be'is conjugated. Tables for the translation of the reflexive verbs are further subdivided depending on the types of codes verb reflexive codes (IVB) which exist for the translation of the reflexivity. Each table checks for tense, aspect, person, number, condition, question and negation, and decides accordingly which auxiliary or pronoun should be inserted and what verbal form to be used. TABLES 2-A, 2-B, 2-C, and 2-D show a chart of typical verb tables used during synthesis. This approach to synthesizing the target language is completely unique to this system.

During the coding of the source language into the tables, codes are given to the translation which ensure the proper translation. Among these are Topical Glossary Codes (TG) which differentiate between meanings on the basis of the scientific area of interest. In other words, the translation of the word HEAD may be different in the target language, depending upon whether the text being translated is in the area of biology or mechanical engineering.

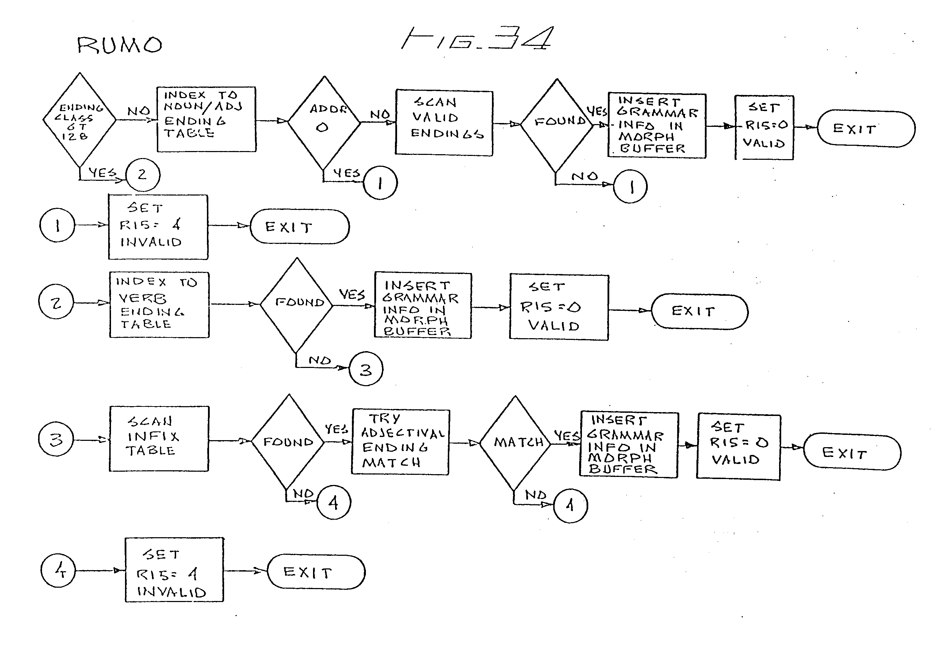

Since prepositions play a primary role in most languages, a special program handles their translation. This program is known as PREPTR (Figure 19). This program considers the codes which are available at words which govern the preposition or at the objects which are governed by the preposition. In addition, if necessary, a more extended environment analysis also takes place.

Each language has a unique word order that must be considered when going from one language to another. The program called REARR (Figure 22) deals with this aspect and contains the rules governing the word order in the target language. These rules, together with the grammatical codes produced, attached to each word of the source language by the System, enable the program to first establish the correct sequence of words symbolically and later to print all the words according to this established sequence.

An article routine known as ARTICLE may be called on if necessary. Such a routine considers the parameters of the source and target languages, to decide where an article should be inserted, if at all, and what kind. The routine functions within the target language synthesis program (TLSYN).

2. Detailed Description of Components of SYSTRAN Translation System

A. Dictionaries

(1) General

Dictionaries are prepared in two formats: (1) for maintenance processing, and (2) for translation processing. Each format is designed with respect to its own operational tasks to provide ease and efficiency during computer processing. All operations involving the dictionaries have been established to operate in a production environment, i.e., large volumes of additions and modifications may be rapidly coded and processed in one continuous computer updating run. This is one of the important features of an embodiment of the present invention.

The master or base dictionaries are those used in maintenance processing and are maintained on magnetic tape. Standard data processing practices are followed in retaining backup cycles of both the master dictionary and updating change transactions to enable recovery from accidental dictionary destruction or updating processing errors. From these dictionaries are created the compact indexed disk dictionaries for fast random access during translation processing.

Table 3 give a list of the dictionaries of interest.

The master dictionaries consist of two lexical data files. One is the STEM DICTIONARY and the other is an IDIOM/LS EXPRESSION DICTIONARY composed of idioms and Limited Semantics expressions. The translation dictionaries created from these files are STEM LOOKUP AND GRAMMAR DICTIONARY, HIGH FREQUENCY WORD AND GRAMMAR DICTIONARY, IDIOM CORRESPONDENCE DICTIONARY and LIMITED SEMANTICS COMPOUNDS DICTIONARY.

(2) MASTER STEM DICTIONARY

The MASTER STEM DICTIONARY is maintained on magnetic tape in a compound variable length

EP 0 274 281 B1

record format. Table 4 illustrates the word format for each entry in the STEM DICTIONARY. The control portion of each entry has a fixed format with record subpart offset pointers (record offset) to variable grammar sections of the record. The grammer sections will be discussed hereinafter. Updating control is on the stem (STEM) and stem number (SN) fields which make up a unique identity of the dictionary record.

The stem number (SN) identifies the entry as a stem of a word characterized by inflections which as a set belong to a specific part of speech which is either a noun, an adjective or a verb. Entries that cannot be inflected (prepositions, abbreviations, acronyms, adverbs, etc.), are treated as full forms and are so here recognized. Other pertinent information contained in the field indicates whether the stem can function as a principal and/or supplementary word in a Limited Semantics expression.

The first grammar subpart of the MASTER STEM DICTIONARY entries contains information identified as PART-OF-SPEECH CODES. Here is contained the DPQ and flag byte, the PART-OF-SPEECH CODE, a more detailed PART-OF-SPEECH CODE, and codes specifying the appropriate gender, number, case, person, tense and the paradigms of nouns and adjectives. This subpart is shown in more detail in Table 5 and will be described below.

(a) DPQ and flag byte identify whether
    (1) the stem is a noun, adjective, verb/participle or full form;
    (2) High frequency word;
    (3) Reflexive full-form usage;
    (4) Full-form adjective usage;

(b) PART-OF-SPEECH CODE (POS). This is the general PART-OF-SPEECH CODE identifying computer routines to be executed during translation processing.

(c) Basic PART-OF-SPEECH CODE (BPQ). This is a more definitive code to qualify PART-OF-SPEECH functions.

(d) Gender
    (1) Masculine
    (2) Feminine
    (3) Neuter

(e) Number
    (1) Plural
    (2) Singular

(f) Cases for full-form noun, adjective or participle stems
    (1) Nominative
    (2) Genitive
    (3) Dative
    (4) Accusative
    (5) Instrumental
    (6) Locative

(g) Person for full-form verb stems
    (1) First person singular
    (2) Second person singular
    (3) Third person singular
    (4) First person plural
    (5) Second person plural
    (6) Third person plural

(h) Tense for full-form finite verb stems; mood
    (1) Present
    (2) Past
    (3) Future
    (4) Imperative

(i) PST (paradigmatic set codes) for other than full-form stem entries. These are codes used by morphological analysis programs executed during dictionary lookup to determine the validity of the text word endings with a particular stem

The second grammar subpart, of the MASTER STEM DICTIONARY entries is identified as SYNTAX CODES, is illustrated in more detail in Table 6 and contains information of case requirements, prepositional requirements and syntactic function codes. The contents are:

(a) Case determiners
    (1) Genitive
    (2) Dative

13

(3) Accusative

(4) Instrumental

(5) Locative

(b) Prepositional requirements for the Russian words CEREZ, DL4, DO, IZ, IZO, K, KO, NA, OT, PO, POD, PRI, PROTIV, S, U, V, ZA, or any combination thereof.

(c) Miscellaneous requirements including the following Syntactic function codes

(1) Satisfiable independently by infinitive

(2) Satisfiable by direct object

(3) Satisfiable by adverbial form

(4) Personal/impersonal

(5) Participle, never adverb

(6) Noun-adjective

(7) Relative adjective

(8) Noun defining adjective

(9) Never an adverb, only predicate-adjective short-form-neuter-singular

(10) Verbal aspect

(11) Satisfiable by prepositional phrase

(12) Predicate (short forms or adverbs)

(13) Never predicate

(14) Animateness

(15) Subordinate clause opener

The third portion of the grammar part in each MASTER STEM DICTIONARY entry contains case/prepositional translation codes (CASE/PREP CODES) which relate to a table of English prepositions to be used in the translation. The word format is shown in more detail in Table 7. Specifically one embodiment of this invention was the following in the Case/Prepositional Translation Codes:

(a) Translation of the instrumental if the governing word is in the active voice or if there is no governor.

(b) Translation of the instrumental if the governing word is in the reflexive form (passive voice).

(c) Translation of the dative if the governing word is in the active voice.

(d) Translation of the dative if the governing word is in the reflexive form (passive voice).

(e) Prepositional translation control bytes for ZA, V, VO, S, SO, RADI, PROTIV, PRI, PO,CEREZ, PERED, OT, OKOLO, O, OB, POD, NAD, NA, K, KO, IZ-ZA, IZ, IZO, DO, U.

The fourth and largest subpart of each MASTER STEM DICTIONARY entry contains the target language information such as the Topical Glossary codes, English synthesis codes and the English meaning. Table 8 shows the word format in more detail and indicates:

(a) TG (Topical Glossary code). This code identifies which group of the English meanings is to be used for the technological discipline being translated as the meaning can be considerably different for various types of technical texts. During the translation, multiple Topical Glossary codes may be specified with a preference order for their use and this specification may vary at any point or points in the text.

(b) Target synthesis codes are variable depending on the words involved. By way of example theses codes may include:

(1) Identity of the use of the meaning as a verb, noun, adjective or other

(2) Article usage code

(3) Synthesis code for various forms of the verbs and adjectives and for pluralizing the noun

(4) Specification as to which word in an expression is to be synthesized.

The last part of the grammar portion of each MASTER STEM DICTIONARY entry is called ADDITIONAL VERB STEMS and is present for each verb infinitive and contains a table of all additional forms derived from this infinitive so that these additional stem records may be updated automatically whenever the infinitive is updated. In this manner, it can be assured that all forms of the verb will have the same grammar codes as the infinitive. The format of the ADDITIONAL VERB STEM is shown in more detail in Table 9.

(3) STEM DICTIONARY UPDATING

A Stem Dictionary Coding Sheet has been designed to make possible that any subpart of the grammar section of the dictionary record may be completely revised or to permit that merely an individual bit of information be changed. This is carried out by Transaction Codes specifying the normal data processing updating functions of "add", "delete", "modify" and "replace".

The dictionary coding sheet entries are keypunched and then processed by the computer programs known as DEDIT and DUPDDT (see Table 1) in the updating series which performs editing and formating functions. Since the coding sheet is a general form used for updating all types of dictionary stems, each entry is audited for content and permissible usage with the particular stem being updated. An error list is printed of each deviation and the transaction record is rejected from further processing. Valid transactions are then formated for updating the Master Dictionary.

The valid transactions from the edit program are sorted to a Master Dictionary control sequence (stem and stem number) and matched against the Master File. Upon a match, the Master Dictionary record is disassembled into table area with fixed base locations within the memory of the computer. The Transaction Code of the change entry is examined and the corresponding portion of the dictionary entry is updated. Prior to actual modification of the master record, updating codes, in addition to the transaction code, are examined to insure the validity and accuracy in updating. Any transactions which would result in updating errors are rejected and an Error Listing is prepared.

Since linguistic codes can be developed faster than the Master File format and the programs utilizing the file can be modified, these codes are entered on the General Coding Sheet, but are listed on Future Code Lists. These lists are saved and when the computer system has been modified, the future code lists are reintroduced into the updating process.

Upon completion of updating the master record, it is condensed back into a compact compound variable length record and written out to a new master file. At this time, if the master is a verb infinitive, an updating transaction record is prepared for updating all the additional stem forms of the infinitive. These transactions are sorted to dictionary control sequence and the intermediate new master is read and the updating process is repeated for the additional verb stem modifications. This run produces the final NEW MASTER STEM DICTIONARY.

During the updating run, a printout is provided in which all change transactions are listed by rejection errors, duplicate transactions, and future codes. The MASTER STEM DICTIONARY changes are listed by updated records and deleted records. In addition, a statistical report is prepared giving the counts of updating action, the counts of the different types of stems (full forms, nouns, adjectives, and verbs), and an indication of the length of the longest MASTER STEM DICTIONARY record.

In addition to the listing of dictionary records during the updating process, a separate program is available for listing the entire MASTER STEM DICTIONARY, or selected portions thereof, or particular stem records having certain characteristics. In the latter case, specialized routines with selection criteria can be individually assembled and called by a master dictionary print program through use of processing control cards. The dictionary is printed in characters where words are present and in hexadecimal where bit codes are present.

### (4) MASTER IDIOM/L.S. EXPRESSION DICTIONARY

The Master Idiom/L.S. Expression Dictionary is also maintained on magnetic tape in a compound variable length record format. An example of the format of each entry is shown in Table 10. In one embodiment of the invention, there are 3,279 idioms and 156,134 L.S. expressions in the dictionary. The control portion of the record has a fixed format containing the Russian expression and source language codes. This part is followed by a variable length target language section. Included here are the Topical Glossary Code (TG), English synthesis codes (SYN. CODES) and the TARGET MEANING (or English meaning). Multiple Topical Glossary (TG) entries may be present and each may have multiple English meanings attached.

(a) Russian level source codes include:
(1) Prepositional object
(2) Number object
(3) Prepositional object definite article
(4) Verbal type compound
(5) Direct object
(6) Eliminate preposition
(7) Pronoun
(8) Object case
(b) The TG code and SYN codes are the same as the entries in the MASTER STEM DICTIONARY.

### (5). MASTER IDIOM/L.S. DICTIONARY UPDATING

A separate coding sheet from the stem dictionary coding sheet is utilized to update the Idiom/L.S. Dictionary. Each Topical Glossary target translation record may be updated independently from each other.

EP 0 274 281 B1

These coding sheet entries are keypunched and introduced into the updating process beginning with an Editing and Formating Program. Each coding sheet entry is examined for validity of content and the transaction record is rejected if any invalid codes are present with a listing prepared thereof.

The valid coding sheet transactions are formated into a variable length updating record and written to a separate file. This file is sorted to Master Idiom/L.S. Dictionary sequence and then matched on the Russian expression against the dictionary. Matching entries result in either a deletion or replacement. Unmatching entries result in an addition or error of unmatching deletion. During the updating run, a listing is prepared of all transaction activity by addition, replacement and deletion.

A separate program is also available for printing the entire dictionary, portions thereof and records based on a selection criteria. The latter is effected in the same manner as with the stem dictionary print program.

(6). TRANSLATION DICTIONARIES

The dictionaries actually used during SYNTACTICAL ANALYSIS and SYNTHESIS are created from the tape MASTER STEM DICTIONARY and MASTER IDIOM/L.S. DICTIONARY and are located on disks in various forms of lookup dictionaries. All of the dictionaries are interrelated by disk address pointers and memory offset pointers. Three Operating System Programs available from IBM, known as QSAM, BSAM and BDAM, are utilized to access the various dictionaries. The various dictionaries and the table illustrating the word format of each entry in each dictionary are as follows:

  (a) STEM LOOKUP AND GRAMMAR TRANSLATION DICTIONARIES (Table 11)
  (b) HIGH FREQUENCY WORD AND GRAMMAR DICTIONARIES (Table 12)
  (c) IDIOM CORRESPONDENCE DICTIONARY (Table 13)
  (d) L.S. COMPOUND MASTER DICTIONARY (Table 14)

The STEM LOOKUP AND GRAMMAR TRANSLATION DICTIONARIES (Table 11) are created in two disk files by the DICTLOAD program. Referring to Table 11, the STEM LOOKUP DICTIONARY is composed of the stem part of the Master Stem Dictionary less the stem number (SN) but including the PST (paradigmatic set) codes. Each stem entry also includes the disk address of the grammar part of the dictionary record (GRAM DISK ADDRESS) and the disk address of the L.S. Compound Dictionary record (LS DISK ADDRESS) if this stem can participate as a principal word in an L.S. expression. The entries in the STEM LOOKUP DICTIONARY are arranged alphabetically and into groups by those stems that begin with the same characters. The first stem determines the first unique beginning characters and a new group is started when a shorter stem is encountered or is not equal on the same beginning characters. Access to the STEM LOOKUP DICTIONARY is accomplished with the program called BSAM to efficiently control access to two of these buffer loads simultaneously. The linkage to the GRAMMAR DICTIONARY and L.S. COMPOUND DICTIONARY is realized by relative track address and byte offset utilizing the program called BDAM, thus enabling all grammar and L.S. information to be randomly accessed. Entries in the STEM LOOKUP AND GRAMMAR DICTIONARIES include all MASTER STEM DICTIONARY records except high frequency words. Thus, words forming part of an idiom are included.

The HIGH FREQUENCY WORD AND GRAMMAR DICTIONARIES are created in two disk files by the program HFC (H. F. creation). The high frequency words are selected from the MASTER STEM DICTIONARY and built into sequential fixed length records containing the high frequency source word and a memory offset (GRAM OFFSET) to the corresponding grammar information which is built into variable length records. The entries are arranged alphabetically by high frequency source word. These dictionaries are later accessed sequentially utilizing the program known as QSAM and loaded in their entirety into core memory during the translation run. The GRAMMAR DICTIONARY is a variable length with the GRAMMAR OFFSET key located with each high frequency word item. The HIGH FREQUENCY WORD DICTIONARY is a fixed length table which is scanned in a binary search method during translation processing.

The IDIOM CORRESPONDENCE DICTIONARY is separated in two disk dictionaries composed of the source or Russian idiom expression and the corresponding target or English meaning. The target meaning dictionary includes the field: ENG. OFFSET shown in Table 13. The field ENG. OFFSET is an address off linkage which links the source dictionary part to the target meaning dictionary part. These dictionaries are built in the same computer run that builds the HIGH FREQUENCY WORD DICTIONARY by merging the MASTER STEM and MASTER IDIOM/LS DICTIONARIES selecting high frequency words from the MASTER STEM DICTIONARY and Russian idioms from the MASTER IDIOM/L.S. DICTIONARY. Both files are built as variable length records using the program QSAM and are loaded fully in memory during the translation run. The Russian expressions are located randomly during the translation phase by utilizing binary and sequential searches. The first word of the Russian idiom is located in the HIGH FREQUENCY WORD

16

DICTIONARY. Separate tables for 2nd through 7th possible words in the same idiom are provided. The HIGH FREQUENCY WORD DICTIONARY for the 1st word idiom has a memory offset address (IDIOM OFFSET, table 12) to the second idiom word in the second IDIOM DICTIONARY and the second word has a memory offset address to the third idiom word in the third IDIOM DICTIONARY. Each idiom word in an IDIOM WORD DICTIONARY has a memory offset address to the next idiom word. The words are arranged in the order whereby the longest expression appears first. The corresponding English meaning is located directly with a table byte offset address associated with each Russian idiom.

The L.S. COMPOUND DICTIONARY is created as a randomly accessed file utilizing the program BDAM with a relative track address and byte offset. Six programs are executed to create this dictionary and update the MASTER STEM DICTIONARY with this information. This first four steps (L.S. expression selection and high frequency word lookup, sort, main dictionary lookup and sort), are executed similarly to an actual translation run with the purpose of gathering all L.S. control numbers and grammar information together for each L.S. expression. The following step builds a single L.S. compound record for the principal word of the expression. The principal word is determined by examining the part of speech for each word in the Russian expression. The order for selection is:

(a) Finite verb
(b) Finite auxiliary
(c) Pure noun
(d) Proper noun
(e) Profession or title
(f) Abbreviation
(g) Noun/adjective
(h) Pronoun adjective
(i) Pure adjective
(j) Adverb

High frequency words are eliminated from selection as the principal word. If no principal word is determined by the program, the expression is printed for analysis. These records are then sorted by principal word and a Master Dictionary is created. Each L.S. COMPOUND DICTIONARY record is accessed randomly during translation by relative track address and byte offset information associated with each principal word of the Russian expression. The English meaning of each expression compound is located by a byte displacement address to a table of English meanings included in the variable length compound record. Supplementary and principal word indication records are built and information from them is updated in the MASTER STEM DICTIONARY. Additional forms of the verb are updated in a second pass to produce the final updated version of the MASTER STEM DICTIONARY. The HIGH FREQUENCY and STEM DICTIONARIES are now recreated, reflecting the updated L.S. information and are now ready for translation processing.

Hexadecimal Printout Format

During translation, as the computer analyzes each sentence, it attaches codes to the words to express their interrelationship. On an IBM 360/65 computer system, these codes are expressed using the hexadecimal system. Whenever required, the computer prepared analysis can be printed and a hexadecimal printout is obtained. Table 24 illustrates such a printout. To give a general insight into the content of such a printout, some information is given in the following

1. The subject of the sentence (i.e., its sentence sequence number) is listed at the beginning of each subsentence unit (SSU).

2. The sentence sequence number of the predicate is indicated at the beginning of each subsentence unit (PRED).

3. Each word of the source language is numbered along the left side of Table 24 in the sequence it appears in the sentence.

4. The two pairs of numbers immediately to the right of the sentence sequence number refer to the part of speech (POS) and basic part of speech (BPQ) of the word. 10/10 means that the word is a pure noun; 20/20 is a pure adjective; 40/45 is a finite auxiliary. The assigned part of speech codes are suitable for machine translation purposes and have no necessary correlation to usual grammars.

5. The next word to the right is the word in the source language (i.e. OBYCNYI). In the example given, the word is Russian but transliterated from Cyrillic into the Latin alphabet.

6. Toward the middle of each entry is the translation of the source language word in the target language (i.e. MN - and QUESTIONS). Articles, prepositions, and auxiliaries are inserted, if necessary, before

17

these words depending on the internal analysis.

The 160 bytes of information after each word are expressed in hexadecimal. Each two digits represent a full byte of information, while one of the pair represents half a byte of information. In order to aid in the location of a particular byte, there are numbers placed among the bytes to act as reference points. These are three digit numbers followed by a dash. In the example, 008- locates byte 8 for the word OBYCNYI, which means that the next pair of digits, i.e. 20, are byte 8. So if, for instance, one were searching for byte 59 for the word OBYCNYI in the example, one would scan the hexadecimal printout for a number close to 59, in this case 056-, and count over to the third pair of digits, i.e. to digits 01.

In some bytes, the number may be symbolic of a certain condition, for instance, an 08 in byte 50 means that the word must be the object of a preposition. The numbers are written in hexadecimal, that is, an alpha-numeric system with a base of 16. The maximum amount that can be written into one byte is FF hexadecimal, i.e. 255 decimal.

7. Byte 008 is a reference number which aids in the quick location of bytes.

8. TG-O is the Topical Glossary subject field of the translated word.

9. The eight digit (four bytes) following TG-(i.e. 92000104 for OBYCNYI) contain information about the synthesis of the target word (e.g. articles to be inserted, pluralization, etc.).

10. The end of the line following TG- (i.e. ORDINARY for OBYCNYI) is the word or words in the target language from which the translation is obtained. An adjustment is made in the actual translation for tense, etc., and, if the word is a verbal form, the reflexive translation may also be listed here.

C. Example of Operation of SYSTRAN While Translating Between Russian Source and English Target Languages

SYSTRAN translation capabilities can be demonstrated through the use of different pairs of languages. The following illustration uses Russian as the source language and English as the target language. A description is given of how the original Russian text is received, how it is read in the computer, and the operations necessary to achieve the final translation.

The selection of the computer for machine translation system is based on its universality. Due to hardware limitations, any large-scale translation system must be written in a language closest to that of the computer. The Russian text to be translated is first typewritten on the IBM magnetic tape Selectric typewriter and recorded in the MTST code on magnetic tape. The information from the MTST tapes is converted and placed onto magnetic tapes which can be read directly by an IBM 360/65 (see Fig. 1). The principles of the applied logic within the translation system could be put into operation on any 3rd generation computer, but it should be reprogrammed in the closest computer language for the particular hardware utilized.

The Russian text recorded in MTST code on tape is translated to IBM 360/65 coded format and recorded on magnetic tape by the Model 9209 converter, manufactured and sold by Litton Systems, Inc. The converter is described in Technical Bulletin TB(S) 69/0001/00C dated January 30, 1970 which is incorporated herein by reference.

The Russian text to be used as an example is taken from a Russian text appearing in Cyrillic characters in the journal NAUCNOTEXNICESKAIA INFORMATSIIA (Nov. 6, 1970) entitled "The Evaluation of the Quality of Automatic Translation". By way of example, the steps of translation are given for the fifth sentence of the last paragraph on page 32 of the text.

Fig. 4 illustrates schematically what takes place in the high speed core of the computer at the time the fifth sentence is being read in. For purposes of explanation, the Russian text in MTST coded characters are schematically illustrated in the upper left hand corner of Fig. 1 on magnetic tape 10a. The complete Russian text is actually magnetically recorded on magnetic tape 10a and a conventional magnetic tape transport 10 used in the IBM 360/65 computer system serially reads the text presenting the text for storage in a core memory 12 which also forms a part of the IBM 360/65 computer system. The MTST program accomplishes this operation. The words of the sentence in core memory 12 are illustrated schematically to the left one by one. A continuation is expressed by three dots and the period is the last word. At that time, the core memory already contains three dictionaries read beforehand by the LOADTXT program from disk file 14. The three dictionaries are the HIGH FREQUENCY WORD DICTIONARY, the RUSSIAN IDIOM CORRESPONDENCE DICTIONARY and the ENGLISH MEANING DICTIONARY. The ENGLISH MEANING DICTIONARY contains the English Language equivalent(s) for the Russian idioms. All three dictionaries change if the source and target languages change, but the same program, namely, LOADTXT, reads them in and arranges them for the purposes of text processing at the beginning of the translation. Usually during translation, a whole text is read into the computer in one pass. A single sentence was used for illustrative purposes only.

The HIGH FREQUENCY WORD DICTIONARY contains high frequency words as well as first words of idioms. These words are arranged in alphabetic sequence to make core binary search possible.

The Russian IDIOM CORRESPONDENCE DICTIONARY contains idiom tables arranged according to the second and following words of an idiom. Each time a match has been achieved with a word which may function as the first word of an idiom, possible second words to that idiom are matched with following text words.

The ENGLISH MEANING DICTIONARY contains the English equivalents to the idiomatic expressions. The program LOADTXT scans the Russian source text comparing each word for equality with the HF WORD entries in the HIGH FREQUENCY WORD DICTIONARY (see Table 12). When the first word of an idiom is found, the second and subsequent words of idiomatic phrases in the second and subsequent IDIOM DICTIONARIES are compared with subsequent words in the Russian source text. Whenever a complete match has been achieved between sequences of Russian source words and all words for one complete idiomatic phrase in IDIOM DICTIONARIES of the IDIOM CORRESPONDENCE DICTIONARY, the address offset with the last word of the idiom is used to obtain the English equivalent of the idiom is taken from the ENGLISH MEANING DICTIONARY and is attached to the first word of the idiom. A typical selection of the HIGH FREQUENCY WORD DICTIONARY is shown in Table 16. From the selected sentence, the Russian word KOTORYE appears in the H.F. table. As can be seen, most of the forms which can be derived from the Russian stem KOTOR appear as high frequency words. This is due to the fact that these words occur quite frequently in Russian texts introducing qualifying subordinate clauses. All of the words of a text, in this case, of the selected sentence, which were found in the HIGH FREQUENCY WORD DICTIONARY are supplied with a so-called "grammar offset". During the translation phase, the GRAMMAR DICTIONARY (see Fig. 4) is kept in the high speed core memory 12 and contains total grammar and target meaning information for the high frequency words. The grammar offset determines how far such grammatical and target meaning information is from a common reference point (i.e. from the beginning of the table) and in this sense can be referred to as an address linkage.

First words of idioms are indicated in the HIGH FREQUENCY WORD DICTIONARY by special codes in the field named IDIOM OFFSET which is monitored by the LOADTXT program. Whenever the LOADTXT program detects an idiom, the meaning of the idiom is located and is attached to the first word. The LOADTXT program puts text words for which a match has been achieved either as an idiom or as a high frequency word, in a high frequency file on a magnetic tape. All the words for which no match has been achieved are put in a low frequency file.

An idiom in the SYSTRAN System can serve syntactic purposes. The two words "NAPRIMER," (NAPRIMER and the following comma) have been entered as an idiom with the purpose to eliminate the comma from considerations during the syntactic analysis phase, thus assuring the correct location of subject and predicate. It should be noted here that in spite of the fact that a word participates in an idiom, if it is not a member of a high frequency word table, it still undergoes a regular dictionary lookup. As a result, it is written into the so-called "low frequency" file. Although T. and P. together with the conjunction "I" form an idiom, they still undergo their individual dictionary lookup later, due to the fact that they are not members of the high frequency table.

A typical page of the IDIOM CORRESPONDENCE DICTIONARY is illustrated in Table 17. The idiom I.T.P. occurs as the ninth idiom. The listing of this page illustrates how the idioms are being kept for reference and update purposes. At the beginning of each translation, a program places the words of all idioms into tables. The first word of every idiom is merged with the HIGH FREQUENCY WORD DICTIONARY, consecutive words are arranged in separate tables (i.e. 2nd, 3rd . . . 7th IDIOM CORRESPONDENCE DICTIONARIES) and the meanings are placed into the MEANING FILE.

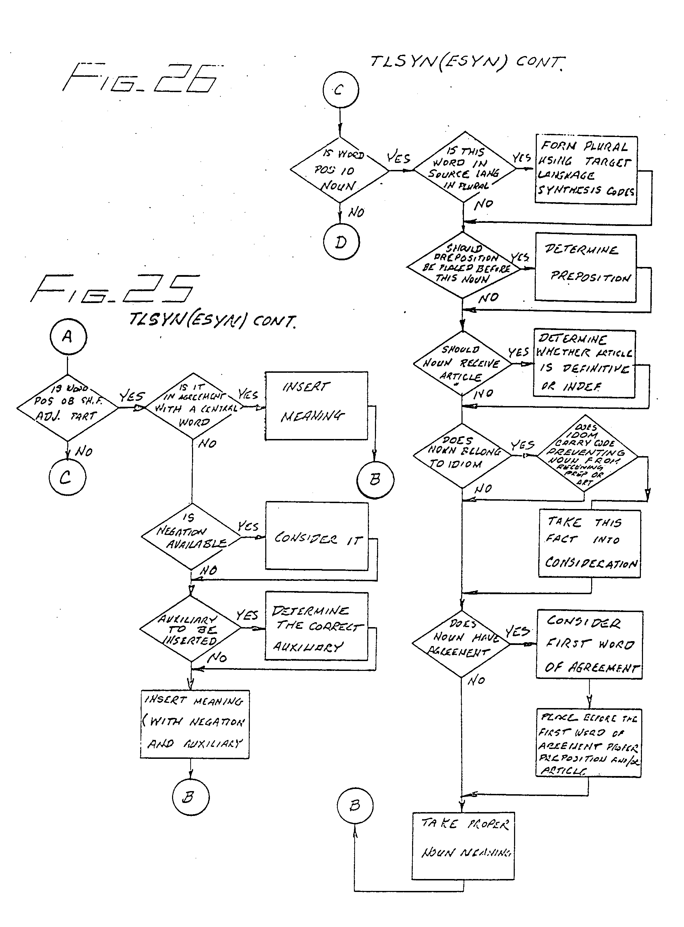

Fig. 5 graphically illustrates the sequence of operation involved in the main dictionary lookup and the type of procedures that take place in the high speed core memory at that time. As mentioned before, all the words which are not found in the HIGH FREQUENCY WORD DICTIONARY are put into a so-called "low frequency" file which was recorded on magnetic tapes. Subsequently, these words are alphabetically sorted and attached with a serial number code identifying their order in the original Russian source text. The words are brought in now in alphabetic sequence into the high speed core memory 12 to undergo the main dictionary lookup.

During main dictionary lookup, the STEM LOOKUP DICTIONARY is used. The dictionary is in the same alphabetic sequence that the text words in the LOW FREQUENCY FILE were sorted into. The dictionary encompasses all the words in the source language and associated with each word grammar codes and meanings in several subject fields are attached. In the case of those languages which are highly inflected, like Russian, the dictionary contains mostly stems and hence the same STEM LOOKUP DICTIONARY.

During the dictionary lookup, a stem and ending analysis takes place and on the basis of such an analysis, additional grammatical information is obtained. Referring to Fig. 5, the first word of the sentence being used as the illustration appears in alphabetic sequence is OBYCNYI.

The illustration shows how this word is matched with the dictionary entry. A portion of the dictionary is presented with the dictionary codes presently available. The dictionary contains OBYCN indicating that this is an adjective and has declensional pattern 197, and also the code "PS" in field L.S. shown in Table 4 indicates that it can be a principal word and a supplementary word of a compound. The word in question has a general meaning "usual". General meaning is given by the fact that after PS there is a zero (0) which means "general glossary". A one (1) means "physics glossary", and a three (3) means "computer glossary". The meanings are "usual", "usual" and "ordinary". Also illustrated here is another entry from the dictionary which, immediately following the word OBCYNO, is in the adverbial from which the meaning "usually".

During dictionary lookup, the program MDL first attempts to match the full word with a dictionary entry. If unsuccessful, then one letter is dropped and comparison is reattempted. If unsuccessful, then a second letter is dropped, and at that point, a match is obtained with OBYCN.

At this juncture, on the basis of the morphological code 197, the routine SYSNOUN within MDL compares the chopped off endings with all allowable endings which may follow this stem to decide a certain form. In this case, the ending is YI, which means that the stem form functions here as nominative singular masculine. The ending A4 would have been nominative singular feminine. OE would have been nominative neuter singular. OGO would have been genitive masculine or neuter singular, and also accusative if it refers to an animate being, etc. In addition to obtaining the grammatical codes from the dictionary during dictionary lookup, the operation attaches all other codes from the dictionary (Preposition, Case, Translation, etc.) as well as meanings with synthesis code to the word.

The next text word would be PEREVOD. The illustration presents all the codes and meanings that are attached to PEREVOD in the dictionary and also signifies that PEREVOD has been entered with paradigmatic set number 044. This number indicates that the possible endings that can be attached to this word are A, U, OM, and E in singular, and Y, OV, AM, Y, AMI and AX in plural. After the paradigmatic code number 044, a Russian word appears which indicates an example of the type of declension that may take place with 044.

Note that NOV (appearing at mid-page) carries code number 197, the same code number which is attached to OBYCN. This identical numbering means that both words have the same declension pattern. Such a coding system facilitates the work of the native Russians who are continually adding new words to the low frequency dictionary.

During MAIN DICTIONARY LOOKUP, all the words receive grammatical and target meaning information (with synthesis codes) for all those subject fields in which the words may function with different meanings.

After such a lookup, a sort program sorts the words again into original text sequence using the attached serial number and stores them on tape or disk in a sorted low frequency file. The sorted words are then brought back into the core memory 12 in two files. One is the HIGH FREQUENCY FILE and the other is the RESTORED LOW FREQUENCY FILE.

The computer program GETSENTN now merges the words from the two files and for each sentence in the computer memory a so-called analysis area is set up where the sentence can be syntactically analyzed resulting in a computer intermediate language which expresses structure and semantic functions of all the words in the sentence and their syntactic interconnections.

Fig. 6 illustrates schematically that the program LSLOOKUP (LSLU) determines the first two words of the sentence to be a Limited Semantic (L.S.) compound, and the meaning "human translation" was attached instead of "usual" or "ordinary translation".

On the top of the Figure, the first three words of the sentence appear. At this time, the program LSLU reads into the core memory 12 from disk 14 the portions of the LIMITED SEMANTICS DICTIONARY which are relevant to the principal word of this compound, which is PEREVOD. Every expression for which the word PEREVOD (translation "transfer") functions as a principal word is being read into the high speed core memory. A list of entries appears on the bottom left and right sides of the page. The left group contains those LIMITED SEMANTICS DICTIONARY entries where the word PEREVOD appears at the beginning, and the right side contains a few entries where the word PEREVOD appears as a second word preceded by an adjective. The particular matching compound is encircled. The word OBYCN carries an indication (L.S. II) that it may participate in a LIMITED SEMANTICS compound. The LIMITED SEMANTICS record of the word PEREVOD is arranged in a way that first all the compounds are listed where this principal word is the first word then all those where it is the second, third, fourth, and so on. The compound shown here has been located among those expressions where the word PEREVOD functions as the second word of a compound and there is no third member. The reflexive indicator in the second line applies in only those instances when the principal word is a verb, so it can be disregarded in this case. In the comparison area in the high speed core memory (shown) the compounds were looked up belonging to PEREVOD where PEREVOD is the second word of a compound. The LIMITED SEMANTICS numbers L.S. #A23 and L.S. #B39 are attached to the words OBYCN and PEREVOD by the programs CLS1, CLS2 and CLS3 during the creation of the L.S. DICTIONARY FILE. The program LSLU detects the LIMITED SEMANTICS words and compares the L.S. numbers against the LIMITED SEMANTICS entries for PEREVOD. Finding a match between the numbers A23 and B39 attached to PEREVOD and between these same numbers as they occur after dictionary lookup attached to the words in the sentence, this compound is translated by LSLU as "human translation".

The actual L.S. numbers are sequentially assigned each time a new L.S. compound dictionary is generated. They are unique numbers and each word can have only one such number. The numbers are arranged in exactly the same sequence as the words appear in the compounds. A program organizes different groups according to the position of the principal word. Such organization is taken into account during the L.S. lookup. As far as this sentence is concerned, only the first two words have been located as an L.S. compound, and in the hexadecimal printout which illustrates the generated computer intermediate language there is a corresponding mark indicating that these words form a compound.

Table 18 illustrates a typical page from the listings of LIMITED SEMANTICS compounds. The listings correspond to the arrangement where these compounds are kept on magnetic tapes for update purposes. In order to use the listings during translation, a special program arranges them on disks, assigns each participating word an L.S. number, locates the principal word and sets up an actual direct sub-system of compounds in the source language which is used by the translation system.

Table 24 is a reproduction of a computer printout which illustrates the analysis area in the computer core memory at the time the sentence is analyzed. On the top of the page, the parameter information appears as an exact duplication of the instructions that the system received before being called upon to carry out the translation. It contains those parameters under which the translation should be carried out. Its appearance or for reference so that when desired, the analyst should be able to locate the conditions under which the System carried out the translation and instructions the System used to carry out the translation. The parameter information is explained later.

The STRPASS programs generate syntactic codes to express the interconnections between words in a sentence. The following describes the most important of the codes generated by STRPASSES for the first eight words of the example Russian sentence shown in Figure 4.

Byte 111 of the first word contains the sequence number i.e. 02 of the subject of the first sentence unit, and byte 108 contains similar information i.e. 03 of the graduate for the first sentence unit (main clause). These two informations also appear printed separately on the top left side of the Table 24.

Byte 16 of the first word contains the sentence sequence number of the second word (02). This information in this byte expresses the fact that the first word belongs to the second word in an agreement relationship, and the second word is the principal word of the syntactic unit. It can also be said that the first word "points" or is linked to the second word in byte 16.

Byte 26 of the second word points to the first word of the source text indicating that the first word of this agreement relationship is the first word of the sentence.

Byte 21 of the third word, MOJET, points to word 04. The 21-31 relationship expresses an infinitive government structure, i.e., the word which governs the infinitive contains the sentence sequence number of the infinitive (03) in byte 21, while the infinitive contains the sentence sequence number of its governor in byte 31.

Byte 18 of word 04, OBLADAT6, points to the word 05, MASSO1, expressing that the latter is the direct object of OBLADAT6. Byte 28 of MASSO1 points back to word 04, OBLADAT6, expressing the direct object dependency relationship.

Byte 20 of MASSO1 points to word 06, NEDOSTATKOV, and byte 30 of NEDOSTATKOV points back to word 05, MASSO1. These codes express adnominal genitive relationship.

The comma, word 07, had 'FF' in byte 51, expressing that it is making a sentence cut.

The first seven words in the sentence contain 'FI' in byte 140. This 'FI' means that they belong to a main clause. Starting with word 08, the FI changes to 01, a signalling that a qualifying clause begins.

The qualifying clause initiator KOTORYE contains 06 in byte 52, which means that it refers to the sixth word in the sentence, i.e., to the word NEDOSTATKOV. NEDOSTATKOV contains 08 in byte 52, pointing to KOTORYE.

Word OF is an opening parenthesis (part of speech DO).

All the words which belong to the sentence unit surrounded by parentheses are marked with '50' in byte 148.

The SYSTRAN Dictionaries contain both slashed and single meanings. Sometimes the person who reads the translation prefers two meanings separated by slashes, in the case of multiple meanings. Others prefer the closest possible meaning. The parameter slash indicates to the System that slashed entries should be printed. In the absence of this parameter, each time a slashed entry occurs in the target language, the meaning which most closely reflects the real meaning of the source language is printed.

The parameter entry W indicates that during the translation process, the console typewriter should indicate each time 50 sentences have been translated.

The asterisks indicate the facility to insert additional programs for special printouts, diagnostics, etc. G stands for GETSENTN (get sentence). The syntactic passes 0-4 are denoted by their respective numbers - 0, 1, 2, 3, 4. L is the L.S. program. X means Lexical Routines. P represents prepositions, R - rearrangement, E English synthesis, or the synthesis into whatever target language it takes place, D - diagnostics, P- print, and L - Syntactic level program which is only at the end because it was added at a later stage to the system.

Next to the parameter information is the date when the translation was carried out followed by an indication as to which topical glossary had preference during translation. Should no meaning be available in the indicated glossaries, general meanings are used. The sentence sequence number in the translation is next followed by the page number indexing each particular sentence. On the following line, SSU means the subsentence unit. The subsentence units are established during various levels in the analysis phase. Each subsentence unit should have a predicate and a subject if the predicate is not impersonal. The sentence sequence number of the subject and predicate is printed next to the SSU indication. Each time a new subsentence unit begins, there is a new SSU print.

Preceding each source language word is a sentence sequence number. On this same line appear the primary and secondary parts of speed followed by the source language word as it appeared in the input.

Primary parts of speech (POS) broadly reflect the parts of speech function of the word while the secondary POS further specifies such function. Primary POS's have been selected to enable automatic branching and consequently immediate entering of the routines controlled by the parts of speech.

Next is a target language meaning and an indication whether the particular word under consideration functioned as a member of a compound or a member of an idiom. Also between the source language print and the meaning, certain symbolic letters may appear indicating the lexical subroutine which was called upon during the translation of this word. Such lexical routines are arranged on the basis of their symbolic notation in a binary table and each time a particular word occurs which carries an indication that its translation may require a lexical routine a binary search is carried out among the lexical routines to establish which routine should go into effect.

The 160 bytes appearing after each word which is analyzed for translation purposes is a unique SYSTRAN feature. These bytes contain compressed dictionary information, addresses to additional information, and,as a result of the analysis, coded information which reflects the syntactic and semantic interconnections of all words in the sentence. The information placed in these bytes by sequences of programs can also be regarded as a computer intermediate language which analyzed the sentence to such degree that automatic translation of the sentence can be carried out.

The condensed dictionary information, as well as the variable length information which is crossreferenced from the bytes area, is attached to the individual words either as a result of the dictionary lookup or, if the entry was a high frequency word, the displacement was used to retrieve and attach the information from the high frequency grammar and meaning table at the time when the analysis area was set up for the particular sentence.

Table 19 gives a resume of all the information possible in the 160 bytes of the analysis area shown in Appendix A. Tables 20 and 21 show the codes for the primary and secondary parts of speech.

It should be noted here that some modifications take place whenever the part of speech approach is applied to other source languages, although the basic semantic characteristics of the speech structure is used consistently. For example, the Russian qualifying clause initiator KOTORYE carries a particular part of speech code - 7C. The same 7C is being applied in every source language which has a corresponding clause initiator. The same approach is used for other clause initiators, for certain types of adverbs, etc.

The contents of the 160 bytes is exhaustive. Additional information, available on the basis of various addresses in the byte fields, is printed after the 160th byte. Such information is, for example, the C/P (case preposition) information which is case translation applicable in the case of those languages which are highly inflected and the words function in different cases. Such cases are translated into the target language by different prepositions which are indicated in the C/P field. In addition, particular source language prepositions must be translated in different ways depending upon what type of codes are attached to the individual words for the translation of prepositions. Word 02 PEREVOD carries the preposition code 14 (in the English Preposition Table, Table 15 ) for the Russian preposition PRI, meaning that should this word be governed by the Russian preposition PRI, then the translation should be DURING. The same Russian word may also strongly govern the Russian preposition NA (22 on the English Preposition Table) indicating that if PEREVOD governs NA and NA governs in accusative, the translation should be INTO. The last line contains target meaning information and synthesis codes.

The first word in the sentence, the adjective OBYCNY1, for example, has 90 in the first byte. This indication is made up of the target language part of speech indication (DPQ), which is 80 for adjectives. Added to this is 10, which indicates that AN is used to modify this adjective, since it begins with a vowel. Byte 2 is not used for adjectives at the present time. Byte 3 indicates which word is to be synthesized. In this case, since there is only one word in the English meaning, the number 1 has been placed there. Byte 4 contains the comparative and superlative codes for the adjective. In this case, one can say "more ordinary" or "most ordinary" rather than adding the endings "er" and "est" as, for instance, one would for "black".

The noun PEREVOD, the second word in Byte 1, has 40 indicating the DPQ for nouns. 10 was not added here since the noun does not begin with a vowel. If it had begun with a vowel, a 50 would have been indicated. Byte 2 holds the code for articles. Byte 3 contains the sequence number of the word to be synthesized. In this case, the second word changes. The 04 in Byte 4 indicates that the plural of the noun is made by adding "s".

The verb OBLADAT6 (fourth word) had CO in Byte 1, which, again is the DPQ of the word. 10 also would have been added if the verb in the English has a vowel beginning. This is used for the participles which are generated from the verb and which may require articles. Also indicated in this byte is the sequence number of the word to be synthesized. It may be left out, as here, if only one word appears in the English meaning. Byte 2 has a code if there is a different meaning in the English for the reflexive form of the verb. Byte 3 contains the code reflecting the choice of translation in English for the verb if it appears in the reflexive in Russian. Byte 4 indicates the conjugation pattern of the verb.

The computer prepared intermediate language, expressed symbolically in the bytes area, makes it possible for a synthesis program to carry out the actual translation. All the computer generated codes as well as target language requirements are taken into consideration during the final translation process. Words are placed into the required form, phrases are built up, and the word order is determined based on the requirements of the target language. If the target language has articles (i.e. English) definite and indefinite articles are placed before noun phrases whenever required. The multiple meaning problems are handled on four levels: idioms, L.S. compounds, lexical routines, and generalized routines to resolve semantic problems. These routines consider the influence of semantic categories within defined syntactic relationships. To words with multiple meanings, generalized routines are attached. They should be interrogated in a sequence as they follow each other.

## MEMORY SWITCHES

STRPASS 1 is the most important syntactic pass through the sentence. The program carries out its operation right to left and "remembers" the various conditions with the help of so-called memory switches. These switches are set to remember the types of words that have been encountered previously, and to indicate to the program the type of decision to be made at individual words. Routines are initiated by the parts of speech. The remembering is carried out on the basis of the types of words encountered. Certain words "clear" all these switches, i.e., they signify certain breaks in the sentence in regard to syntactic interconnections.

Table 25 illustrates the sequence with which the switches are set for this analysis field illustrated in Table 24, for the example Russian sentence. Each word in the example is indicated by its sentence sequence number shown to the left in Table 24. After the sentence sequence number all those switches which were "on" at the time the word was analyzed by the program of stress 1, are printed with their sylic names.

At the time words 1D and 1C are encountered, switches are not yet set.

When 1B is analyzed, the NSW (noun switch) is set by 1C. This is how "P." is remembered.

At word 1A, the reserve noun switch (RNS) is set with word 1C.

At word 19, only the ILI switch is set. This switch was set by the Russian conjunction I at the same time the reserve noun switch was cleared.

At word 18, it can be seen that the noun switch was set with word 19, and that the ILI switch is still on.

At the time word 17 is reached, the noun switch (NSW) and the left agreement unloading switch (LAG) are set, indicating that an agreement relationship started, i.e., word 18 modifies word 19. (After it is established that the preposition (word 17) governs the noun (word 19), both NSW and LAG are cleared).

Word 16 sets the NSW.

The next noun, word 15, causes the noun switch set by word 16, to become a reserve noun switch, while the noun switch is then set by word 15.

Word 14 will be recognized as modifying word 15, and consequently the LAG switch will be set.

When a new noun (word 13) is encountered, the previous noun switch will become a reserve noun switch, and the left agreement unloading switch (LAG) will become a reserve left agreement unloading switch (RLA).

At word 11, the RNS will be set by word 13 since a new noun (word 12) has been encountered. This noun will not set a new switch since it is preceded by a comma, which prevents immediate syntactic relationships to the left. The comma has cleared the reserve noun and reserve left agreement unloading switches, and set the comma switch (COM).

The beginning parentheses, part of speech, OF clears all the switches.

New switches are set with words OE and OD. (NSW, LAG). Afater finding that word OC governs OE, and that word OD is in agreement with OE, these switches are cleared.

Word OB, being an infinitive, sets the infinitive (INF) and verb form (VER) switches. After it is established that OA governs the infinitive, only the verb form switch remains.

Due to its particular function, the word KOTORYE sets the NSW. The comma before KOTORYE clears all the switches, and when the word NEDOSTATKOV (06) is encountered, only the comma switch is set. Word 06 sets the noun switch. This switch was changed to the reserve noun switch when word 05, MASSO1, was encountered.

After it is established that word 04 governs the noun switch, such switch is cleared. Word 04 sets the INF switch, which is in turn cleared after it has been established that word 03 governs 04. At that point, only the verb switch and comma switch are set.

Word 02 sets the noun switch, and word 01 the LAG switch. These switches are still on when the beginning of the sentence, i.e., a first zero word (dummy word) is encountered. It should be noted that only by having a word area (160 bytes) cleared and considered before every sentence can it be assured that indications about the status of the first word can be given, and that looping operations can begin with the first word.

The final English target language translation of the Russian source language text shown in Fig. 4 is shown in Table 23.

In addition to the uniqueness of the translation approach, special MACRO instructions were developed to facilitate a more direct communication with the computer. The advantage of these special instructions, expressly developed for machine translation purposes over other computer languages is, that they consider the direct requirements of natural language translation. The MACRO instructions are converted using a special MACRO assembly and this assembly at the same time eliminates most of the coding errors. In the following, the MACRO instructions inherent to the SYSTRAN System are listed with a brief description of their function.

CMPWC - Compare beginning characters of the source language and branch under certain conditions.

CMPWD - Compare source word and branch if certain conditions are met.

CMPWE - Compare the end characters of the source language and branch under certain conditions.

CMPWP - Compare a word pointer (address indication) with another pointer in the sentence.

DICTM - Put in a special meaning or any word overruling any other dictionary meaning.

GOTO - Branch to another location.

IFOFF - Test a switch and branch if off.

IFON - Test a switch and branch if on.

MVEHM - Move the analysis area of a homograph word to replace the analysis area of a word in the original sentence sequence.

SCANL/SCANR - Scan left or right in the sentence, within sentence or subsentence boundaries looking for certain grammar codes, words or any other information pertinent to the translation program. The scan also allows the jumping of words, phrases or clauses.

SETBN - Set a bit on (Indicate certain information in the most economic way).

SETBF - Turn off the information set on.

SETBM - Merge the information in 16 bits (2 bytes).

SETCH - Set a character equal to the value of another character.

SETMA - Set a meaning to appear after the main meaning of a word.

SETMB - Set a meaning to appear before the main meaning of a word.

SETM - Set the main meaning of a word and mark it translated.

SETMT - Make the source word equal to the target meaning.

SETTR - Mark a word translated.

SETWI - Set indicator equal to sentence sequence number of a word pointed to by a word pointer.

SETWP - Set a word pointer to a specified word or dictionary meaning entry.

SMSG - Provide a snap dump of the analysis area preceded by an identifying message.

SWOFF - Set a memory switch off.

SWON - Set a memory switch on.

TESTB - Test a set of bits relative to another set of bits and branch if the condition is satisfied.

TESTX - Test contents of a series of bits or test character relative to another test character.

The modularity of the translation system enables the inclusion of more MACRO instructions as the necessity during the processing of natural languages arises.

## TABLE 1

### LIST OF COMPUTER PROGRAMS USED IN SYSTRAN

#### DESCRIPTION

#### TRANSLATION PROGRAMS

| Name | Description | Fig. No. For Flow Chart | Appendix Showing Listing |
|---|---|---|---|
| MTST | MT/ST text edit and conversion | | F |
| LOADTXT | Initial text scan for high frequency words and idioms | 7 | G |
| MDL | Main dictionary lookup of low frequency words | 8 | H |
| RUMO | RMD word ending analysis program | 34 | I |
| SYSNOUN | SYSTRAN noun/adjective word ending analysis program | 35 | J |
| SYSVERB | SYSTRAN verb word ending analysis program | 36 | K |
| INITCALL | Translation control sequencing | 9 | L |
| GETSENTN | Analysis area creation | 10 | M |
| STRPASS0 | Structural analysis pass 0 | 11 | N |
| STRPASS1 | Structural analysis pass 1 | 12-15 | O |
| STRPASS2 | Structural analysis pass 2 | 16 | P |
| STRPASS3 | Structural analysis pass 3 | 17 | Q |
| STRPASS4 | Structural analysis pass 4 | 18 | R |
| LSLOOKUP | L.S. compound analysis | | S |
| LEXICAL | Multiple meaning analysis on the basis of environment | 20 | T |

26

| Name | Description | Fig. No. For Flow Chart | Appendix Showing Listing |
|------|-------------|-------------------------|--------------------------|
| SEMANTIC | Generalized multiple meaning resolution program | 21 | |
| PREPTR | Preposition translation | 19 | U |
| REARR | Rearrangement | | W |
| TLSYN (ESYN) | Target language synthesis (English synthesis, translation) | 24-33 | X |
| PPRINT | Diagnostic print program | 23 | Y |
| TRPRINT | Translation print program | | Z |

DICTIONARY UPDATING PROGRAMS

| | | | |
|------|-------------|--|----|
| DEDIT | Stem entry edit | | JJ |
| DUPDT | Stem dictionary update | | A |
| AVSPASS | Additional verb stem update | | NN |
| HFC | High frequency dictionary creation | | II |
| DICTLOAD (DISKLOAD) | Main dictionary load | | KK |
| IEDIT | Idiom/L.S. entry edit | | B |
| IUPDT | Idiom/L.S. dictionary update | | D |
| CLS1 | L.S. expression scan for high frequency words | | |
| CLS2 | L.S. main dictionary lookup for low frequency words | | |
| CLS3 | L.S. compound creation | | DD |
| CLS4 | L.S. dictionary creation | | EE |
| DUPDTLS | Update L.S. information in stem dictionary | | FF |
| DPRINT | Print stem dictionary | | LL |

| Name | Description | Fig. No. For Flow Chart | Appendix Showing Listing |
|---|---|---|---|
| IPRINT | Print idiom/L.S. dictionary | | C |
| TGPRT | Print stem topical glossaries | | MM |
| DISPLAY | | | AA |
| LEVELS | | | BB |
| LEXICAL ROUTINES | | | CC |
| MACROS | | | GG |
| PROJ3 | | | HH |

28

## TABLE 2-A

Verb RTN-A (Non-refl. or refl. & IVB = 1)

| | Tense | Aspect | Person | Number | Cond. | Quest. | Neg. | Refl. | Aux. 1 | Pron. A | Aux. 2 | Neg. | Aux. 3 | Verbal Form |
|---|---|---|---|---|---|---|---|---|---|---|---|---|---|---|
| 1 | PR | I | 3 | 1 | | N | N | | | T | | | | 2 |
| 2 | PR | I | 3 | 1 | | N | Y | | | T | 7 | Y | | 1 |
| 3 | PR | I | 3 | 1 | | Y | | | 7 | T | | T | | 1 |
| 4 | PR | I | | | | N | N | | | T | | | | 1 |
| 5 | PR | I | | | | N | Y | | | T | 16 | Y | | 1 |
| 6 | PR | I | | | | Y | | | 16 | T | | T | | 1 |
| 7 | PR | P | | | | N | | | | T | 10 | T | | 1 |
| 8 | PR | P | | | | Y | | | 10 | T | | T | | 1 |
| 9 | PA | | | | N | N | N | N | | T | | | | 3 |
| 10 | PA | | | | N | N | Y | N | | T | 8 | Y | | 1 |
| 11 | PA | | | | N | Y | | N | 8 | T | | T | | 1 |
| 12 | PA | | | | Y | N | | | | T | 11 | T | | 1 |
| 13 | PA | | | | Y | Y | | | 11 | T | | T | | 1 |
| 14 | | | | | | | N | | | | | | | 1 |
| 15 | | | | | | | Y | | | | 7 | Y | | 1 |
| 16 | PA | | | | N | N | N | Y | | T | 5 | | | 4 |
| 17 | PA | | | | N | N | Y | Y | | T | 5 | Y | | 1 |
| 18 | PA | | | | N | Y | | Y | 5 | T | | T | | 1 |

Note: If B105 = 80 ∅ , consider 3S

If B105 = 40 ∅ , consider not 3S

29

## TABLE 2-B

Verb RTN-B (Refl. IVB = 0 or 2 + Subj. Human)

| | Tense | Aspect | Person | Number | Cond. | Quest. | Neg. | Aux. 1 | Pron. A | Aux. 2 | Neg. | Aux. 3 | Verbal Form | Refl. Pr. |
|---|---|---|---|---|---|---|---|---|---|---|---|---|---|---|
| 1 | PR | I | 3 | 1 | | N | N | | T | | | | 2 | Y |
| 2 | PR | I | 3 | 1 | | N | Y | | T | 7 | Y | | 1 | Y |
| 3 | PR | I | 3 | 1 | | Y | | 7 | T | | T | | 1 | Y |
| 4 | PR | I | | | | N | N | | T | | | | 1 | Y |
| 5 | PR | I | | | | N | Y | | T | 16 | Y | | 1 | Y |
| 6 | PR | | | | | Y | | 16 | T | | T | | 1 | Y |
| 7 | PR | P | | | | N | | | T | 10 | T | | 1 | Y |
| 8 | PR | P | | | | Y | | 10 | T | | T | | 1 | Y |
| 9 | PA | | | | N | N | N | | T | | | | 3 | Y |
| 10 | PA | | | | N | N | Y | | T | 8 | Y | | 1 | Y |
| 11 | PA | | | | N | Y | | 8 | T | | T | | 1 | Y |
| 12 | PA | | | | Y | N | | | T | 11 | T | | 1 | Y |
| 13 | PA | | | | Y | Y | | 11 | T | | T | | 1 | Y |
| 14 | | | | | | | N | | | | | | 1 | Y |
| 15 | | | | | | | Y | | | 7 | Y | | 1 | Y |

Note: If B105 = 80 $\phi$ , consider 3S

If B105 = 40 $\phi$ , consider not 3S

Vert RTN-C (Refl. & IVB =3 or IVB =2 & Subj. ∮ ɛ human)

| | Tense | Aspect | Person | Number | Cond. | Quest. | Neg. | Aux. 1 | Pron. A | Aux. 2 | Neg. | Aux. 3 | Verbal Form |
|---|---|---|---|---|---|---|---|---|---|---|---|---|---|
| 1. | PR | I | 3 | | | N | | | T | 4 | T | | 4 |
| 2 | PR | I | 3 | | | Y | | 4 | T | | T | | 4 |
| 3 | PR | I | 1 | 1 | | N | | | T | 12 | T | | 4 |
| 4 | PR | I | 1 | 1 | | Y | | 12 | T | | T | | 4 |
| 5 | PR | I | | | | N | | | T | 13 | T | | 4 |
| 6 | PR | I | | | | Y | | 13 | T | | T | | 4 |
| 7 | PR | P | | | | N | | | T | 10 | T | 15 | 4 |
| 8 | PR | P | | | | Y | | 10 | T | | T | 15 | 4 |
| 9 | PA | | 2 | 1 | | N | | | T | 14 | T | | 4 |
| 10 | PA | | 2 | 1 | | Y | | 14 | T | | T | | 4 |
| 11 | PA | | | | N | N | | | T | 5 | T | | 4 |
| 12 | PA | | | | N | Y | | 5 | T | | T | | 4 |
| 13 | PA | | | | Y | N | | | T | 11 | T | 15 | 4 |
| 14 | PA | | | | Y | Y | | 11 | T | | T | 15 | 4 |
| 15 | | | | | | | N | | | | | 15 | 4 |
| 16 | | | | | | | Y | | | 7 | Y | 15 | 4 |

Note:  If B105 = 80 ∮ , consider 3(N21)
       If B105 = 40 ∮ , consider 3(N21)

## TABLE 2-D

Verb RTN - D (SYNCODE = 224)

| | Tense | Aspect | Person | Number | Cond. | Quest. | Neg. | B21 NZ | Aux. 1 | Pron. A | Aux. 2 | Neg. | Aux. 3 | Verbal Form |
|---|---|---|---|---|---|---|---|---|---|---|---|---|---|---|
| 1.. | PR | I | 1 | 1 | | N | | | | T | 12 | T | | 6 |
| 2 | PR | I | 1 | 1 | | Y | | | 12 | T | | T | | 6 |
| 3 | PR | I | 2 | 1 | | N | | | | T | 13 | T | | 6 |
| 4 | PR | I | 2 | 1 | | Y | | | 13 | T | | T | | 6 |
| 5 | PR | I | | | | N | | | | T | 4 | T | | 6 |
| 6 | PR | I | | | | Y | | | 4 | T | | T | | 6 |
| 7 | PR | P | | | | N | | N | | T | 10 | T | 15 | 6 |
| 8 | PR | P | | | | Y | | N | 10 | T | | T | 15 | 6 |
| 9 | PA | | 2 | 1 | | N | | | | T | 14 | T | | 6 |
| 10 | PA | | 2 | 1 | | Y | | | 14 | T | | T | | 6 |
| 11 | PA | | | | N | N | | | | T | 5 | T | | 6 |
| 12 | PA | | | | N | Y | | | 5 | T | | T | | 6 |
| 13 | PA | | | | Y | N | | | | T | 11 | T | 15 | 6 |
| 14 | PA | | | | Y | Y | | | 11 | T | | T | 15 | 6 |
| 15 | | | | | | | N | | | | | | 15 | 6 |
| 16 | | | | | | | Y | | | | 7 | Y | 15 | 6 |
| 17 | PR-FU | P | | | | N | | Y | | T | 10 | T | | 7 |
| 18 | PR-FU | P | | | | Y | | Y | 10 | T | | T | | 7 |

Note: If B105 = 80 $\phi$ , consider }
                         N 11/21

      If B105 = 40 $\phi$ , consider }

## TABLE 3

### MASTER DICTIONARIES

MASTER STEM

MASTER IDIOM/LS EXPRESSION


### TRANSLATION DICTIONARIES

STEM LOOKUP AND GRAMMAR

HIGH FREQUENCY WORD AND GRAMMAR

IDIOM CORRESPONDENCE

LIMITED SEMANTICS

HIGH FREQUENCY WORD AND GRAMMAR

IDIOM CORRESPONDENCE

L.S. COMPOUND

## TABLE 4

## MASTER STEM DICTIONARY ENTRY

# PART-OF-SPEECH CODES

FULL FORM STEMS

```
┌──┬──┬──┬──┬──┬──────┬───────────────────────────────┐
│  │  │  │  │  │      │ RMD SAVE BYTES (IF SOURCE=RMD) │
└──┴──┴──┴──┴──┴──────┴───────────────────────────────┘
   ↑  ↑  ↑  ↑  ↑    └─ CASES
   │  │  │  │  └─ GENDER AND NUMBER
   │  │  │  └─ BPO
   │  │  └─ PART-OF-SPEECH
   │  └─ PART-OF-SPEECH
   └─ DPO AND MISC. CODES
```

OTHER THAN FULL FORM STEMS

```
┌──┬──┬──┬──┬──┬──────┬───────────────────────────────┐
│  │  │  │  │  │      │ RMD SAVE BYTES (IF SOURCE=RMD) │
└──┴──┴──┴──┴──┴──────┴───────────────────────────────┘
 ╰────────┬────────╯  └─ PST PARADIGMA SET CODE
          └─ SAME AS FULL FORM STEMS
```

# SYNTAX CODES

REFLEXIVE PREP. REQUIREMENTS
MISC. REFLEXIVE REQUIREMENTS
REFLEXIVE CASE DETERMINERS
PREP. AND CLAUSE INITIATOR REQUIREMENTS
PREP. REQUIREMENTS
MISC. REQUIREMENTS
CASE DETERMINERS

(REFLEXIVE INFORMATION AVAILABLE FOR VERBS ONLY)

# CASE/PREPOSITIONAL TRANSLATION CODES

VARIABLE LENGTH TRANS. CODES
VARIABLE CONTROL BYTES
CASE TRANSLATION CODES

36

## TARGET LANGUAGE

ADD'L MEANING ENTRIES
TARGET MEANING
TARGET MEANING LENGTH
TARGET SYNTHESIS CODES
ADD'L SUBJ. ENTRIES
MEANING ID. NUMBERS
NUM. MULT. MEANINGS
TOPICAL GLOSSARY CODE
BYTE OFFSET TO TARGET MEANINGS

## ADDITIONAL VERB STEMS

ADD'L ENTRIES
STEM NUMBER
VERB STEM
LENGTH OF VERB STEM
NUM. OF VERB STEM ENTRIES

# MASTER IDIOM/L.S. DICTIONARY RECORD

TARGET LANGUAGE

TARGET MEANING

LENGTH OF TARGET MEANING

SYN. CODES

L

T.G.

EXPRESSION PART

SOURCE CODES

'OS' CTL

EXPRESSION

## STEM LOOKUP AND GRAMMAR TRANSLATION DICTIONARIES

HIGH FREQUENCY WORD AND GRAMMAR
DICTIONARIES

IDIOM CORRESPONDENCE DICTIONARY

'OS' CTL F L.S. NUM. COMPOUND GROUP OFFSETS MEANING ENTRY ADD'L MEAN. ENTRIES COMPOUND ENTRY ADD'L COMPOUND ENTRIES

FLAG

ADD'L MEAN. ENTRIES
TARGET MEANING
TARGET MEANING LENGTH
TARGET SYNTHESIS CODES
TARGET SUBJ. ENTRIES
ADD'L MEAN. ID. NUMBERS
MEANING MULT. MEANINGS
NUM. TOPICAL GLOSSARY CODE
BYTE OFFSET TO TARGET MEANINGS

ADD'L GROUP ENTRIES
MEANING OFFSET ADDR.
L.S.NUMS.
REFLEXIVE IND.
LENGTH OF L.S. COMPOUND
NUMBER OF GROUP ENTRIES

## TABLE 15

Listing of English Prepositions

| | | | |
|---|---|---|---|
| 99 | No English Preposition to be inserted ("Blank") | 46 | DOWN |
| 01 | ABOUT | 47 | NEXT TO |
| 02 | ACCORDING TO | 48 | OPPOSITE |
| 03 | AFTER | 49 | BESIDE |
| 04 | AGAINST | 50 | BESIDES |
| 05 | ALONG | 51 | THROUGH |
| 06 | AS | 52 | PER |
| 07 | AT | 53 | AROUND |
| 08 | AT THE POINT OF | 54 | AWAY FROM |
| 09 | BECAUSE OF | 55 | NEAR |
| 10 | BEFORE | 56 | DUE TO |
| 11 | BEHIND | 57 | OF UP TO |
| 12 | BEYOND | 58 | DOWN TO |
| 13 | BY | 59 | USING |
| 14 | DURING | 60 | ON THE BASIS OF |
| 15 | FOR | 61 | WITH RESPECT TO |
| 16 | FOR THE SAKE OF | 62 | ONTO |
| 17 | FROM | 63 | OVER TO |
| 18 | FROM BEHIND | 64 | IN TERMS OF |
| 19 | IN | 65 | AS A RESULT OF |
| 20 | IN FRONT OF | 66 | MADE OF |
| 21 | IN THE PRESENCE OF | 67 | PRIOR TO |
| 22 | INTO | 68 | HAVING REACHED |
| 23 | OF | | |
| 24 | OFF | | |
| 25 | ON | | |
| 26 | OUT OF | | |
| 27 | OVER | | |
| 28 | THROUGH | | |
| 29 | TO | | |
| 30 | TOWARD | | |
| 31 | UNDER | | |
| 32 | UNTIL | | |
| 33 | UP TO | | |
| 34 | WITH | | |
| 35 | WITHIN | | |
| 36 | WITHOUT | | |
| 37 | OUTSIDE | | |
| 38 | ACROSS | | |
| 39 | BELOW | | |
| 40 | BETWEEN | | |
| 41 | AMONG | | |
| 42 | SINCE | | |
| 43 | UPON | | |
| 44 | AS FAR AS | | |
| 45 | PAST | | |

* * * *SYNTAX-CODES * * * * CPS TARGET-MEANINGS * * * * * * * PAGE    8

STEM * * * * * * * * * * SN POS-COS     CPST RMD-SAVE-BYTES * * * *

|  |  |  |  |
|---|---|---|---|
|  |  | 20000000000 | S 0 00000000 TO |
|  |  |  | CCC00000 TCHARD |
| K | 00 20 5CA3CC  C00C |  | CCC00000 FOR |
|  |  |  | S 0 CCC00000 AS |
| KAK | 00 20 RE33CC  COCC | 00000000 00000000 | 00000000 WHAT |
|  |  | 07010000 00000000 |  |
|  | CASES -(NCNE,NCNE,NCNE,NCNE) | 00000000C0080 | 0 CCC00000 WHOM |
|  |  | 00000000 00000000 |  |
| KEM | 00 20 7473C1  C8CC | 01C0000C 00000000 |  |
|  | CASES -(NCNE,NCNE,NONE,NCNE) | 00000000C0080 | 0 CCC00000 WHICH |
|  |  | 00000000 00000000 |  |
| KCGO | 00 20 7473C1  400C | 02000000 00000000 |  |
|  | CASES -(NCNE,NCNE,NONE,NCNE) | 00000000C0080 | 0 CCC00000 WHOM |
|  |  | 00000000 00000000 | CCC00000 WHCM |
| KCHU | 00 20 7473C1  2000 | 02000000 00000000 |  |
|  | CASES -(NCNE,NCNE,NONE,NCNE) |  | 0 00000000 WHICH |
|  |  | 00000000 00000000 | CCC00000 WHO |
| KCTOFA4 | 00 20 7C7641  B3CC | 01C00000 00000000 | CCC00000 THAT |
|  | CASES -(NCNE,NCNE,NONE,NCNE) |  | 0 CCC00000 WHICH |
|  |  | 00000000 00000000 | CCC00000 WHO |
| KCTOFCE | 00 20 7C7621  500C | 01000000 00000000 | CCC00000 THAT |
|  | CASES -(NCNE,NCNE,NCNE,NCNE) |  | S 0 CCC00000 WHICH |
|  |  | 00000000 00000000 | CCC00000 WHO |
| KCTOFCGC | 00 20 7C76A1  4CCC | 01000000 00000000 |  |
|  | CASES -(NCNE,NCNE,NONE,NCNE) |  | S 0 CCC00000 WHICH |
|  |  | 00000000 00000000 | 00000000 WHOM |
| KCTOFCM | 00 20 7C76A1  C4CC | 01C00000 00000000 |  |
|  | CASES -(NCNE,NCNE,NONE,NCNE) | 00000000000 | S 0 CCC00000 WHICH |
|  |  | 00000000 C0000000 | CCC00000 WHOM |
| KCTORCPU | 00 20 7C76A1  20CC | 01000000 00000000 |  |
|  | CASES -(NCNE,NCNE,NONE,NCNE) |  | S 0 CCC00000 WHICH |
|  | PO -(NCAE,ALCNG) | 00000000 00000000 | 00000000 WHO |
| KCTOFC1 | 00 20 7C7641  6CCC | 01000000 00000000 |  |
|  | CASES -(NCNE,NCNE,NONE,NCNE) |  | S 0 CCC00000 WHICH |
|  |  | 00000000 00000000 | CCC00000 WHOM |
| KDICSUP | 00 20 7C7641  13CC | 01000000 00000000 |  |
|  | CASES -(NCNE,NCNE,NONE,NCNE) |  | 0 CCC00000 WHICH |
|  |  | 00000000 00000000 | CCC00000 WHO |
| KCTORYS | 00 20 7C76E2  C09C | 01000000 00000000 | 00000000 THAT |
|  | CASES -(NCNE,NCNE,NONE,NCNE) |  | 0 CCC00000 WHICH |
|  |  | 00000000 00000000 | 00000000 WHOM |
| KCTORYM | 00 20 7C76E3  C82C | 01000000 00000000 |  |
|  | CASES -(NCNE,NCNE,NONE,NCNE) |  | 0 CCC00000 WHICH |
|  |  | 00000000 00000000 | 00000000 WHOM |
| KCTORYM1 | 00 20 7C76E2  CCCE | 01000000 00000000 |  |
|  | CASES -(NONE,NCNE,NCNE) |  | S 0 00000000 WHICH |
|  |  | 00000000 00000000 | 00000000 WHOM |
| KCTORYX | 00 20 7C76E2  C054 | 01000000 00000000 |  |
|  | CASES -(NCNE,NCNE,NCNE,NCNE) |  | S 0 CCC00000 WHICH |
|  |  | 00000000 00000000 | 00000000 WHICH |
| KCTOFYI | 00 20 7C76E1  500C | 01000000 00000000 | CCC00000 WHO |
|  | CASES -(NCNE,NCNE,NONE,NCNE) |  | CCC00000 THAT |
|  |  | 40000000C00C0 | S 0 CCC00000 BESIDES |
| KRCME | 00 20 5CBBCC  C0CC |  |  |

EXAMPLE OF CONTENT OF HIGH FREQUENCY WORD DICTIONARY

TABLE 16

EP 0 274 281 B1

| RUSSIAN IDIOM EXPRESSION | R-CODES | TG | E-CODES | ENGLISH MEANING | PAGE 13 |
|---|---|---|---|---|---|
| I , SLEDOVATEL&NO | 80000000 | 0 | 00000000 | AND THEREFORE | |
| I BEZ TOGO PCOXO | 80000001 | 0 | 00000000 | IT IS BAD ENOUGH AS IT IS | |
| I DELO S XONOOH | 80000001 | 0 | 00000000 | AND THE CASE IS CLOSED | |
| I KONJY V VODU | 80000001 | 0 | 00000000 | AND NONE WILL BE THE WISER | |
| I NAOBOROT | 80000001 | 0 | 00000000 | AND VICE VERSA | |
| I SLOVOH I DELOH | 80000001 | 0 | 00000000 | BY WORD AND DEED | |
| I SOTRUONIKAHI | 80000000 | 0 | 00000000 | AND COAUTHORS | |
| I T. D. | 80000000 | 0 | 00000000 | ETC. | |
| I T. P. | 80000000 | 0 | 00000000 | AND SO ON | |
| I TAK | 80000001 | 0 | 00000000 | AND THUS | |
| I TOGDA | 80000001 | 0 | 00000000 | AND THEN | |
| I TOT I DRUGOI | 80000001 | 0 | 00000000 | BOTH | |
| I V ODNON TOL6KO SLUCAE | 80000000 | 0 | 00000000 | AND IN ONLY ONE INSTANCE | |
| I V TOM I V DRUGOM SLUCAE | 80000001 | 0 | 00000000 | IN EITHER CASE | |
| I VHESTE S TEH | 80000000 | 0 | 00000000 | AND AT THE SAME TIME | |
| I VOT TOHU | 80000000 | 0 | 00000000 | AND SO TO HIM | |
| I XOTY | 80000001 | 0 | 00000000 | AND ALTHOUGH | |
| I ZA PUSLEDNIE GODY | 80000001 | 0 | 00000000 | ALSO DURING RECENT YEARS | |
| I ZA SCET | 80000001 | 0 | 00000000 | ALSO OWING TO | |
| I ZA VREHS | 80000001 | 0 | 00000000 | ALSO DURING THE TIME | |
| IDET BOI | 80000001 | 0 | 00000000 | BATTLE IS FOUGHT | |
| ILI IMOOROT | 80000001 | 0 | 00000000 | OR VICE VERSA | |
| ILI NEZADOLGO DO IX NACALA | 80000000 | 0 | 00000000 | OR NOT LONG BEFORE THEIR BEGINNINGS | |
| IM DUALOS6 | 80000000 | 0 | 00000000 | THEY MANAGED | |
| IHEHSIES4 U HAS | 80000001 | 0 | 00000000 | IN OUR POSSESSION | |
| IXEHSTIS4 U NAS | 80000001 | 0 | 00000000 | IN OUR POSSESSION | |
| I HEHEN ZAKONA | 80000001 | 0 | 00000000 | IN THE NAME OF THE LAW | |
| IHENNO KOGDA | 80000001 | 0 | 00000000 | JUST WHEN | |
| IHENNO POSTOAU | 80000001 | 0 | 00000000 | FOR THIS VERY REASON | |
| IHET6 V SVOEX SOSTAVE | 80000000 | 0 | 00000000 | INCLUDE | |
| IHEITE V VIDU , CTO | 80000001 | 0 | 00000000 | DON'T FORGET THAT | |
| IHACE GOVORS | 80000000 | 0 | 00000000 | IN OTHER WORDS | |
| IHOGO PUTI NET | 80000001 | 0 | 00000000 | THERE IS NO OTHER WAY | |
| INOI RAZ | 80000000 | 0 | 00000000 | UNTIL THE NEXT TIME | |
| IONIZADIONNAS KAMERA S HETALLIZIROVANNYHI | 80000000 | 0 | 00000404 | METAL-WALL IONIZATION CHAMBER | |
| ISXODS IZ | 80000000 | 1 | 40000000 | ON THE STRENGTH OF | |
| ISXODS IZ 3TOGO | 80000001 | 0 | 00000000 | HENCE | |
| ITAK , | 80000000 | 0 | 00000099 | THUS , | |
| ITAK , CTO | 80000000 | 0 | 00000000 | SO THAT | |
| ITAK , CTO6Y | 80000001 | 0 | 00000000 | SO THAT | |
| ITAK , KAK | 80000001 | 0 | 00000000 | AND SINCE | |
| ITAK CTO | 80000001 | 0 | 00000000 | SO THAT | |
| ITAK ESLI | 80000001 | 0 | 00000000 | SO IF | |
| ITAK KAK | 80000001 | 0 | 00000000 | AND SINCE | |
| IZ - ZA | 80000000 | 0 | 00000000 | BECAUSE OF | |
| IZ BLAGODARNOSTI | 80000001 | 0 | 00000000 | IN GRATITUDE | |
| IZ BOSZNI | 80000001 | 0 | 00000000 | OUT OF FEAR | |
| IZ DIFRAGHY | 80000000 | 26 | 00000000 | CIRCLE-IN | |
| IZ DOSTOVERNYX ISTOCNIKOV | 80000001 | 0 | 00000000 | FROM RELIABLE SOURCES | |
| IZ GLUDINY DUSI | 80000001 | 0 | 00000000 | VERY SINCERELY | |
| IZ GODA , V GOD | 80000001 | 0 | 00000000 | YEAR IN , YEAR OUT | |
| IZ GODA V GOD | 80000000 | 0 | 00000000 | FROM YEAR TO YEAR | |
| IZ ISKRY VOZGORITSY PLAMS | 80000001 | 0 | 00000000 | THE SPARK WILL KINDLE A FLAME | |

# EP 0 274 281 B1

## TABLE 17

### EXAMPLE OF CONTENT OF IDIOM

### CORRESPONDENCE DICTIONARY

| Russian Idiom Expression | R Codes | TG | E Codes | English meaning |
|---|---|---|---|---|
| I , SLEDOVATEL6NO | 80000000 | 0 | 00000000 | and therefore |
| I BEZ TOGO PLOXO | 80000001 | 0 | 00000000 | it is bad enough as it is |
| I DELO S KONQOM | 80000001 | 0 | 00000000 | and the case is closed |
| I KONQY V VODU | 80000001 | 0 | 00000000 | and none will be the wiser |
| I NAOBOROT | 80000001 | 0 | 00000000 | and vice versa |
| I SLOVOM I DELOM | 80000001 | 0 | 00000000 | by word and deed |
| I SOTRUDNIKAMI | 80000000 | 0 | 00000000 | and coauthors |
| I T. D. | 80000000 | 0 | 00000000 | etc. |
| I T. P. | 80000000 | 0 | 00000000 | and so on |
| I TAK | 80000001 | 0 | 00000000 | and thus |
| I TOGDA | 80000001 | 0 | 00000000 | and then |

46

| | | | | |
|---|---|---|---|---|
| PEREVESTI DUX | 00000000 | 0 | 00000327 | TAKE BREATH |
| PEREVESTI MASHINOY | 00200000 | 0 | C2000100 | MACHINE-TRANSLATE |
| PEREVESTI NA KALGKU | 00200000 | 7 | 00000100 | TRACE |
| PEREVESTI V TVERDCE SOSTU4NIE | 00200000 | 0 | C1003105 | SOLIDIFY |
| PEREVESTI VZGL40 | 00000000 | 0 | 00000011 | SHIFT GAZE |
| PEREVIAVAEMY1 TUMOR | 00000000 | 0 | 40000204 | TRANSPLANTED TUMOR |
| PEREVIJNO1 DVIGATEL6 | 00000000 | 7 | 00000204 | FIELD ENGINE |
| PEREVOD CISEL | 00000000 | 0 | 40000104 | TRANSLATION-OF-NUMBERS |
| PEREVOD DIIMOV V SANTIMETRY | 00000000 | 1 | 50000304 | INCH CENTIMETER CONVERSION |
| PEREVOD EDINIO MKS V EDINIOY SGS | 00000000 | 1 | 40000104 | CONVERSION OF MKS TO CGS UNITS |
| PEREVOD IZ GONIX-EDINIC-MER-V-DRUGIE | 00000000 | 7 | 00000104 | RECALCULATION |
| PEREVOD PO PREDLOJENI4M | 00000000 | 5 | 00000204 | SENTENCE-FOR-SENTENCE TRANSLATION |
| PEREVCD PO PREDLOJENI4M | 00000000 | 0 | 10000204 | SENTENCE-FOR-SENTENCE TRANSLATION |
| PEREVOD PREDPRI4T11-NA-IZGOTOVLENIE-MIRNO7-PRODUKCII | 00000000 | 7 | 00000104 | RECONVERSION |
| PEREVOD PREDPRI4T14 NA POTOCNOE PROIZVODSTVO | 00000000 | 7 | 00000007 | CONVEYERIZING |
| PEREVOD UCXA NA POTOCNOE PROIZVODSTVO | 00000000 | 7 | 00000007 | CONVEYERIZING |
| PEREVOD REMN4 | 00000001 | 0 | 40000000 | BELT SHIFTING |

47

TABLE 19

INFORMATION CONTAINED IN EACH BYTE

OF INFORMATION IN ANALYSIS AREA

BYTE 0: Word sequence-number in the source language sentence.

BYTE 1: Primary parts of speech indication in the source language.

BYTE 2: Singular cases for nouns, adjectives, participles. Person and number indication for verbs. Individual bit indication for pronouns.

BYTE 3: Plural cases for nouns and adjectives. Tense and mood for verbs.

BYTE 4: Gender and number information for nouns, adjectives, participles, verbs. Additional information for verbs.

BYTE 5: Indication of direct object requirement.

BYTE 6: Various dictionary codes (condensed).

BYTE 7: Various dictionary codes (condensed).

BYTE 8: Secondary parts of speech.

BYTE 9: Codes indicating, with bits, the strong prepositional requirements.

BYTE 10: Codes indicating, with bits, the strong prepositional requirements.

BYTE 11: Some semantic codes, like Human and Inanimate. Codes expressing clause initiators which this word may govern.

BYTE 12: Condensed parts of speech information.

BYTES 13-15: Address in the core storage indicating additional grammatical and meaning information.

BYTE 16: Agreement information. Words that participate in agreement points to the central word of the agreement.

BYTE 17: Agreement relationship where the agreeing word is to the right of the central word. The word points to the central word.

48

BYTE 18: Government indication. A pointer to the governed word. In the case of multiple government, the pointer in this location points to the last object.

BYTE 19: The same as BYTE 18, in the case that one word has two direct objects. The pointer to the second direct object is indicated.

BYTE 20: Pointer to the adnominal genitive of this word.

BYTE 21: Pointer to the infinitive governed by this word.

BYTE 22: Pointer to a clause initiator governed by the word.

BYTE 23: Pointer to a second clause initiator governed by the word.

BYTE 24: Pointer to a strongly governed preposition. In the case of multiple prepositions, the pointer points to the last preposition.

BYTE 25: The same as BYTE 24 in the case that the particular word governs more than one different preposition.

BYTE 26: A central word of an agreement points to the first word of the agreement.

BYTE 27: A central word of an agreement points to the last word of the agreement which is to the right of this word.

BYTE 28: An object points back to its governor.

BYTE 29: An object points back to its governor, in the case that the same governor has more than one object.

BYTE 30: An adnominal genitive points back to its governor.

BYTE 31: An infinitive points to its governor.

BYTE 32: A subordinate clause initiator points back to its governor.

BYTE 33: A subordinate clause initiator points back to its governor.

BYTE 34: Indications for rearrangement purposes.

BYTE 35: A strongly governed preposition points back to its governor.

BYTE 36: Various types of information relating to subject or non-subject functions, like definite subject, multiple subject, apposition, etc.

BYTE 37: Predicate information. The fact that the word is a predicate or can become a predicate.

BYTE 38: Condensed information. The word is governed by another word.

BYTE 39: Condensed information. The word has a governing function in the sentence.

BYTE 40: Enumeration codes.

BYTE 41: Ambiguity codes on the basis of which they can be resolved.

BYTE 42: Merged case information.

BYTE 43: Cases in which the word finally functions in the sentence.

BYTE 44: Gender and number in which the word has been established to function in the sentence.

BYTE 45: Eliminated government codes. Government codes which are still there after syntactic analysis.

BYTE 46: Eliminated secondary government codes.

BYTE 47: Enumeration pointer.

BYTE 48: Enumeration pointer to a word which is in the same form.

BYTE 49: Pointer to a word which is not in the same form.

BYTE 50: Additional types of information, like types of phrases.

BYTE 51: Indication of subsentence boundaries.

BYTE 52: A relative pronoun has a pointer pointing to the word in the previous subsentence unit which it replaces.

50

BYTE 53: Miscellaneous data, like the word already translated. For example, some routines translate the word and it should be avoided that the synthesis routine translates it again. Also, indications such as certain words have been rearranged and must be translated differently, or abbreviation indication words cannot have genitive attributes,etc.

BYTE 54: Commands to the target language synthesis program.

BYTE 55: Sequence number of a word if it is a homograph.

BYTE 56: Lexical routine indication.

BYTE 57: Used in the rearrangement program.

BYTE 58: Original dictionary gender number information.

BYTE 59: Sequence with which the word functions in the target language.

BYTE 60: Length of the meaning in the target language to be printed.

BYTES 61-63: Address of the meaning to be printed in the target language.

BYTE 64: Length of the word in the source language.

BYTES 65-84: Contains the word in the source language. The hexadecimal indication of this word appears on the right side above the byte indication and the interpretation of this hexadecimal information appears immediately after the parts of speech.

BYTES 85-87: Address for the information, where data is available, concerning the translation of cases (wherever applicable) and the prepositions.

BYTES 88-90: Limited Semantics number of the particular word. This is a unique number assigned to each word during L.S. update.

BYTE 91: Source language information concerning the origin of the ending. Regular high frequency dictionary, for instance, whether it is a homograph, etc.

BYTE 92: Indication that the word functions in an idiom or L.S. compound and what position the word takes in such an expression.

BYTES 93-95: Address pointing to the possible meanings of an L.S. compound principal word.

BYTE 96: Information concerning dashes, short form adjectives and participles. A lexical routine places a code into this byte to indicate whether adverbial endings should or should not be used.

BYTE 97: Pass zero (0) places code into this byte assuring priorities in assigning functions for a participle.

BYTE 98: Type of pronoun, if any, that should be inserted in the target language work synthesis when translating the verbal form.

BYTE 99: Phrase pointer, a comma, which begins a phrase points to a comma which ends the phrase.

BYTE 100: A comma which ends a phrase points to a comma which begins the phrase.

BYTE 101: Indication of the topical glossary from which the target meaning has been taken.

BYTE 102: Temporarily empty.

BYTE 103: Data concerning auxiliaries to be used when translating participles.

BYTE 104: Indication of which preposition should be translated by special subroutine.

BYTE 105: Indication for capitalization.

BYTE 106: Data for saxonic genitives, whenever applicable.

BYTE 107: Data concerning synthesis in the target language.

BYTE 108: The first word of a sentence or sentence unit contains the sentence serial number of the word which functions as predicate. In addition, this information is placed on the top left side of the printout.

BYTE 109: One predicate points to the next predicate within the same sentence unit.

BYTE 110: The first predicate points to the last predicate.

BYTE 111: The first word of a sentence or sentence unit points to the first subject in the unit.

BYTE 112: The first subject in the sentence unit points to the next subject.

BYTE 113: The first subject points to the last subject.

BYTES 114-115: Pointers used to express apposition relationship of the dash.

BYTE 116: Miscellaneous information.

BYTES 117-159: Condensed semantic codes used in generalized programs to translate words with multiple meanings. The bits, in these bytes, express individual semantic categories and, on the basis of syntactic relationships and semantic categories, the correct meanings can be selected during translation.

53

TABLE 20

TABLE OF CODES FOR

PRIMARY PARTS OF SPEECH

| Part of Speech | Meaning | Secondary Parts of Speech |
|---|---|---|
| 00 | | |
| 04 | Finite verb, imperative | 3A, 3B, 3C, 41, 42, 48, 49, 4A, 4B. |
| 08 | Short form adjective or participle | 24, 2C, 37, 82 |
| 0C | Net | 66 |
| 10 | Pure noun | 10 |
| 14 | Proper noun | 11 |
| 18 | Prof or title | 12 |
| 1C | Abbreviation | 13 |
| 20 | Pure adjective or superlative adjective | 20, 28 |
| 24 | Noun adjective ambiguity | 21 |
| 28 | Pronoun adjective | 22 |
| 2C | Ordinal numbers | 25, 26 |
| 30 | Adverb (other than MNOGO, MALO type ) TOL6KO, E5E | 30, 32, 34, 35, 6B |
| 34 | MNOGO, MALO type adverbs | 31 |
| 38 | Short form neuter singular adjective or participle | 23, 2D, 81 |
| 3C | JE | 67 |
| 40 | Finite auxiliary | 45 |
| 44 | Infinitive auxiliary | 46 |
| 48 | Infinitive | 43, 44 |
| 4C | Gerund | 80, 89, 8A |

| List of Speech | Meaning | Secondary Parts of Speech |
|---|---|---|
| 50 | Preposition | 51, 52, 53, A0-BF |
| 54 | NE | 65 |
| 58 | EST6 | 47 |
| 5C | A, NO, XOT4, NAPRIMER, ZATO, ITAK, PO3TOMU, ODNAKO, POCEM4 | 63, 64 |
| 60 | Comma | 09 |
| 64 | I | 62 |
| 68 | ILI | 62 |
| 6C | Conjunction POKAMEST | 63 |
| 70 | Personal pronouns - only subject | 72 |
| 74 | Personal pronouns - never subject | 73 |
| 78 | EE, EGO, IX | 75, 7B, 7C, 7D |
| 7C | KOTORY1 | 76 |
| 80 | Past passive participle | 83 |
| 84 | Present passive participle | 84 |
| 88 | Past active participle | 85, 86 |
| 8C | Present active participle | 87, 88 |
| 90 | CEM | 74 |
| 94 | Comparative, BOLEE, MENEE | 27, 29, 2A, 2B, 2E, 38 |
| 98 | BY | 60 |
| 9C | LI | 67 |
| A0 | Cardinal numbers | 14, 15, 16, 17, 18, 19, 1A |
| A4 | Literal cardinal numbers ending in 11 | 17 |

55

| Parts of Speech | Meaning | Secondary Parts of Speech |
|---|---|---|
| A8 | DAJE, particle, DA | 60, 67, 6A |
| AC | Interjection | 68 |
| B0 | Pronouns - subject or not subject | 71 |
| B4 | CTOBY, KOGDA | 59 |
| B8 | KAK | 33 |
| BC | PUST6, SKOL6KO, POSKOL6KU, CTO, GDE, KUDA, OTKUDA, KAK, TOL6KO, IBO | 8A, 8B, 8C, 99, 9A, 9B, 9E |
| C0 | Dash | 03 |
| C4 | Colon | 07 |
| C8 | Quotation mark | 93 |
| CC | Period, semi-colon, exclamation mark, question mark | 05, 06, 08, 92 |
| D0 | Open bracket or open parenthesis | 01, 90 |
| D4 | Closed bracket or parenthesis | 02, 91 |
| D8 | Dots | 04 |
| DC | Disregarded words | |
| E0 | Words not found in dictionary | |
| E4 | DAJE-Adverb conjunction participle ambiguity | 60 |
| E8 | PREJDE-Adverb preposition ambiguity | 36 |
| EC | Mathematical expression characters <, >, =. | 0C |

| Parts of Speech | Meaning | Secondary Parts of Speech |
|---|---|---|
| FO | Hyphen | OB |
| F4 | | |
| F8 | | |
| FC | Comma within idiom | |

## TABLE 21

### TABLE OF CODES FOR

### SECONDARY PARTS OF SPEECH

| Parts of Speech | Meaning | Primary Part of Speech |
|---|---|---|
| 00 | | |
| 01 | Open bracket | D0 |
| 02 | Closed bracket | D4 |
| 03 | Dash | C0 |
| 04 | Dots | D8 |
| 05 | Period | CC |
| 06 | Semi-colon | CC |
| 07 | Colon | C4 |
| 08 | Exclamation mark | CC |
| 09 | Comma | 60 |
| 0A | % | DC |
| 0B | Hyphen | F0 |
| 0C | Mathematical expression characters <, >, = . | EC |
| 0D | | |
| 0E | | |
| 0F | | |
| 10 | Pure noun | 10 |
| 11 | Proper noun | 14 |
| 12 | Prof or title | 18 |
| 13 | Abbreviation | 1C |
| 14 | Literal cardinal number 1 | A0 |
| 15 | Written cardinal numbers | A0 |
| 16 | Literal cardinal numbers ending in 1 but not in 11 | A0 |

58

| Parts of Speech | Meaning | Primary Part of Speech |
|---|---|---|
| 2C | Short form adjective ambiguity | 08 |
| 2D | Short form neuter adjective adverb | 38 |
| 2E | Comparative feminine ambiguity | 94 |
| 2F | | |
| 30 | Adverb | 30 |
| 31 | MNOGO, MALO, Type adverbs | 34 |
| 32 | Old adverb code | 30 |
| 33 | KAK | B8 |
| 34 | MOJNO | 30 |
| 35 | TOL6KO | 30 |
| 36 | PREJDE | E8 |
| 37 | Ambiguity: short form masculine third person plural | 08 |
| 38 | Comparative participle | 94 |
| 39 | | |
| 3A | ITE second person plural imperative ambiguity | 04 |
| 3B | W6 imperative, second person singular ambiguity | 04 |
| 3C | NULL (LEG) ambiguity imperative | 04 |
| 3D | Predicate - often | 30 |
| 3E | Predicate - rarely | 30 |
| 3F | Predicate - never | 30 |
| 40 | | |
| 41 | Non-reflexive finite verb | 04 |

| Parts of Speech | Meaning | Primary Part of Speech |
|---|---|---|
| 42 | Reflexive finite verb | 04 |
| 43 | Non-reflexive infinitive | 48 |
| 44 | Reflexive infinitive | 48 |
| 45 | Finite auxiliary | 40 |
| 46 | Infinite auxiliary | 44 |
| 47 | EST6 | 58 |
| 48 | Imperative | 04 |
| 49 | | 04 |
| 4A | | 04 |
| 4B | | 04 |
| 4C | | |
| 4D | | |
| 4E | | |
| 4F | | |
| 50 | | |
| 51 | Old preposition code | 50 |
| 52 | Old preposition code | 50 |
| 53 | Preposition adverb ambiguity | 50 |
| 54 | | |
| 55 | | |
| 56 | | |
| 57 | | |
| 58 | | |
| 59 | CTOBY, KOGDA, ESLI | B4 |
| 5A | | |
| 5B | | |
| 5C | | |
| 5D | | |

| Parts of Speech | Meaning | Primary Part of Speech |
|---|---|---|
| 5E | | |
| 5F | | |
| 60 | DAJE | A8, E4, 98 |
| 61 | | |
| 62 | Connective conjunctions - I, ILI | 64, 68 |
| 63 | Conjunctions - POKAMEST, VVIDU | 5C, 6C |
| 64 | No agreement conjunctions - TOGDA, TAK, T.P., T.K., T.E., T.D., ZATO, ITAK, XOTA, NAPRIMER, TO-EST6, PO3TOMU, ODNAKO, NESMOTR4 | 5C |
| 65 | NE | 54 |
| 66 | NET | 0C |
| 67 | Particle | A8, 3C, 9C |
| 68 | Interjection | AC |
| 69 | | |
| 6A | DA | A8 |
| 6B | E5E | 30 |
| 6C | LIBO, CE1, KAKO1, BUDTO, SLOVNO, KTO, POKA, NEJELI, LIW6, CUT6, EDVA, EJELI | B4 |
| 6D | VOT | DC |
| 6E | | |

| Parts of Speech | Meaning | Primary Part of Speech |
|---|---|---|
| 6F | | |
| 70 | | |
| 71 | Pronouns - subject or not subject | B0 |
| 72 | Personal pronouns - only subject | 70 |
| 73 | Personal pronouns - never subject | 74 |
| 74 | CEM | 90 |
| 75 | EE, EGO, IX | 78 |
| 76 | KOTORY1 | 7C |
| 77 | | |
| 78 | | |
| 79 | | |
| 7A | | |
| 7B | EE | 78 |
| 7C | EGO | 78 |
| 7D | IX | 78 |
| 7E | | |
| 7F | | |
| 80 | Non-reflexive gerund | 4C |
| 81 | Short form neuter singular participle | 38 |
| 82 | Short form participle | 08 |
| 83 | Past passive participle | 80 |
| 84 | Present passive participle | 84 |
| 85 | Non-reflexive past active participle | 88 |

| Parts of Speech | Meaning | Primary Part of Speech |
|---|---|---|
| 86 | Reflexive past active participle | 88 |
| 87 | Non-reflexive present active participle | 8C |
| 88 | Reflexive present active participle | 8C |
| 89 | Reflexive gerund | 4C |
| 8A | PUST6 | BC, 4C |
| 8B | SKOL6KO | BC |
| 8C | POSKOL6KU | BC |
| 8D | | |
| 8E | | |
| 8F | | |
| 90 | Open parenthesis | D0 |
| 91 | Closed parenthesis | D4 |
| 92 | Question mark | CC |
| 93 | Quotation mark | C8 |
| 94 | | |
| 95 | | |
| 96 | | |
| 97 | Paragraph mark | DC |
| 98 | Title mark | DC |
| 99 | CTO | BC |
| 9A | GDE | BC |
| 9B | KUDA, OTKUDA, OTCEGO | BC |
| 9C | | |
| 9D | | |
| 9E | | BC |
| 9F | | |

63

| Parts of Speech | Meaning | Primary Part of Speech |
|---|---|---|
| A0 | DO | 50 |
| A1 | IZ, IZO | 50 |
| A2 | IZ-ZA | 50 |
| A3 | K, KO | 50 |
| A4 | NA | 50 |
| A5 | NAD | 50 |
| A6 | POD | 50 |
| A7 | O, OB | 50 |
| A8 | OKOLO | 50 |
| A9 | OT | 50 |
| AA | PERED | 50 |
| AB | CEREZ | 50 |
| AC | PO | 50 |
| AD | PRI | 50 |
| AE | PROTIV, PROTIVU | 50 |
| AF | RADI | 50 |
| B0 | S, SO | 50 |
| B1 | U | 50 |
| B2 | V, VO | 50 |
| B3 | ZA | 50 |
| B4 | POSLE | 50 |
| B5 | DL4 | 50 |
| B6 | BEZ | 50 |
| B7 | BLAGODAR4 | 50 |
| B8 | KROME | 50 |
| B9 | MEJDU | 50 |
| BA | VSLEDSTVIE | 50 |
| BB | SREDI, SRED6 | 50 |

| Parts of Speech | Meaning | Primary Part of Speech |
|---|---|---|
| BC | NESMOTR4 | 50 |
| BD | MIMO | 50 |
| BE | VNUTRI | 50 |
| BF | | 50 |
| C0 | TOT | 28 |
| C1 | TOMU | 28 |
| C2 | TE | 28 |
| C3 | TAKO1 | 28 |
| C4 | TOM | 28 |
| C5 | TO | 28 |
| C6 | TOGO | 28 |
| C7 | TEX | 28 |
| C8 | TEM | 28 |
| C9 | TA | 28 |
| CA | TO1 | 28 |
| CB | TU | 28 |
| CC | TEMI | 28 |
| CD | | |
| CE | | |
| CF | 3TO | 28 |
| D0 | | |
| D1 | | |
| D2 | | |
| D3 | | |
| D4 | VSE | 28 |
| D5 | VSEM | 28 |
| D6 | NIKAK (FULL FORM) | 30 |
| D7 | NIKAK (STEM) | 28 |

| Parts of Speech | Meaning | Primary Part of Speech |
|---|---|---|
| 17 | Literal cardinal numbers ending in 11 | A0, A4 |
| 18 | All other literal cardinal numbers (next to last or last may be . / - ) | A0 |
| 19 | Literal cardinal numbers. ending in % (010) | A0 |
| 1A | Literal cardinal numbers ending in degree $^0K$, $^0C$ | A0 |
| 1B | | |
| 1C | | |
| 1D | | |
| 1E | | |
| 1F | | |
| 20 | Pure adjective | 20 |
| 21 | Noun adjective ambiguity | 24 |
| 22 | Pronoun adjective | 28 |
| 23 | Short form neuter singular adjective | 38 |
| 24 | Short form adjective | 08 |
| 25 | Literal ordinal numbers | 2C |
| 26 | Written ordinal numbers | 2C |
| 27 | Irregular comparative | 94 |
| 28 | Adjective superlative | 20 |
| 29 | Adjective comparative | 94 |
| 2A | Comparative neuter ambiguity | 94 |
| 2B | BOLEE, MENEE | 94 |

66

| Parts of Speech | Meaning | Primary Part of Speech |
|---|---|---|
| D8 | | |
| D9 | | |
| DA | | |
| DB | | |
| DC | | |
| DD | | |
| DE | | |
| DF | | |
| E0 | | |
| E1 | | |
| E2 | | |
| E3 | | |
| E4 | | |
| E5 | | |
| E6 | | |
| E7 | | |
| E8 | | |
| E9 | | |
| EA | | |
| EB | | |
| EC | | |
| ED | | |
| EE | | |
| EF | | |

TABLE 23

SYSTRAN TRANSLATION OF RUSSIAN SENTENCE SHOWN IN FIG. 4

Human translation can possess a mass of deficiencies, which can in principle be absent from machine translation (for instance, the hypertrophy of the features of the individual style of a human translator in the translated text and so on).

TABLE 24

```
                                                            '/*#CC5234*LXP*ED*PP*L' 08-12-71          TG-3        SENTENCE   0012   PAGE  01

SSU SUBJ-02          PRED-03

01  2026 REACHYI        4IU24967 016-02C00C0C0    00000000 024-0200000C 032-00000000 040-0000
    002-00CC1C1 00-0001 C10-200C00000    00000000 056-00000001 00F0000000 092-00000004 100-0000
    042-9C10101 0C0C000 044-0000000000    00000000 056-0000003 00F09E80 092-0CC000C3 100-0000
    108-0000000 020000 114-0000000CC      00000000 122-00000000 130-00000001 138-00000100 146-0000
    154-0000000 0C000C C/P-
    TG-3

02  1010 REREVCD        008-10000020 016-CCCC0CC0    024-00CC00100 032-00000000 040-0000
    002-9CCC01 00000 C10-1000000CC    00000000 056-00000000 00F00000 092-00000003 100-0000
    042-9CF001 000000 048-0000000000    00000000 056-00000002 00F0CSA0 092-00000003 100-0000
    108-0000000 000000 114-0000000C0    00000000 122-00000000 130-0000000 138-00000100 146-0000
    154-0000000 C/P-00000000 PRI -0014 NA -2200C000
    TG-3

03  0441 MCJET          S200010C4 ORDINARY
    002-2C1E3E1 010-0000000    024-00000000 032-00000000 040-0000
    042-A0320I 0C000 048-0000000000    00000000 056-00000003 00F00000 092-00000000 100-0000
    108-0000000 020000 114-0000000C0    00000000 122-00000000 130-00000000 138-00000100 146-0000
    154-0000000 0C000 C/P-
    TG-3

    0441 40040024 HUMAN TRANSLATION                    L3 MN-HUMAN TRANSLATION
                                                                     D4D01C5F3

04  4843 CPLAJ3ATE      MOCAP                            MN-CAN
    002-00C010 000000    10324AA7 016-00000500 024-00000000 032-00000000 040-0000
    042-0C0000 040-0000000000    00000000 056-00000004 00F863C0 092-00024473 100-0000
    108-0000000 114-0000000C0    00000000 122-00000000 130-00000000 138-00000100 146-0000
    154-0000000 C/P-00000000
    TG-C

05  1010 MASS01        POSSESS                          MN-POSSESS
    002-0000011 000000    80924AD4 016-00000000 024-00000000 032-00000000 040-0000
    042-0RC941 0-0000 048-0000000000    00000000 056-00004CC5 00F86360 092-00024A98 100-0000
    108-0000000 114-0000000C0    00000000 122-00000000 130-00000000 138-00000100 146-0000
    154-0000000 C/P-00000000 S,SD -3400
    TG-3

06  1010 MASS01        4C0010Z MASS 8000100E BULK      MN-A MASS
    002-0C4CR2 000001    8032488A 016-00000000 024-00000000 032-00000000 040-0000
    042-474082 000000 048-0000000000    00000000 056-00000000 00B47040 092-00024A88 100-0000
    108-0000000 114-0000000C0    00000000 122-00000000 130-00000000 138-00000100 146-0000
    154-0000000 C/P-00000000
    TG-C

07  0441 NEDCSJATKOV    4C0010F CEFICIFNCY INADEQUACY   MN-OF DEFICIENCIES
    002-00C000 000000    00000000 016-00000000 024-00000000 032-00000000 040-0000
    042-0C0001 C08-7000000 C40-0000000    00000000 056-00000000 00F00000 092-00000000 100-0000
    108-00000 114-0000000C0    00000000 122-00000000 130-00000000 138-00000100 146-0000
    154-0000000 C/P-00000000
    TG-C

SSU SUBJ-08          PRED-CA

08  7C7E XCTORYE                                         MN-WHICH            02D4F3060D0F0C5
    002-0CF0E2 00000 C08-7A0C0000    00000000 024-00000000 032-00000000 040-0000
    042-95.83EZ 00C000 C40-000000000    00000000 056-00000000 00F00000 092-00000000 100-0000
    108-000000 080000 114-0000000C0    00000000 122-00000000 130-00000000 138-00000100 146-0000
    154-000000 000000 C/P-00000000 WHICH 00000000 THAT
    TG-C
```

EP 0 274 281 B1

TABLE 24 (cont'd)

'/**GC S234*LXP*ED*P*L' 08-12-71          TG-3          SENTENCE  0C012  PAGE 0

    09 3C3F FRINQIPIAL6NO        POS3G        PN-IN PRINCIPLE                          D7C9C0D5DAC9D7C9C1D3F6D5D6
------002-0CC0C0 000C0 C0A-3F0C00C0 CAD24BA9 016-CC0CCCC CC000C0 C24-00C0C000 000000C0 C32-CCCCCCC 00000800 040-C0C0
       042-0C000C 0C0000 048-00000009 00000000 056-010CC00A CC04C505 084-40000000 01442000 092-CCC00000 00000000 100-0CFC0C00 CC00000
       108-0CC00G 0C0000 114-000C0C0 C00C0000 122-CCC0CC00 CC0C00C0 130-00000C00 00000000 138-00C00100 00000000 146-00000000 0000000
       154-0C0000 00000 C/P-
       TG-C  10000000 IN PRINCIPLE
    0A C441 PCCUT           XOC6R        MN-CAN                                        040C07E4F3
------0C2-04E0E2 008080 00A-410C006C 10024BDB 016-CC00CC0C C908C0C0 024-00C0000 CC000C0 032-00C00000 00800C21 040-0C0C
       C42-8404E2 020000 048-00000000 C0800000 056-CC8DE209 0305271C 084-4000G000 0UC33000 092-C0000000 00000000 100-0CF00000 0000000
       108-0CC00C 08C000 114-00000000 C00C00G0 056-CC0C000 CC0C0000 130-00000000 00000000 138-00C00100 00000000 146-00000000 0C00000
       154-0C0000 00000 C/P-
       TG-C  00000000 CAN
    0B 4843 CTSUTSTVOVAT6                PN-BE ABSENT                                 D6E3F2E4F3E2F3E5D6E5C1F3F6
------002-000010 000080 C0A-430C00C0 10024BD3 016-CC00C0C0 CC000000 024-00000000 00000000 032-00000000 00002000 040-0C00
       042-0CC000 000000 048-00000000 C0C00000 056-CC0C00CB CA04C5E1 084-40024BC4 01063EC0 092-0C900000 00000000 100-00F00C00 0000000
       108-0CC00C 000000 114-00000000 C0000000 122-CC0CC000 C00C0000 130-00000000 00000000 138-C0000100 00000000 146-00000000 0000000
       154-0C0000 00000 C/P-00000000 V,VO  -00001700 NA   -00001700
       TG-C  C10C2224 EE ABSENT C10C2224 BE ABSENT
    0C 5092 V                           PN-FROM                                       E5
------0C2-C00000 140001 0CA-B20C00C0 C0028776 016-0C00CCC0 CC0C0000 024-00000000 00000000 032-C0000000 000C0C82 040-0000
       C42-CC000C 0C0000 048-00000000 C082C000 056-CC00CC0C C401E353 084-4000G00 01C36F20 092-0CCCC0C 00000000 100-00C00000 2300000
       108-0C0000 000000 114-000C00CC C0C00000 122-CC0C0000 C0C0000 130-00000000 00000000 138-C0000100 00000000 146-00000000 00C000C
       154-0C0000 0C0C0 C/P-
       TG-  CCCC000G IN 0CCCC000 INTO
    0D 2C2C MAWINNOM                     PN-MACHINE                                    D4C1E6C9D5D5D604
       002-04C0A1 000001 C0A-200C00C0 41024BF0 016-CE000000 CC000000 024-00000000 00000000 032-0CC00000 00000800 040-0000
       042-04C481 000100 C48-00000000 00000000 056-CC000CC0 C704C5EB C84-4000CCC0 00B55380 092-CC000000 00000000 100-0CF00C00 0000000
       108-0CC000 000000 114-000C00CC C0C00000 122-0CC00CC0 CC000000 130-00000000 00000000 138-00000100 00000000 146-00000000 0000000
       154-0C0000 0C0000 C/P-
       TG-C  B000C10E MACHINE
    0E 101C FEREVCDE        PRDP         MN-TRANSLATION                                D7C5D9C5F5D06C4C5
       002-04CC01 C0C003 C0A-130C0020 90024C70 016-CC0CCCC CC0CC000 024-00000000 CC0000C0 032-0CC0C000 000CB288 040-0C00
       042-04C481 000000 048-00000000 00000000 056-CC01B0CE 0R04C5F2 084-40024C70 01160C4G 092-R0024BF0 00000000 100-0CF30000 0C00000
       108-0C0000 000000 114-000C000C C2C00000 122-CC0000C0 CC00000 130-00000000 00000000 138-00000100 00000C00 146-00000CC0 0000000C
       154-0C0000 0C0000 C/P-00000000 PRI  -0014 NA   -22000006
       TG-3  40040164 TRANSLATION 40000104 CONVERSION 4C000104 REDUCTION
    0F 0C00 (                           MN-(                                          4C
       002-0CC000 000000 C0A-90000010 CC0269A3 016-CC0CCC0 CC000CC0 024-00000000 00000000 032-C0C00000 00000040 040-0C00
       042-0C00U0 0C0000 048-00000000 C00C0000 056-CC00000F C104C5FD 084-40000C00 00C00A20 092-C0000000 00000000 100-0C000000 0000000
       108-0CC000 000000 114-10000C00 00000000 122-0CCC0CC0 CC000C0 130-00000000 00000000 138-C00C5000 00000000 146-00000000 0000000
       154-0C0000 000000 C/P-
       TG-  00000000 (
    10 5C64 NAPKIMER                     11 PN-FOR INSTANCE ,                          D5C1D709C004C5D0
       002-CC000U 00C000 00B-640C0000 C0124CAB 016-CC00CCC CC000000 024-00000000 00000000 032-00000CC0 C0000C00 040-C000
       C42-0C0000 0C0000 048-00000000 C0800C0 056-CC00C010 CF024CB1 C84-40000G00 0CC05C20 092-00C00001 00000000 100-0CF00C00 0000000
       108-0C00C0 0C0000 114-00000000 C0000000 122-CC0C00C0 CC000000 13C-00000000 00000000 138-00005000 00000000 146-00000000 0000000
       154-0C0000 0C0C00 C/P-
       TG-C  00000099 FOR INSTANCE ,
    11 6C09 ,                           12 MN-                                         6B
------002-C00000 000000 C0A-09000000 04000000 016-CC0CCC0 CC000000 024-00000000 00000000 032-00000000 00000C0 040-0C00
       042-C0C000 C0000 048-00000000 C08C0000 056-CC00C011 CF00C000 084-40000000 CC005620 092-C0000002 00000000 100-0C000000 0000000
       108-000000 000000 114-00000000 00000000 122-0C000000 CC000000 130-00000000 00000000 138-00005000 00000000 146-0C0C00C0 0000000
       154-000000 000000 C/P-
       TG-

69

```
12 101C CIPERTROFI4                  MN-THE HYPERTROPHY                           C7C9D7C5D9F339D6C639F4
    002-8C0041  00C0C0 008-10060003 80024CBF  016-CCCCCCO 13000C0 024-33000003 C0000030 032-00000000 C1000040 040-0003
    C42-8C0041  000000 048-00130000 00000000 056-CC004012 CF04C5FE 084-40000000 C05FA140 092-CC000000 00000C30 103-00F0C003 CC000CC0
    1C8-CC0000 0CC003 114-001C04C0 C0CC0CC0 122-CC000CCO CL000000 130-33000303 C0000C300 138-00005000 00000030 146-00000000 00000C00
    154-CCC0C0 00000C C/P-
    TC-C  400400CE HYPERTROPHY
13 101C CERT                         MN-OF THE FEATURES                          C3C5D9E3
    002-0C4042  0C00C1 008-10C00020 80C24D5E  016-CCCC0C0 15000000 024-35000000 C0001200 032-00000000 C0004040 040-0000
    042-4C4042  X0C00 048-00150000 00000000 056-CC0C4C13 CF04C600 084-40000000 032E6A40 092-80C24C00 C0000000 100-0CF0C003 0CC0000C
    1C8-0CC00J 0C0000 114-300006C0 C0000000 122-CCC0CCC0 0C000CC0 130-30000000 CC000000 138-C0005000 C0000C00 146-00000003 00000C0C
    154-0CC000 0C0CC0 C/P-
    TC-C  4C000104 FEATURE
14 2C20 INDIVIDUAL ENOGO             MN-OF THE INDIVIDUAL                         C9D5C4C9E5C9C4E4C133F6D506C7D6
    002-5CC0A1  000001 008-200C0000 41024DAB  016-15000CC CC000000 024-30000003 0CC00000 032-00060000 00000A00 040-CC00
    042-504081  000000 048-00160000 00000C00 056-CC00C014 1104C61C 084-40000000 006FE680 092-00005000 00000000 100-0CF00000 0C000000
    1C8-0CC0C0 0C0C0C 114-C0000600 00000000 122-0C00C000 CC000000 130-33000003 00000000 138-C0005000 00000000 146-00000000 0C0C0000
    154-00C000 000000 C/P-
    TG-C  S10000D4 INDIVIDUAL
15 101C STIL4                        MN-STYLE                                    E2E3C9D3F4
    002-400C81  0C0000 008-10C00000 80024DC4  016-CC000000 16000000 C24-33001400 0C001300 032-00000000 0000AC48 040-0000
    042-4C4081  000000 048-00160000 00000000 056-CC0C0C15 C504C620 084-40024DAB C196F140 092-0C000000 00004030 100-0CF00000 0C00330C
    1C8-0CC0CC 0C0C00 114-000C00C0 00000000 122-CC00000C CC000000 130-33000000 00000000 138-0C005000 00000000 146-00000000 00C0000C
    154-000000 000000 C/P-00000000 P0     -0013
    TC-C  400400D4 STYLE
16 1812 CELOVEKA-PEREVODCIK CLVKP.    MN-OF A HUMAN TRANSLATOR                    C3C5D3D6F5C5D02C16007C5D9C5E506C4C3C9C2
    002-5C3081  000000 008-12000080 80024DCF  016-0C000CC0 0C000000 024-00000003 00001500 032-0CC00000 00204000 040-0000
    042-504081  000000 048-00000000 C0000000 056-CCA48C16 1504C632 084-40000000 002DA540 092-0C000000 00000000 100-0CF00C0 0CC00C00
    1C8-0CC000 000000 114-000C06C0 00000000 122-0C00C0C0 0C000000 130-33000000 00000000 138-00005000 00000000 146-30000000 0C000CC0
    154-0CC00J 0C00C0 C/P-
    TC-C  40000204 HUMAN TRANSLATOR
17 5GP2 V                            MN-IN                                       E5
    002-C00000  140001 008-82CC0000 00028776  016-0C001800 0C000000 024-30000000 0C000000 032-CC000000 00000092 040-0000
    042-0C0000  0C0000 048-0000C030 C3800000 056-CC000017 C201E364 084-43000000 01C36F20 092-CC000000 00000000 100-0C000000 23000000
    1C8-0CC000  000000 114-000C00CC C0000000 122-CC000C00 CC000000 130-00300000 00000000 138-C0005000 00000000 146-0C000000 0CC00C00
    154-0CC000  0C0C0C C/P-
    TC-  CCC0000 PI 00000000 INTC
18 8C93 FEREVEDENNOM        PRDR     MN-THE TRANSLATED                           D7C5D9C5F5C5C4C5D5D5D404
    002-C4C0A1  000C40 008-83000000 2101D108  016-19000000 CC000000 024-30000000 0C000000 032-0C000C00 00003800 040-0C00
    C42-0C4C4A1 J80003 048-00100000 00000000 056-CC0CC18 C504C647 084-40000000 C116A5C0 092-80024DE5 0C030C00 100-0CF30000 C0CC000C
    1C8-0CC00C 00C000 114-00000400 C0000000 122-0C00C0C0 C0000000 130-33300000 00000000 138-C0005000 00000C00 146-00000000 0CC0CCCC
    154-0CC00J C0C0C0 C/P-
    TC-2  CCCC319C TRANSLATE
19 101C TEKSTE                       MN-TEXT                                     E3C5D2E2E3C5
    0C2-C4C001  000001 008-10000000 80024EF6  016-CC000000 0C000000 024-33001800 17C0000C 032-0C000000 0C008238 040-0000
    C42-0C4C481 0C0000 048-1B0C00C0 00000000 056-CC00C019 C404C656 084-40024ECF 01A53340 092-80024E90 00000030 100-0CF00000 0C000000
    1C8-CCC00J 0C0C00 114-C0000000 CC000000 122-CC000CC0 C0000000 130-00000000 C0000000 138-0CC05000 00000000 146-00000000 0CC000C0
    154-0CC000 0C00C3 C/P-00000000
    TC-C  4C000004 TEXT
1A 6462 I            ISBR           MN-,                                         C9
    CC2-0CC000 000001 008-620C0000 04024EF0  016-CC0CCCC0 CC000000 024-30000000 00000000 032-C00C0000 00000103 040-8000
    042-0CC000 000000 048-1C00C000 CC80C000 056-CC230C1A C103C1FD 084-40300000 G0608000 092-00000000 0C000000 100-0CF00000 0C0000CC
    1C8-CCC00J 000000 114-C0000C00 CC000000 122-0CC0C0C0 C0000000 130-00000000 00000000 138-00005000 00000000 146-00000000 0C0000CC
    154-0CC000 000000 C/P-
    TC-0  00000000 AND
```

TABLE 25

```
-...
-  WC-1C
   WO-1C
─  WC-1E  NSW-1C
   WO-1A  RNS-1C
─  WD-19  ILI-1A
   WO-18  NSW-19  ILI-1A
   WO-17  NSW-19  LAG-18  ILI-1A
   WD-16  ILI-1A
─  WD-15  NSW-16  ILI-1A
   WO-14  NSW-15  RNS-16  ILI-1A
   WO-13  NSW-15  RNS-16  LAG-14  ILI-1A
   WO-12  NSW-13  RNS-15  RLA-14  ILI-1A
─  WD-11  RNS-13  RLA-14  ILI-1A
   WD-10  ILI-1A  COM-11
── WO-0F
   WO-0E
── WD-0D  NSW-0E
   WO-0C  NSW-0E  LAG-0C
   WO-0B
   WO-0A  INF-0B  VER-0B
─  WD-09  VER-0A
   WO-08  VER-0A
   WD-07  NSW-08  VER-0A
   WO-06  OCM-07
   WO-05  NSW-06  COM-07
   WO-04  NSW-05  RNS-06  COM-07
── WO-03  INF-04  RNS-06  VER-04  COM-07
   WO-02  VER-03  COM-07
-  WO-01  NSW-02  VER-03  COM-C7
   WO-00  NSW-02  LAG-01  VER-03  COM-C7
```

72

APPENDIX INDEX

| NAME OF PROGRAM | APPENDIX |
|---|---|
| DUPDT | A |
| IEDIT | B |
| IPRINT | C |
| IUPDT | D |
| MTST | F |
| LOADTXT | G |
| MDL | H |
| RUMO | I |
| SYSNOUN | J |
| SYSVERB | K |
| INITCALL | L |
| GETSENTN | M |
| STRPASS0 | N |
| STRPASS1 | O |
| STRPASS2 | P |
| STRPASS3 | Q |
| STRPASS4 | R |
| LSKOOKUP | S |
| LEXICAL | T |
| PREP | U |
| REARR | W |
| ESYN | X |
| PPRINT | Y |
| TRPRINT | Z |
| DISPLAY | AA |
| LEVELS | BB |
| LEXICAL ROUTINES | CC |

APPENDIX INDEX (con. d)

| NAME OF PROGRAM | APPENDIX |
| --- | --- |
| CLS3 | DD |
| CLS4 | EE |
| DUPDTLS | FF |
| MACROS | GG |
| SEMANTIC | HH |
| HFC | II |
| DEDIT | JJ |
| DISKLOAD | KK |
| DPRINT | LL |
| TGPRT | MM |
| AVSPASS | NN |

**Claims**

1. A method for translation between source and target natural languages using a programmable digital computer system, the steps comprising:

(a) storing in a main memory of the computer system a source text to be translated;

(b) scanning and comparing such stored source words with dictionaries of source language words stored in a memory and for each source text word for which a match is found, storing in a file in main memory each word, and in association with each such word, coded information derived from such dictionary for use in translation of such word, the coded information including memory offset address linkages to a memory in the computer system where grammar and target language translations for the word are stored;

(c) analyzing the source text words in its file of words, a complete sentence at a time, and converting the same into a sentence in the target language utilizing the coded information and including the steps of

(1) utilizing the memory offset address linkages for obtaining the target language translations of words from a memory; and

(2) reordering the target language translation into the proper target language sequence;

the step of analyzing additionally comprising the steps of analyzing each source word in multiple passes through each sentence of the source text, assigning codes thereto, considering all the codes which previous passes have attached to a word and assigning target language synthesis codes attached to the meaning with which the code functions in the sentence, placing the word into a form corresponding to the target language dependent upon the analysis and consideration of all relevant codes assigned to the words,

characterized in that said dictionaries of source language words comprise entries containing a source language stem, the coded information associated to such entry comprising an address linkage (PST) relating to the set of valid endings permitted for said source language stem,

and in that, for each source text word, the step of comparing such word with dictionaries of source language words comprises the steps of :

- inspecting said dictionaries to determine whether a particular entry thereof matches said source text word,

- if no match is found, dropping the last letter of said source text word ; and

- repeating the sequence of said steps of inspecting and dropping the last letter until a match is

74

found with a source language stem entry of said dictionaries, the number of letters dropped being less than a predetermined number representing the maximum ending length for said source text word.

2. A method according to claim 1, wherein said dictionaries of source language words further comprise full form entries containing invariable source language words.

3. A method according to claim 1, wherein, in the case where said step of inspecting reveals that a particular stem entry matches a source text word having at least one letter dropped, the chopped-off ending of said source text word, made of the sequence of dropped letters, is compared to the set of valid endings permitted for said stem entry and, upon detecting an equality in this comparison, grammar information is stored such as the gender, number, declensional case or conjugational tense corresponding to the identified valid ending.

4. A method according to claim 1 including the steps of :
storing a dictionary of high frequency source words and associated offset address linkages, the offset address linkages identifying the storage location of grammar and meaning information for the source words ;
storing a dictionary of low frequency source words in association with grammar code meanings for each word ;
comparing the source language text words with the high frequency dictionary words and, upon detecting an equality with a word, storing the word and associated offset address linkages together in a high frequency file ; and
comparing the source language text words with the low frequency dictionary words and upon detecting an equality, storing the word and the associated grammar code meanings in a low frequency file.

5. A method according to claim 4, including the step of merging the words of the high and low frequency files together.

6. A method according to claim 4, wherein the high frequency dictionary has frequently encountered source words including prepositions and conjunctions.

7. A method according to claim 4, wherein :
second and succeeding idiom words, if any, in a source idiom are stored in at least one dictionary in memory ;
the high frequency dictionary includes the first words of source language idioms and associated therewith address linkages to second and subsequent words in the same idiom which are located in the idiom dictionary, the first word and subsequent words, if any, of an idiom having an associated target language meaning stored in association therewith ; and
during comparison with the high frequency dictionary comprising the steps of :
(a) detecting those words that are equal and are first words of idioms ;
(b) utilizing the offset address linkages to locate the additional word or words in the same idiom located in the idiom dictionary ;
(c) comparing the located further words in the idiom with the words in the source text which follow the first idiom word for an equality and ;
(d) upon detecting such an equality, storing the first idiom word together with the target language meaning into the high frequency file.

8. A method according to claim 7, comprising the step of storing each one of the second and subsequent idiom words together with an idiom tag into the high frequency file, the idiom tag designating that the word is not the first word of the idiom.

9. A method according to claim 8, comprising the step of storing the first word of an idiom together with a tag into the high frequency file, the tag designating that the word is the first word of an idiom.

10. A method according to claim 9, wherein the step of analyzing comprises the step of selecting the target meaning associated with a first idiom word as the translation of the first and subsequent idiom words.

**11.** A method according to claim 4, including the step of storing an indication in association with the words in the low frequency file, of whether the words are principal and/or participating words in limited semantic compounds.

**12.** A method, according to claim 11, wherein a separate file is stored containing limited semantic numbers for each principal word, the limited semantic numbers indicating all participating words, the limited semantic numbers of participating words being attached to the principal words in the same sequence in which the participating words form compound expressions with the principal word.

**13.** A method, according to claim 11, in which during scanning and comparing with dictionaries, information is attached to the principal word concerning all the compound expressions within which the principal word may function as key word in a compound, the attached information containing either sequences of limited semantic numbers or an address of an auxiliary storage device where such information is located, and including the additional steps of bringing into a main working memory from the auxiliary storage device during analyzing the file of words, the limited semantic numbers assigning a subject field code to the source text, if the same compound expression of the source language indicated by the limited semantic numbers have different target meanings, then selection of the correct meaning for the compound depending upon the subject field code in which the translation takes place.

**14.** A method, according to claim 12, wherein during the steps of analyzing and searching the file of words to establish whether a principal word is surrounded by supplementary words, if supplemental words are established, the limited semantic numbers of the supplementary words are compared against the limited semantic numbers stored in a limited semantic dictionary for each principal word, if a match is encountered, translating the principal and supplementary words forming a compound into the corresponding meaning.

**15.** A method, according to claim 14, including the steps of declining or conjugating the principal word according to synthesis codes of the target language and attaching these codes to each compound.

**16.** A method, according to claim 1, wherein during the steps of scanning, comparing and storing, there is included the step of attaching part of speech codes to source text words and wherein during the step of analyzing there is included the step of attaching parts of speech codes used to branch into a required routine including the step of adding the value of part of speech to a fixed address.

**17.** A method according to claim 1, the step of analyzing additionally comprising the step of keeping track of previously encountered conditions by setting a series of memory switches, each time a new part of speech is encountered a series of previously set switches are selectively turned off while additional switch or switches are selectively turned on, and including the step of executing a routine for interrogating the state of switches in a predetermined order.

**18.** A method, according to claim 17, wherein during the step of analyzing there is included the step of assigning each word of the sentence definite coded information as to whether it belongs to a main clause or subordinate clause, and including routines assigned for searching source words within such clauses for predicate(s) and subject(s).

**19.** A method, according to claim 18, in which during the step of analyzing there is included the step of supplying each source word in a sentence with pointers which express the interdependency relationships among all words in the sentence.

**20.** A method according to claim 1, the step of analyzing additionally comprising the steps of analyzing a sequence of words in the source language within phrases and clauses in relation to the target language word sequence, the target language word sequence being expressed symbolically by assigned numbers and printing out the translation of the words taking into consideration each source word, and comprising the additional steps of placing the translated words formed after analyzing in a print area in a sequence specified by the relationships between the source and target languages and set up previously by the numbers given after each word and transferring the translation when the print area is filled either directly onto a printer or onto a temporary auxiliary storage device.

**Revendications**

1.  Procédé de traduction entre des langages naturels source et cible utilisant un système à calculateur numérique programmable, comprenant les étapes consistant à :

    (a) mémoriser dans une mémoire principale du système à calculateur un texte source à traduire;

    (b) balayer et comparer les mots source ainsi mémorisés à des dictionnaires de mots du langage source mémorisés dans une mémoire et, pour chaque mot du texte source pour lequel une correspondance est trouvée, mémoriser chaque mot dans un fichier dans la mémoire principale et, en association avec chaque tel mot, des informations codées tirées d'un tel dictionnaire pour utilisation dans la traduction dudit mot, lesdites informations codées incluant des liens d'adresses décalées en mémoire vers une mémoire comprise dans le système à calculateur où des informations grammaticales et des traductions en langage cible pour le mot sont mémorisées;

    (c) analyser les mots du texte source dans son fichier de mots, une phrase complète à la fois, et convertir ceux-ci en une phrase dans le langage cible en utilisant les informations codées et incluant les étapes consistant à :

    (1) utiliser les liens d'adresses décalées en mémoire pour obtenir les traductions de mots dans le langage cible à partir d'une mémoire; et

    (2) réordonner la traduction dans le langage cible suivant la suite correcte des mots du langage cible;

    l'étape d analyser comprenant en outre les étapes consistant à analyser chaque mot source au cours de passages multiples par chaque phrase du texte source, affecter des codes à ceux-ci, examiner tous les codes que des passages précédents ont affectés à un mot et affecter des codes de synthèse dans le langage cible liés à la signification avec laquelle le code fonctionne dans la phrase, en mettant le mot sous une forme correspondant au langage cible selon l'analyse et l'examen de tous les codes pertinents affectés aux mots,

    caractérisé en ce que lesdits dictionnaires de mots du langage source comprennent des entrées contenant un tronc du langage source, les informations codées associées à une telle entrée comprenant un lien d'adresse relatif à l'ensemble des terminaisons valides permises pour ledit tronc du langage source,

    et en ce que, pour chaque mot du texte source, l'étape de comparer ce mot à des dictionnaires de mots du langage source comprend les étapes consistant à :

    - examiner lesdits dictionnaires pour déterminer si une entrée de ceux-ci correspond audit mot du texte source,

    - si aucune correspondance n est trouvée, supprimer la dernière lettre dudit mot du texte source; et

    - répéter la suite desdites étapes d'examiner et de supprimer la dernière lettre jusqu'à ce qu'une correspondance soit trouvée avec une entrée du tronc du langage source dans lesdits dictionnaires, le nombre de lettres supprimées étant inférieur à un nombre prédéterminé représentant la longueur maximale de la terminaison pour ledit mot du texte source.

2.  Procédé selon la revendication 1, caractérisé en ce que lesdits dictionnaires de mots du langage source comprennent en outre des entrées sous forme complète contenant des mots invariables du langage source.

3.  Procédé selon la revendication 1, caractérisé en ce que, dans le cas où ladite étape d'examiner révèle qu'une entrée du tronc correspond à un mot du texte source ayant au moins une lettre supprimée, la terminaison supprimée dudit mot du texte source, faite de la suite de lettres supprimées, est comparée à l'ensemble des terminaisons valides permises pour ladite entrée du tronc et, lors de la détection d'une égalité dans cette comparaison, des informations grammaticales sont mémorisées telles que le genre, le nombre, le cas de déclinaison ou le temps de conjugaison correspondant à la terminaison valide.

4.  Procédé selon la revendication 1, caractérisé en ce qu'il inclut les étapes consistant à :

    - mémoriser un dictionnaire de mots source à grande fréquence d'occurrence et des liens d'adresses décalées associées, les liens d'adresses décalées identifiant l'emplacement de mémorisation d'informations grammaticales et de signification pour les mots source;

    - mémoriser un dictionnaire de mots source à faible fréquence d'occurrence en association avec des significations de codes grammaticaux pour chaque mot;

- comparer les mots du texte en langage source aux mots du dictionnaire à grande fréquence d'occurrence et, lors de la détection d'une égalité à un mot, mémoriser le mot et les liens d'adresses décalées associées avec un fichier de mots à grande fréquence d'occurrence; et
- comparer les mots du texte en langage source aux mots du dictionnaire à faible fréquence d'occurrence et, lors de la détection d'une égalité, mémoriser le mot et les significations de codes grammaticaux associés dans un fichier de mots à faible fréquence d'occurrence.

5. Procédé selon la revendication 4, caractérisé en ce qu'il inclut l'étape consistant à fusionner ensemble les mots des fichiers de mots à grande et faible fréquences d'occurrence.

6. Procédé selon la revendication 4, caractérisé en ce que le dictionnaire des mots à grande fréquence d'occurrence contient des mots source fréquemment rencontrés et notamment les prépositions et les conjonctions.

7. Procédé selon la revendication 4, caractérisé en ce que les deuxième et suivants des mots d'une locution, le cas échéant, dans une locution source sont mémorisés dans au moins un dictionnaire en mémoire;
- le dictionnaire des mots à grande fréquence d'occurrence inclut les premiers mots des locutions du langage source et, associés à ceux-ci, des liens d'adresses du deuxième et suivants des mots de la même locution qui sont contenus dans le dictionnaire de locutions, le premier et les suivants des mots, le cas échéant, d'une locution ayant une signification associée dans le langage cible mémorisée avec celui-ci; et
- la comparaison au dictionnaire des mots à grande fréquence d'occurrence comprenant les étapes consistant à :
(a) détecter les mots qui sont égaux et sont les premiers mots de locutions;
(b) utiliser les liens d'adresses décalées pour localiser le ou les mots supplémentaires dans la même locution contenue dans le dictionnaire de locutions;
(c) comparer les autres mots de la locution aux mots du texte source qui suivent le premier mot de la locution pour rechercher une égalité; et
(d) lors de la détection d'une telle égalité, mémoriser le premier mot de la locution avec la signification dans le langage cible dans le fichier des mots à grande fréquence d'occurrence.

8. Procédé selon la revendication 7, caractérisé en ce qu'il comprend l'étape consistant à mémoriser chacun du deuxième et suivants des mots des locutions avec une étiquette de locution dans le fichier des mots à grande fréquence d'occurrence, l'étiquette de locution indiquant que le mot n'est pas le premier mot de la locution.

9. Procédé selon la revendication 8, caractérisé en ce qu'il comprend l'étape consistant à mémoriser le premier mot d'une locution avec une étiquette dans le fichier des mots à grande fréquence d'occurrence, l'étiquette indiquant que le mot est le premier mot d'une locution.

10. Procédé selon la revendication 9, caractérisé en ce que l'étape d'analyser comprend l'étape de sélectionner la signification, dans le langage cible, associée au premier mot d'une locution comme traduction du premier mot de la locution et des mots suivants.

11. Procédé selon la revendication 4, caractérisé en ce qu'il inclut l'étape de mémoriser une indication en association avec les mots contenus dans le fichier des mots à faible fréquence d'occurrence, indiquant si les mots sont des mots principaux et/ou participants dans des composés sémantiques limités.

12. Procédé selon la revendication 11, caractérisé en ce qu'un fichier distinct est mémorisé contenant des numéros sémantiques limités pour chaque mot principal, les numéros sémantiques limités indiquant tous les mots participants, les numéros sémantiques limités des mots participants étant liés aux mots principaux dans le même ordre dans lequel les mots participants forment des expressions composées avec le mot principal.

13. Procédé selon la revendication 11, caractérisé en ce que, pendant le balayge et la comparaison aux dictionnaires, des informations sont liées au mot principal concernant toutes les expressions composées dans lesquelles le mot principal peut fonctionner comme mot-cié dans un composé, les informations liées contenant soit des suites de numéros sémantiques limités, soit une adresse d'un dispositif de mémorisation auxiliaire dans lequel ces informations sont contenues, et en ce qu'il inclut les étapes supplémentaires consistant à introduire dans une mémoire de travail principale, à partir du dispositif de mémorisation auxiliaire, pendant l'analyse du fichier de mots, les numéros sémantiques limités affectant un code de domaine du sujet au texte source si la même expression composée du langage source indiquée par les numéros sémantiques limités a différentes significations dans le langage cible, ensuite sélectionner la signification correcte pour le composé selon le code de domaine du sujet dans lequel la traduction est effectuée.

14. Procédé selon la revendication 12, caractérisé en ce que, pendant les étapes d'analyser et de chercher dans le fichier de mots pour établir si un mot principal est entouré de mots complémentaires, si des mots complémentaires sont trouvés, les numéros sémantiques limités des mots complémentaires sont comparés aux numéros sémantiques limités mémorisés dans un dictionnaire sémantique limité pour chaque mot principal et, si une correspondance est trouvée, traduire les mots principal et complémentaires formant un composé en la signification correspondante.

15. Procédé selon la revendication 14, caractérisé en ce qu'il inclut les étapes consistant à décliner ou conjuguer le mot principal selon des codes de synthèse du langage cible et à lier ces codes à chaque composé.

16. Procédé selon la revendication 1, caractérisé en ce que pendant les étapes de balayer, comparer et mémoriser, il est inclus l'étape consistant à lier une partie des codes de paroles aux mots du texte source, et en ce que pendant l'étape d'analyser, il est inclus l'étape de lier des parties de codes de paroles utilisées pour renvoyer à un programme nécessaire incluant l'étape d'ajouter la valeur de la partie de paroles à une adresse fixe.

17. Procédé selon la revendication 1, caractérisé en ce que l'étape d'analyser comprend en outre l'étape de faire le suivi des états précédemment rencontrés en positionnant une série d'interrupteurs de mémoire, chaque fois qu'une nouvelle partie de paroles est rencontrée, une série d'interrupteurs précédemment positionnés sont sélectivement ouverts tandis qu'un ou des interrupteurs supplémentaires sont sélectivement fermés, et inclut l'étape consistant à exécuter un programme pour interroger l'état des interrupteurs dans un ordre déterminé.

18. Procédé selon la revendication 17, caractérisé en ce que, pendant l'étape d'analyser, il est inclus l'étape consistant à affecter à chaque mot de la phrase des informations codées définies indiquant s'il appartient à une proposition principale ou à une proposition subordonnée, et en ce qu'il inclut des programmes prévus pour chercher des mots du texte source dans ces propositions pour le ou les prédicats et sujets.

19. Procédé selon la revendication 18, caractérisé en ce que, pendant l'étape d'analyser, il est inclus l'étape consistant à munir chaque mot du texte source dans une phrase de pointeurs qui expriment les relations d'interdépendance entre tous les mots de la phrase.

20. Procédé selon la revendication 1, caractérisé en ce que l'étape d'analyser comprend en outre les étapes consistant à analyser une suite de mots dans le langage source à l'intérieur de phrases et de propositions en relation avec la suite de mots du langage cible, la suite de mots du langage cible étant exprimée symboliquement par des numéros affectés, et imprimer la traduction des mots en prenant en considération chaque mot du texte source, et en ce qu'il comprend les étapes supplémentaires consistant à placer les mots traduits formés après avoir analysé, dans une zone d'impression dans un ordre spécifié par les relations entre les langages source et cible et fixé préalablement par les numéros donnés après chaque mot, et transférer la traduction lorsque la zone d'impression est remplie, soit directement à une imprimante, soit temporairement à un dispositif de mémorisation auxiliaire.

**Patentansprüche**

1. Verfahren zum Übersetzen zwischen natürlichen Ursprungssprachen und natürlichen Zielsprachen unter Verwendung eines programmierbaren digitalen Computersystems, mit folgenden Schritten:
   (a) Speichern eines zu übersetzenden Ursprungstextes in einem Hauptspeicher des Computersystems;

(b) Abtasten und Vergleichen gespeicherter Ursprungswörter mit Wörterbüchern aus Wörtern der Ursprungssprache, die in einem Speicher gespeichert sind, wobei für jedes Wort des Ursprungstextes, für das eine Übereinstimmung gefunden wird, in einer Datei im Hauptspeicher jedes Wort und in Zuordnung zu jedem solchen Wort aus dem Wörterbuch hergeleitete codierte Informationen für die Verwendung bei der Übersetzung jedes Worts abgespeichert werden, wobei die codierten Informationen Speicheroffset-Adressenverbindungen zu einem Speicher im Computersystem enthalten, in dem Grammatik- und Zielsprachenübersetzungen für das Wort gespeichert sind;

(c) Analysieren der Wörter des Quellentextes in seiner Wörterdatei, und zwar jeweils an einem Zeitpunkt einen vollständigen Satz, und Umsetzen des Satzes in einen Satz der Zielsprache unter Verwendung der codierten Informationen und einschließlich der Schritte:

(1) Anwenden der Speicheroffset-Adressenverbindungen, damit die Zielsprachenübersetzungen von Wörtern aus einem Speicher erhalten werden; und

(2) Umordnen der Zielsprachenübersetzung in die richtige Zielsprachenreihenfolge;

wobei der Analysierschritt zusätzlich die Schritte enthält, bei denen jedes Ursprungswort in mehreren Durchläufen durch jeden Satz des Ursprungstextes unter Zuordnung von Codes zu dem Wort analysiert wird, alle Codes, die in vorherigen Durchläufen einem Wort hinzugefügt worden sind, berücksichtigt werden und Zielsprachen-Synthesecodes zugeordnet werden, die mit der Bedeutung verbunden sind, mit der der Code in dem Satz wirkt, wobei das Wort abhängig von der Analyse und der Berücksichtigung aller relevanten Codes, die den Wörtern zugeordnet sind, in eine der Zielsprache entsprechende Form gebracht wird, dadurch gekennzeichnet, daß die Wörterbücher aus Wörtern der Ursprungssprache Einträge umfassen, die einen Ursprungssprachstamm enthalten, wobei die diesem Eintrag zugeordnete codierte Information eine Adressenverbindung (PST) umfaßt, die sich auf eine Gruppe gültiger Endungen bezieht, die für diesen Ursprungssprachstamm zulässig sind, und daß für jedes Wort des Ursprungstextes der Schritt des Vergleichens des Wortes mit den Wörterbüchern aus Wörtern der Ursprungssprache folgende Schritte umfaßt:

- Untersuchen der Wörterbücher, um festzustellen, ob ein bestimmter Eintrag mit dem Wort des Ursprungstextes übereinstimmt,

- Weglassen des letzten Buchstabens des Wortes des Ursprungstextes, wenn keine Übereinstimmung gefunden wird, und

- Wiederholen der Folge der Schritte des Untersuchens und Weglassens des letzten Buchstabens, bis eine Übereinstimmung mit einem Eintrag eines Ursprungssprachstamms der Wörterbücher gefunden wird, wobei die Anzahl der weggelassenen Buchstaben kleiner als eine vorbestimmte Anzahl ist, die die maximale Endungslänge für dieses Wort des Ursprungstextes darstellt.

2. Verfahren nach Anspruch 1, dadurch gekennzeichnet, daß die Wörterbücher aus Wörtern der Ursprungssprache ferner Vollformeinträge umfassen, die unveränderliche Ursprungssprachwörter enthalten.

3. Verfahren nach Anspruch 1, bei welchem für den Fall, daß der Schritt des Überprüfens ergibt, daß ein bestimmter Stammeintrag mit einem Wort des Ursprungstextes mit wenigstens einem weggelassenen Buchstaben übereinstimmt, die abgeschnittene Endung des Wortes des Ursprungstextes, die aus der Folge der weggelassenen Buchstaben besteht, mit der Gruppe der gültigen Endungen, die für diesen Stammeintrag zugelassen sind, verglichen wird, worauf beim Feststellen der Gleichheit bei diesem Vergleichsvorgang eine Grammatikinformation wie das Geschlecht, die Zahl, der Deklinationsfall oder die Konjugationsfall entsprechend der identifizierten gültigen Endung gespeichert wird.

4. Verfahren nach Anspruch 1, enthaltend folgende Schritte:

Speichern eines Wörterbuchs aus Hochfrequenz-Ursprungswörtern und zugeordneten Offset-Adressenverbindungen, wobei die Offset-Adressenverbindungen den Speicherplatz von Grammatik- und Bedeutungsinformationen für die Ursprungswörter identifizieren;

Speichern eines Wörterbuchs aus Niederfrequenz-Ursprungswörtern in Zuordnung zu Grammatikcode-Bedeutungen für jedes Wort;

Vergleichen der Textwörter der Ursprungssprache mit den Hochfrequenz-Wörterbuchwörtern und, für den Fall der Feststellung einer Übereinstimmung mit einem Wort, Abspeichern des Wortes und zugeordneter Offset-Adressenverbindungen gemeinsam in einer Hochfrequenzdatei; und

Vergleichen der Textwörter der Ursprungssprache mit den Niederfrequenz-Wörterbuchwörtern, und für den Fall der Feststellung einer Übereinstimmung Abspeichern der Wörter und zugeordneter Grammatikcode-Bedeutungen in einer Niederfrequenzdatei.

5. Verfahren nach Anspruch 4, enthaltend den Schritt des Vereinigens der Wörter der Hochfrequenzdatei und der Niederfrequenzdatei.

6. Verfahren nach Anspruch 4, bei welchem das HochfrequenzWörterbuch häufig vorgefundene Ursprungswörter einschließlich von Präpositionen und Konjunktionen enthält.

7. Verfahren nach Anspruch 4, bei welchem:
   zweite und nachfolgende idiomatische Wörter, falls in einem Ursprungsidiom enthalten, in wenigstens einem Wörterbuch im Speicher abgespeichert werden;
   das Hochfrequenz-Wörterbuch die ersten Wörter von Ursprungssprachen-Idiomen und in Zuordnung dazu Adressenverbindungen zu zweiten und nachfolgenden Wörtern im gleichen Idiom enthält, die sich im Idiom-Wörterbuch befinden, wobei in Zuordnung zu dem ersten Wort und gegebenenfalls vorhandenen zweiten Wörtern eines Idioms eine zugeordnete Zielsprachenbedeutung abgespeichert ist; und
   während des Vergleichs mit dem Hochfrequenzwörterbuch folgende Schritte beinhaltet sind:
   (a) Erfassen der Wörter, die gleich sind und erste Wörter von Idiomen sind;
   (b) Verwenden der Offset-Adressenverbindungen zum Auffinden des oder der zusätzlichen Wörter im gleichen Idiom im Idiomwörterbuch;
   (c) Vergleichen der aufgefundenen weiteren Wörter im Idiom auf Übereinstimmung mit Wörtern des Ursprungstextes, die auf das erste Idiomwort folgen; und
   (d) beim Feststellen einer solchen Übereinstimmung, Abspeichern des ersten Idiomwortes zusammen mit der Bedeutung in der Zielsprache in der Hochfrequenzdatei.

8. Verfahren nach Anspruch 7, enthaltend den Schritt des Abspeicherns jedes der zweiten und nachfolgenden Idiomwörter zusammen mit einem Idiomkennzeichen in der Hochfrequenzdatei, wobei das Idiomkennzeichen angibt, daß das Wort nicht das erste Wort des Idioms ist.

9. Verfahren nach Anspruch 8, enthaltend den Schritt des Abspeicherns des ersten Wortes eines Idioms zusammen mit einem Kennzeichen in der Hochfrequenzdatei, wobei das Kennzeichen angibt, daß das Wort das erste Wort eines Idioms ist.

10. Verfahren nach Anspruch 9, bei welchem der Schritt des Analysierens den Schritt des Auswählens der Zielbedeutung umfaßt, die dem ersten Idiomwort als Übersetzung des ersten und nachfolgender Idiomwörter zugeordnet ist.

11. Verfahren nach Anspruch 4, enthaltend den Schritt des Abspeicherns einer Angabe in Zuordnung zu den Wörtern in der Niederfrequenzdatei darüber, ob die Wörter grundlegende und/oder Beiwörter in begrenzten semantischen Zusammensetzungen sind.

12. Verfahren nach Anspruch 11, bei welchem eine getrennte Datei abgespeichert wird, die begrenzte semantische Zahlen für jedes grundlegende Wort und begrenzte semantische Zahlen für alle Beiwörter enthält, wobei die begrenzten semantischen Zahlen von Beiwörtern den grundlegenden Wörtern in der gleichen Reihenfolge hinzugefügt sind, in der die Beiwörter mit dem grundlegenden Wort zusammengesetzte Ausdrücke bilden.

13. Verfahren nach Anspruch 11, bei welchem während des Abtastens und Vergleichens mit Wörterbüchern dem grundlegenden Wort Informationen hinzugefügt werden, die alle zusammengesetzten Ausdrücke betreffen, in denen das grundlegende Wort als Schlüsselwort in einer Zusammensetzung wirken kann, wobei die hinzugefügten Informationen entweder Folgen begrenzter semantischer Zahlen oder eine Adresse einer Hilfsspeichervorrichtung enthalten, in der sich solche Informationen befinden, und wobei die zusätzlichen Schritte enthalten sind, daß während des Analysierens der Datei aus Wörtern aus der Hilfsspeichervorrichtung in einen Hauptarbeitsspeicher die begrenzten semantischen Zahlen gebracht werden, die dem Ursprungstext einen Subjektfeldcode zuordnen, wenn der gleiche zusammengesetzte Ausdruck der Ursprungssprache, der durch die begrenzten semantischen Zahlen angegeben wird, unterschiedliche Zielbedeutungen hat, worauf dann eine Auswahl der richtigen Bedeutung der Zusammensetzung abhängig von dem Subjektfeldcode getroffen wird, in dem die Übersetzung stattfindet.

**14.** Verfahren nach Anspruch 12, bei welchem während des Schrittes des Analysierens und Untersuchens der Datei aus Wörtern zur Feststellung, ob ein grundlegendes Wort von ergänzenden Wörtern umgeben ist, wenn ergänzende Wörter festgestellt worden sind, die begrenzten semantischen Zahlen der ergänzenden Wörter mit den begrenzten semantischen Zahlen verglichen werden, die in einem begrenzten semantischen Wörterbuch für jedes grundlegende Wort gespeichert sind, wobei dann, wenn eine Übereinstimmung aufgefunden wird, das grundlegende Wort und die ergänzenden Wörter, die eine Zusammensetzung bilden, in die entsprechende Bedeutung übersetzt werden.

**15.** Verfahren nach Anspruch 14, enthaltend den Schritt des Deklinierens oder Konjugierens des grundlegenden Wortes entsprechend Synthesecodes der Zielsprache und des Anfügens dieser Codes an jede Zusammensetzung.

**16.** Verfahren nach Anspruch 1, bei welchem die Schritte des Abtastens, Vergleichens und Speicherns den Schritt enthalten, daß Ursprungstextwörtern Sprachcodeteile hinzugefügt werden, und bei welchem ferner während des Schrittes des Analysierens der Schritt enthalten ist, daß Teile von Sprachcodes hinzugefügt werden, die zum Verzweigen in eine erforderliche Routine benutzt werden, die den Schritt des Hinzufügens des Teils der Sprache zu einer festen Adresse enthält.

**17.** Verfahren nach Anspruch 1, bei welchem der Schritt des Analysierens zusätzlich den Schritt des Verfolgens zuvor aufgefundener Bedingungen durch Einstellen einer Folge von Speicherschaltern umfaßt, wobei jedesmal dann, wenn ein neuer Teil der Sprache vorgefunden wird, eine Reihe zuvor eingestellter Schalter in selektiver Weise abgeschaltet wird, während ein oder mehrere zusätzliche Schalter in selektiver Weise eingeschaltet werden, und ferner den Schritt des Durchführens einer Routine zum Abfragen des Zustandes der Schalter in einer vorbestimmten Reihenfolge umfaßt.

**18.** Verfahren nach Anspruch 17, bei welchem während des Schrittes des Analysierens der Schritt enthalten ist, daß jedem Wort des Satzes eine bestimmte codierte Information darüber zugeordnet wird, ob es einem Hauptsatz oder einem Nebensatz angehört, und Routinen umfaßt, die dem Untersuchen von Ursprungswörtern innerhalb solcher Sätze auf Prädikat(e) und Subjekt(e) zugeordnet sind.

**19.** Verfahren nach Anspruch 18, bei welchem während des Schrittes des Analysierens der Schritt enthalten ist, daß jedes Ursprungswort in einem Satz mit einem Hinweis versehen wird, der die gegenseitige Abhängigkeit unter allen Wörtern in dem Satz ausdrückt.

**20.** Verfahren nach Anspruch 1, bei welchem der Schritt des Analysierens die Schritte enthält, bei denen eine Folge von Wörtern in der Ursprungssprache innerhalb von Sätzen und Satzteilen in bezug auf die Zielsprachen-Wortfolge analysiert wird, wobei die Zielsprachen-Wortfolge symbolisch durch zugeordnete Zahlen ausgedrückt ist und die Übersetzung der Wörter unter Berücksichtigung jedes Ursprungswortes gedruckt wird, und die zusätzlichen Schritte enthält, bei denen die nach der Analysierung gebildeten übersetzten Wörter in einen Druckbereich in einer Folge eingesetzt werden, die durch die Beziehungen zwischen den Ursprungs- und Zielsprachen angegeben ist und zuvor durch die nach jedem Wort angegebenen Zahlen eingestellt worden ist, und wobei dann, wenn der Druckbereich gefüllt ist, die Übersetzung entweder direkt in einen Drucker oder in eine zeitweise benutzte Hilfsspeichervorrichtung übertragen wird.

FIG 1

```
        ┌──────────┐
        │   IBM    │
        │  MT/ST   │
        └──────────┘

      ( RUSS.        ┌──────────┐
        TEXT )       │ RUSSIAN  │
                     │  TEXT    │
        ┌──────────┐ └──────────┘
        │DATA CORP.│
        │MT/ST TAPE│
        │CONVERTER │
        └──────────┘

      ( RUSS.
        TEXT )

        ┌──────────┐            ┌──────────┐
        │   IBM    │────────────│  TRANS.  │
        │  360/65  │            │  DICT.   │
        └──────────┘            │  AND     │
                                │  PRO-    │
      ( ENG.                    │  GRAMS   │
        TRANS. )                └──────────┘

        ┌──────────┐
        │   IBM    │
        │  1401    │
        └──────────┘

        ┌──────────┐
        │ ENGLISH  │
        │TRANSLATION│
        │ LISTING  │
        └──────────┘
```

SYSTRAN Translation System

Fig-1-A

SYSTRAN 360/65 Operation
FLOW DIAGRAM

*FIG 1A* CON'T

1

2

SORTED
LF
TEXT
WORDS

STEM/
L.S.
DICT.

MDL
MAIN
DICTIONARY
LOOKUP

LF
TEXT
WORDS
W/GR

TEXT WORDS
NOT FOUND
IN DICT.

SORT 2

SORTED
LF TEXT
WORDS
W/GR.

HF
TEXT
WORDS

ANALYSIS
AND ENGLISH
TRANSLATION

HF/L.S.
DICT.

RUS.-ENG.
CORRESP.
LISTING

ENG.
TRANS.

85

HF/IDIOM TABLE

Merge with
Low Frequency
Words after
MDL

Stored HF Words
with Offsets

HF/ID

Text
Words

2nd Words

IDIOM TABLES

3rd

LF/ID
GO TO MDL

4th

5th

6th

7th

Stored Grammar
& Meaning Information

HIGH FREQUENCY/IDIOM LOOKUP

FIG.2

EP 0 274 281 B1

MAIN DICTIONARY LOOKUP

FIG. 3

FIG_4

FIG_5

II

10

10A

CERT CELOVEKA - PEREVODCIKA

GIPERTROFI4 INDIVIDUAL6NOGO

... OBLADAT6 OBYCNY1 P.

PEREVEDENNOM PEREVOD PEREVODE

DISK FILE

LOW FREQUENCY OR STEM DICTIONARY

WORD I

1 O B Y C N Y 1    NO MATCH
2 O B Y C N Y ▨    NO MATCH
3 O B Y C N ▨ ▨    MATCH
  + + + + +

OBYCN            20 80 202000    197*
OBYCNO           00 00 303F00    0000

PS 0 81000004 USUAL
   1 8100000E USUAL
   3 92000104 ORDINARY
PS 0 00000000 USUALLY

* 197    NOV

$$\left\{ \begin{array}{lllll} Y1 & OGO & OMU & \begin{array}{c}OGO\\Y1\end{array} & YM & OM \\ A4 & O1 & O1 & UH & \begin{array}{c}OH\\O1\end{array} & O1 \\ OE & OGO & OMU & OE & YM & OM \end{array} \right\}$$

YE YX YM $\begin{array}{c}YE\\YX\end{array}$ YMI YX

Short forms = -, A, O, Y; Adverb = O
Comparative = EE

WORD II

1 P E R E V O D    MATCH
  + + + + + +

PEREVOD | 10 40 101080    044* | PS 0 40040104 TRANSLATION
        |                      |    1 40000104 CONVERSION/TRANSLATION
        | CASES -(NONE,NONE,NONE,NONE) |    50000104 CONVERSION
        | PRI   -(NONE,DURING) |
        | NA    -(INTO,NONE,NONE,NONE) |    50000104 TRANSLATION
        |                      |    2 40000104 TRANSFER
        |                      |      40000007 TRANSFERRING
        |                      |    3 40040104 TRANSLATION
        |                      |      40000104 CONVERSION
        |                      |      40000104 REDUCTION

* 044   STAKAN       _  A  U  _  OM E      Y  OV AM Y  AMI AX

EXAMPLE OF MAIN DICTIONARY LOOK-UP

**FIG_6**

| WORD 1 | WORD 2 | WORD 3 | SAVE AREA |
|---|---|---|---|
| O B Y C N. | P E R E V O D | M O J E T | HUMAN TRANSLATION |
| S | LS# A23 | COMPOUND ADDR. | P S | MN. ADDR. | LS# B39 | COMPOUND ADDR. | S | MN. ADDR. | | | |

**COMPARE AREA**

| REFLEXIVE INDICATOR | 1 S | 2 P | 3 | 4 | 5 | 6 | 7 | 8 |
|---|---|---|---|---|---|---|---|---|

PRINCIPAL WORD = 2

ENGLISH MEANING AREA

| PW | 1 | 2 | 3 | 4 | 5 | 6 | 7 | 8 | HUMAN TRANSLATION |

**COMPOUND GROUPS**

| GRP 1 * | | GRP 2 + | | GRP 5 | |
|---|---|---|---|---|---|
| # OF COMP. | COMPOUNDS | # OF COMP. | COMPOUNDS | # OF COMP. | COMPOUNDS |

LIMITED SEMANTICS DICTIONARY

**\* GROUP 1**

~~PEREVOD CISEL~~
PEREVOD DHIMOV V SANTIMETRY
PEREVOD EDINIO MKS V EDINIQY SGS
~~PEREVOD IZ ODNIX EDINIQ MLR V DRUGIE~~
PEREVOD PO PREDLOJENI4M
PEREVCD PO PREDLOJENI4M
~~PEREVED PREDPRI4TI1 NA IZGOTOVLENIE MIRNO7 PRODUKSII~~
PEREVOD PREDPRI4TI4 NA POTOCNOE PROIZVODSTVO
PEREVOD OEXA NA POTOCNOE PROIZVODSTVO
~~PEREVOD REMN4~~
PEREVOD S UONOGO 4ZYKA NA DRUGO1
PEREVOD S RUSSKOGO NA ANGLIISKI1
~~PEREVOD SKOROSTE1~~
PEREVOD STRELOK
PEREVOD STRELOK ZAVODNO1 GOLOVKO1
~~PEREVOD V SB.~~
PEREVOD 31EKTROCCASOV

**+ GROUP 2**

| ANGLIISKI1 | PEREVOD |
| MAWINNY1 | PEREVOD |
| OBYCNY1 | PEREVOD | MATCH |
| RUSSKI1 | PEREVOD |

EP 0 274 281 B1

FIG. 7

Fig_8

MAIN
DICTIONARY
LOOK-UP (MDL)
MEMORY-12

DISK X

DISK Y

DISK Z

WORD
TABLES {

LONG
WORDS
(8-24-CH)

MED.
WORDS
(4-7CH)

SHORT
WORDS
(1-3CH)

FIRST
WORD HIGH-
ER THAN WORD
IN TABLES

REFILL
CORRESPOND-
ING TABLE

MATCH WORD
IN CORRESP-
ONDING TABLE

WORD MATCHES

YES

NO

CONSIDER
FIRST
WORD

TAKE OFF
ENDINGS
(ONE CH
BY ONE )

TAKE
DICTIONARY
INFORM-
ATION

NO

MAX
ENDING LENGTH
EXHAUSTED

YES

CAN
WORD BE
NUMBER

YES

ATTACH
CORRESP-
ONDING
P.O.S. CODE

NO

ANALYZE
END OF WORD
DET POSSIBLE
P.O.S. FUNCTION

SORT WORDS
& ATTACH
SEQUENCE
NUM.

B

PLACE
THIS WORD
ALSO IN
NOT FOUND
WORD LIST

OUTPUT
I

A

TO

GETSENTN

RESORT IN
TEXT SEQ.
USING SEQ.
NUMBERS

Fig. 9

INITCALL

MEMORY

INITCALL PROGRAM

CALL TRANSLATION PROGRAMS FROM DISK

ALL TRANSLATION PROGRAMS IN MEMORY

YES — GIVE CONTROL TO GETSENTN

NO

GETSENTN PROGRAM

LS LOOK-UP

STRPASS 0

STRPASS 1

STRPASS 2

STRPASS 3

STRPASS 4

PREPTR

LEXICAL

SEMANTIC

REARR

TLSYN (ESYN)

PRINT

*Fig_ 10*

GETSENTN

Fig_ 11

STRPASS  O

MEMORY

SENTENCE ANALYSIS AREA

| 0 |
|---|
| 1 |
| 2 |
| 3 |
| 4 |
| ... |

HOMOGRAPHS

| 70 |
|---|
| 1 |
| 2 |

CONSIDER WORD 'O' IN ANALYSIS AREA

STRPASS  O

STRPASS  1

CONSIDER NEXT WORD

LAST WORD +1 SENTENCE

TRANSFER TO NEXT PROGRAM

HOMOGR. IN THE SENTENCE

PLACE THE CORRECT P.O.S. HOM. INTO ANALYSIS AREA

BASIC AMBIGUITIES IN THE SENTENCE

RESOLVE THEM

NUMBERS & FORMULAE IN SENTENCE

MARK THEM FOR FOLLOWING PROGRAMS

UNAMBIG. SYNTACTIC RELATIONS

RESERVE THIS WORD FOR UNAMBIGUOUS SYNTACTIC CONECTION

FIG. 12    STRPASS 1

FIG_13

10

POTENTIAL GOVERNOR ON THE RIGHT — YES → WAS NOUN RESET IN PASS O FOR UNAMBIGUOS SYNTACTIC CONNECTION FROM LEFT — YES → INFINITIVE TO THE RIGHT — YES → CAN NOUN GOVERN THE INFINTIVE — YES → CODE NOUN AND ITS INFINITIVE OBJECT ACCORDINGLY

NO

NO

NO

CAN NOUN BECOME OBJECT OF POTENTIAL GOVERNOR — YES → CODES GOVERN AND THIS NOUN ACCORDINGLY

NO

NO

CLAUSE INITIATOR TO THE RIGHT

YES

CAN NOUN GOVERN CLAUSE INITIATOR — YES → CODE NOUN AND ITS CLAUSE OBJECT ACCORDINGLY

NO

CODE NOUN AND ITS ADNOMINAL GENITIVE ACCORDINGLY ← YES — CAN THAT NOUN BECOME ADNOMINAL GENITIVE OF NOUN UNDER CONSIDERATION ← OTHER NOUN TO THE RIGHT

NO

NO

CODE NOUN AND ITS NOUN OBJECT ← YES — CAN CURRENT NOUN GOVERN THE ONE TO RIGHT — ADJ OR PARTICIPLE TO THE RIGHT — YES → CAN ADJ OR PARTICIPLE BELONG TO THE NOUN

NO

NO

REMEMBER PREVIOUS NOUN IN RESERVE NOUN SWITCH SET WITH CURRENT NOUN, NOUN SWITCH

CODE ADJ OR PARTICIPLE AS MODIFIER OF THE NOUN

SET WITH THIS NOUN THE NOUN ← GO TO COMMON CONTINUATION ← YES — IS NOUN PRECEDED BY A COMA

NO

STRPASS 1
POS 04

FIG_14

POS 04
FINITE VERB

TAKE CARE OF EXCEPTIONAL VERBAL INHERENT TO THE SOURCE LANGUAGE

DO NEGATION SUBROUTINE

DO VERBAL GOVERNMENT SUBROUTINE

DO CONDITION QUESTION SUBROUTINE

VERB STILL HAVE OBJECT

SET CORRESPONDING REMEMBERING SWITCH

SET VERB FORM SWITCH

GO TO COMMON CONTINUATION

# FIG 15

STRPASS 1
POS 20 & 80

```
          ◇ POS 20&80
            ADJECTIVE
            PARTICIPLE

          ◇ DID
            PASS 'O'
            DECIDE THAT THIS
            WORD BELONG UNAM-
            -BIGOUSLY TO
            LEFT

          ▭ DO
            NEGATION
            SUBROUTINE

          ◇ IS
            CLAUSE INITIATOR    ▭ DO
            SWITCH                CLAUSE
                                  DEPENDENCY
                                  SUBROUTINE

          ◇ HAS             ◇ CAN         ▭ DO SUBROUTINE
            AN                THIS WORD      WHICH ATTACHED
            AGREEMENT BEEN    BELONG TO SUCH THE CORRESPONDING
            INITIATED         AN AGREE-      WORDS TO THE
                             MENT            CENTRAL WORD
                                             AND THIS WORD

          ◇ IS              ◇ CAN
            THERE A           THIS WORD
            NOUN FORM         AGREE WITH
            TO THE            THE NOUN
            RIGHT

          ◇ IS              ◇ CAN         ▭ DO
            THERE A           WORD          SUBROUTINE WHICH
            NOUN ADJ. TO      AGREE WITH    SETS UP THE
            THE RIGHT WHICH   ADJ-NOUN      RELATIONSHIP
            FUNCTIONS AS
            NOUN

          ▭ REMEMBER THIS
            ADJ. OR PART
            WITHIN RIGHT
            AGREEMENT
            SWITCH

          ▭ GO
            TO COMMON
            CONTINUATION
```

99

FIG. 16    STR PASS 2

MEMORY

SENTENCE ANALYSIS AREA

| 0 |
| 1 |
| 2 |
| 3 |
| 4 |

CONSIDER WORD -1 IN SENTENCE

STR PASS 2

STR PASS 3

ADD ONE TO WORD COUNT

LAST WORD IN THE SENTENCE

MARK LEVEL

WORD NEW CLAUSE INITIATOR → MARK LEVEL

WORD PHRASE BOUNDARY → SEARCH FOR PHRASE END → MARK BOUNDARIES TO POINT TO EACH OTHER

WORD DIRECT OBJECT → MULT. OBJECTS POSSIBLE → EXTEND CODES

ADJUST WORD COUNT

WORD ADNOMINAL GENITIVE → MULTIPLE ADNOMINAL GEN. POSSIBLE → EXTEND CODES

# FIG 17

STR PASS 3

Fig_1B

STR PASS 4

*Fig_ 19*

PREPTR

MEMORY

| SENTENCE ANALYSIS AREA |
|---|
| 0 |
| 1 |
| 2 |
| 3 |
| 4 |
| ... |
| ... |

CONSIDER
WORD-1
IN SENTENCE

ADD ONE TO
WORD
COUNT

LAST
WORD IN THE
SENTENCE

PREPTR

LEXICAL

IS
WORD A
PREPOSITION

YES

PREPOSITION
HAS A SPECIAL
ROUTINE

DO
CORRESPONDING
ROUTINE

IS
PREPOSITION
GOVERNED

GOVERNING
WORD HAS
MEANING
CODE

TRANSLATE
PREPOSITION
ACCORDINGLY

HAS
PREPOSITION
OBJECT

OBJECT HAS
CODE FOR THE
TRANSLATION OR
PREPOSITION

TRANSLATE
PREPOSITION
WITH ITS FIRST
MEANING

FIG.20

LEXICAL

FiG.21

SEMANTIC

MEMORY

SENTENCE ANALYSIS AREA

0
1
2
3
4
⋮

CONSIDER WORD –1 IN SENTENCE

ADD ONE TO WORD COUNT

LAST WORD IN THE SENTENCE

DOES WORD HAVE INDICATION THAT IT PARTICIPATES IN GENERALIZED SEMANTIC PROGRAM

YES

NO

SEMANTIC

REARR

RETRIEVE RULES FOR PARTICULAR WORD

APPLY FIRST ROUTINE USING CODED RULE ATTACHED TO WORD

ROUTINE WENT INTO EFFECT

YES

TRANSLATE WORD WITH MEANING THE NUMBER OF WHICH HAS BEEN INDICATED WITHIN THE RULE

NO

ALL RULES EXHAUSTED

YES

NO

CONSIDER NEXT RULE

APPLY CORRESPONDING ROUTINE

Fig 22

REARR
RERRRANGEMENT OF WORDS

*FIG. 23*

PRINT

MEMORY

SENTENCE ANLYSIS AREA

```
0  59
1  60
2  61
3  62
4  63
:  64
:  :
```

CONSIDER WORD -1 IN SENTENCE

ADD ONE TO WORD COUNT

LAST WORD IN THE SENTENCE

GETSENTN PROGRAM

PRINT

SEARCH IN BYTE 59 OF THE ANALYSIS AREA FOR WORD WHICH SHOULD BE PRINTED FIRST

TAKE THE LENGTH OF THE TRANSLATED WORD FROM BYTE 60

TAKE THE ADRESS OF THE MEANING FROM BYTES 61-63

TRANSFER THE MEANING PORTION INTO OUTPUT PRINT AREA

MEANING OF WORD

PRINT AREA

PRINTER HAS UPPER AND LOWER CASE — YES — PREPARE MATERIAL TO BE PRINTED ACCORDINGLY — PLACE TRANSLATION ONTO TAPE OR DISK AS SPECIFIED

NO

IS OUTPUT AREA FULL — YES — DOES OUTPUT GO IMMEDIATELY TO PRINTER — YES — PRINT TRANSLATION

NO

NO

# FIG. 24

## TLSYN (ESYN)

MEMORY

| SENTENCE ANALYSIS AREA |
|---|
| 0 |
| 1 |
| 2 |
| 3 |
| 4 |
| . |
| . |
| . |

```
CONSIDER
WORD '0' IN
ANALYSIS
AREA
```

```
CONSIDER
NEXT
WORD
```

LAST WORD +1 SENTENCE

```
TRANSFER
TO NEXT
PROGRAM
```

TLSYN

PRINT

IS WORD POS 04 (FINITE VERB)

```
CONSIDER DICT
CODES TARGET
SYNTHESIS
CODES
```

( A )

```
INSERT
CORRECT
AUXILIARY
```

YES — AUXILIARY TO BE INSERTED — NO

```
TAKE PREVIOUSLY
SELECTED
TOPICAL
GLOSSARY
MEANING
```

```
FORM THE CORRECT
VERBAL FORM
IN THE TARGET
LANGUAGE
```

( B )

EP 0 274 281 B1

FIG. 26

TLSYN(ESYN) CONT.

C

IS WORD POS 10 NOUN
— YES → IS THIS WORD IN SOURCE LANG IN PLURAL
— YES → FORM PLURAL USING TARGET LANGUAGE SYNTHESIS CODES

NO → D

NO → SHOULD PREPOSITION BE PLACED BEFORE THIS NOUN
— YES → DETERMINE PREPOSITION

NO → SHOULD NOUN RECEIVE ARTICLE
— YES → DETERMINE WHETHER ARTICLE IS DEFINITIVE OR INDEF

NO → DOES NOUN BELONG TO IDIOM
— YES → DOES IDIOM CARRY CODE PREVENTING NOUN FROM RECEIVING PREP OR ART

NO → TAKE THIS FACT INTO CONSIDERATION

DOES NOUN HAVE AGREEMENT
— YES → CONSIDER FIRST WORD OF AGREEMENT → PLACE BEFORE THE FIRST WORD OF AGREEMENT PROPER PREPOSITION AND/OR ARTICLE

NO → TAKE PROPER NOUN MEANING

B

FIG. 25

TLSYN(ESYN) CONT.

A

IS WORD POS OB SH.F. ADJ. PART
— YES → IS IT IN AGREEMENT WITH A CENTRAL WORD
— YES → INSERT MEANING → B

NO → C

NO → IS NEGATION AVAILABLE
— YES → CONSIDER IT

NO → AUXILIARY TO BE INSERTED
— YES → DETERMINE THE CORRECT AUXILIARY

NO → INSERT MEANING (WITH NEGATION AND AUXILIARY) → B

109

# FIG. 27
## TLSYN (ESYN) CONT.

```
   ( D )
     │
     ▼
  ◇ IS WORD ──────► ◇ DOES ──────► ┌─────────────────┐
   POS 20            IT FUNCTION AS  │ INSERT CORRECT   │
   ADJ.              PREDICATE       │ AUXILIARY AND    │
     │                 │             │ TRANSLATE ADJ    │
     ▼                 │             │ AS PREDICATE     │
   ( E )               ▼             └─────────────────┘
                  ◇ DOES ──────────► ┌─────────────────┐
                   IT FUNCTION        │ FORM TARGET      │
                   IN COMPARATIVE     │ LANGUAGE         │
                     │                │ COMPARATIVE WITH │
                     ▼                │ SYNTHESIS CODES  │
                  ◇ DOES             └─────────────────┘
                   IT FUNCTION ─────► ┌─────────────────┐
                   IN THE             │ FORM TARGET      │
                   SUPERLATIVE        │ LANGUAGE         │
                     │                │ SUPERLATIVE      │
                     ▼                └─────────────────┘
                  ◇ DOES
                   IT FUNCTION ─────► ┌─────────────────┐
                   AS A DIRECT        │ SHOULD           │
                   OBJECT            │ PREPOSITION      │
                     │               │ AND/OR ARTICLE   │
                     ▼               │ BE INSERTED      │
            ┌──────────────┐         └─────────────────┘
            │ SELECT       │ ◄── ┌─────────────────┐
            │ CORRECT      │     │ PLACE PREP       │
            │ MEANING      │     │ AND/OR ARTICLE   │
            └──────────────┘     │ BEFORE ADJ.      │
                     │           └─────────────────┘
                     ▼
                  ( B )
```

# FIG. 28
## TLSYN (ESYN) CONT.

```
   ( E )
     │
     ▼
  ◇ IS ──────────► ┌─────────────────┐
   WORD POS 24      │ DETERMINE ON     │
   NOUN ADJ         │ THE BASIS OF     │
   AMB              │ SYNTACTIC        │
     │              │ CODES THE        │
     ▼              │ CORRECT FUNCTION │
   ( F )            └─────────────────┘
                       │
                       ▼
                  ◇ DOES ───────────► ┌─────────────────┐
                   IT FUNCTION         │ SYNTHESIZE       │
                   AS A NOUN           │ IT               │
                     │                 │ ACCORDINGLY      │
                     ▼                 └─────────────────┘
            ┌──────────────┐                │
            │ TRANSLATE    │                ▼
            │ WORD AS AN   │         ┌─────────────────┐
            │ ADJECTIVE    │         │ GO TO POS 10     │
            └──────────────┘         │ ROUTINE FOR      │
                     │               │ PREP & ARTICLE   │
                     ▼               │ INSERTION        │
                  ( B )              └─────────────────┘
                                          │
                                          ▼
                                       ( B )
```

EP 0 274 281 B1

Fig.29
TELSYN (ESYN) CONT.

F

IS
WORD POS 30
ADVERB

DOES
IT FUNCTION
AS PREDICATE

TRANSLATE
IT
ACCORDINGLY

G

GET
PROPER
MEANING

B

Fig.30
TLSYN (ESYN)
CONT.

G

IS
WORD POS 40-45
AUX.

IS
NEGATION
AVAILABLE

CONSIDER IT

H

SHOULD
PRONOUN BE
INSERTED

SELECT
CORRESPONDING
PRONOUN

SELECT
PROPER
MEANING

CARRY
OUT
TRANSLATION

B

Fig.31
TLSYN (ESYN)
CONT.

H

IS
WORD POS 70
PERSONAL
PRONOUN

YES

DOES
WORD ACCORD.
TO SYNTHETIC
CODES REPLACE
ANOTHER
WORD

TRANSLATE

ACCORDING

NO

I

SEARCH FOR
GENDER
INDICATION

B

111

# FIG_32
## TLSYN (ESYN) CONT.

```
( I )
  │
  ▼
 ╱IS╲
╱ WORD POS TC ╲──────▶ ┌─────────────┐      ┌──────────────┐
╲ RELATIVE    ╱        │ LOCATE WORD │      │ TAKE         │
 ╲PRONOUN╱             │ TO WHICH REL│─ ─ ─▶│ INFORMATION  │
    │                  │ PRONOUN     │      │ FROM THAT    │
    ▼                  │ REFERS      │      │ WORD         │
  ( J )                └─────────────┘      └──────────────┘
                                                   │
                                                   ▼
                                            ┌──────────────┐
                                            │ REL. PRONOUN │
                                            │ TRANSLATE    │
                                            │ ACCORDING TO │
                                            │ INFORMATION  │
                                            └──────────────┘
                                                   │
                                                   ▼
                                                 ( B )
```

# FIG_33
## TLSYN (ESYN) CONT.

```
                              ( J )
                                │
                                ▼
       ╱IS╲              ╱SHOULD╲          ┌──────────────┐
      ╱ WORD POS DO ╲───▶ A PARTICIPAL╲──▶│ INSERT       │
      ╲ PARTICIPLE  ╱    ╲ PHRASE BE  ╱   │ PRONOUN USE  │
       ╲    ╱           ╲ GENERATED ╱     │ VERBAL FORM  │
          │                   │           │ AND MEANING  │
          ▼                   ▼           └──────────────┘
        ( K )            ╱DOES╲           ┌──────────────┐
                        ╱PARTICIPLE╲      │ TRANSLATE IT │
                        ╲ BELONG TO ╱────▶│ WITH PROPER  │
                         ╲ NOUN ╱         │ MEANING      │
                            │             └──────────────┘
                            ▼
                      ╱SHOULD ╲           ┌──────────────┐
                     ╱PARTICIPLE ╲        │ SELECT       │
                     ╲RECEIVE PREP╱──────▶│ PREPOSITION  │
                      ╲AND/OR   ╱         │ AND/OR       │
                       ╲ARTICLE╱          │ ARTICLE      │
                          │               └──────────────┘
                          │                      │
                          │                      ▼
                          │               ┌──────────────┐
                          │               │ PLACE        │
                          │               │ PREPOSITION  │
                          │               │ AND/OR ARTICLE│
                          │               │ BEFORE       │
                          │               │ PARTICIPLE   │
                          │               └──────────────┘
                          ▼
                   ┌──────────────┐
                   │ TRANSLATE    │
                   │ PARTICIPLE   │
                   │ WITH CORRECT │
                   │ MEANING      │
                   └──────────────┘
                          │
                          ▼
                        ( B )
```

RUMO

FIG.34

ENDING CLASS GT 128 → NO → INDEX TO NOUN/ADJ ENDING TABLE → ADDR 0 → NO → SCAN VALID ENDINGS → FOUND → YES → INSERT GRAMMAR INFO IN MORPH BUFFER → SET RIS=0 VALID → EXIT

ENDING CLASS GT 128 → YES → 2

ADDR 0 → YES → 1

FOUND → NO → 1

1 → SET RIS=1 INVALID → EXIT

2 → INDEX TO VERB ENDING TABLE → FOUND → YES → INSERT GRAMMAR INFO IN MORPH BUFFER → SET RIS=0 VALID → EXIT

FOUND → NO → 3

3 → SCAN INFIX TABLE → FOUND → YES → TRY ADJECTIVAL ENDING MATCH → MATCH → YES → INSERT GRAMMAR INFO IN MORPH BUFFER → SET RIS=0 VALID → EXIT

FOUND → NO → 4

MATCH → NO → 4

4 → SET RIS=1 INVALID → EXIT

EP 0 274 281 B1

113

# FIG.35

## SYSNOUN

```
┌──────────┐     ┌──────────┐                    ┌──────────┐     ┌──────────┐
│ INDEX    │     │ SCAN FOR │                    │ INDEX TO │     │ SCAN FOR │
│ TO ENDING├────>│ VALID    ├──>  ⟨FOUND⟩──YES──>│ CLASS    ├────>│ VALID    ├──>⟨FOUND⟩──YES──┐
│ LENGTH   │     │ ENDING   │        │           │ ENDING   │     │ ENDING   │      │           │
│ TABLE    │     │ LENGTH   │        │           │ TABLE    │     └──────────┘      │           │
└──────────┘     └──────────┘       NO           └──────────┘                      NO           │
                                     │                                              │           │
                                     └──>(1)                                        └──>(1)      │
                                                                                                 │
┌──────────────────────────────────────────────────────────────────────────────────────────────┘
│
│   ┌──────────┐     ┌──────────┐
│   │ INSERT   │     │ SET      │     ╭────────╮
└──>│ GRAMMAR  ├────>│ RIS=0    ├────>│  EXIT  │
    │ INFO IN  │     │ VALID    │     ╰────────╯
    │ MORPH    │     └──────────┘
    │ BUFFER   │
    └──────────┘


        ┌──────────┐
        │ SET      │     ╭────────╮
 (1)───>│ RIS=4    ├────>│  EXIT  │
        │ INVALID  │     ╰────────╯
        └──────────┘
```

SYSVERB

```
┌──────────────┐
│ TEST FOR     │         ╱╲                    ┌──────────────┐
│ SPECIAL      │        ╱    ╲    YES           │ SET PTR      │
│ ENDING       │───────▶ FOUND ─────────────────│ TO           │──────▶ ( 2 )
│ TYPE         │        ╲    ╱                   │ GRAMMAR      │
└──────────────┘         ╲╱                      │ INFO         │
                          │                      └──────────────┘
                          │ NO
                          ▼
                        ( 1 )
```

FIG. 36

```
        ┌──────────────┐
        │ BINARY       │        ╱╲                  ╱╲                ┌──────────────┐
        │ SEARCH       │       ╱    ╲   YES        ╱    ╲   VALID     │ SET  PTR     │
( 1 )──▶│ ENDING       │──────▶ FOUND ───────────▶ CMP   ────────────│ TO           │──────▶ ( 2 )
        │ TABLE        │       ╲    ╱              ╲VALID╱            │ GRAMMAR      │
        └──────────────┘        ╲╱                  ╲PST╱            │ INFO         │
                                 │                    │              └──────────────┘
                                 │ NO                 │ NOT
                                 ▼                    │ VALID
                               ( 3 )                  ▼
                                                    ( 3 )
```

```
        ┌──────────────┐        ┌──────────────┐
        │ INSERT       │        │ SET          │       ╭──────────╮
( 2 )──▶│ GRAMMAR      │───────▶│ RIS=0        │──────▶│  EXIT    │
        │ INFO IN      │        │ VALID        │       ╰──────────╯
        │ MORPH        │        └──────────────┘
        │ BUFFER       │
        └──────────────┘
```

```
        ┌──────────────┐
        │ SET          │       ╭──────────╮
( 3 )──▶│ RIS=4        │──────▶│  EXIT    │
        │ INVALID      │       ╰──────────╯
        └──────────────┘
```

EP 0 274 281 B1